(19) **Europäisches Patentamt / European Patent Office / Office européen des brevets**

(11) **EP 4 458 910 A1**

(12) **EUROPEAN PATENT APPLICATION**
published in accordance with Art. 153(4) EPC

(43) Date of publication:
**06.11.2024 Bulletin 2024/45**

(21) Application number: **22916153.4**

(22) Date of filing: **27.12.2022**

(51) International Patent Classification (IPC):
$C08L\ 101/00$ (2006.01)    $H01B\ 1/22$ (2006.01)
$C01B\ 32/158$ (2017.01)    $C01B\ 32/174$ (2017.01)
$C08K\ 3/04$ (2006.01)    $H01M\ 4/13$ (2010.01)
$H01M\ 4/139$ (2010.01)    $H01M\ 4/62$ (2006.01)
$H01M\ 4/96$ (2006.01)

(52) Cooperative Patent Classification (CPC):
C01B 32/158; C01B 32/174; C08K 3/04;
C08L 101/00; H01B 1/22; H01M 4/13; H01M 4/139;
H01M 4/62; H01M 4/96; Y02E 60/10

(86) International application number:
**PCT/JP2022/048423**

(87) International publication number:
**WO 2023/127931 (06.07.2023 Gazette 2023/27)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **28.12.2021 JP 2021214069**

(71) Applicants:
• **artience Co., Ltd.**
**Chuo-ku**
**Tokyo 104-0031 (JP)**

• **TOYOCOLOR CO., LTD.**
**Tokyo 104-8381 (JP)**

(72) Inventors:
• **IWATA, Naoya**
**Tokyo 104-8381 (JP)**
• **AOTANI, Yu**
**Tokyo 104-8381 (JP)**
• **MASUOKA, Tomoaki**
**Tokyo 104-8381 (JP)**

(74) Representative: **SSM Sandmair**
**Patentanwälte Rechtsanwalt**
**Partnerschaft mbB**
**Joseph-Wild-Straße 20**
**81829 München (DE)**

(54) **CARBON NANOTUBES, CARBON NANOTUBE DISPERSION LIQUID, AND NONAQUEOUS ELECTROLYTE SECONDARY BATTERY USING SAME**

(57)    The present invention provides carbon nanotubes which satisfy $3 \le Z \le 80$, where $Z$ (nm) is the pore size at the peak top in the pore size distribution of the carbon nanotubes having a diameter of 2 nm or more and 200 nm or less as determined by a BJH method, while satisfying the requirement (A) or (B) described below. (A) In the pore size distribution, the integral value of the pore volume of carbon nanotubes having a diameter of 10 nm or more and 80 nm or less is 50% or more relative to the integral value of the pore volume of carbon nanotubes having a diameter of 2 nm or more and 200 nm or less; and the pore volume is 1.10 to 2.20 $cm^3$/g. (B) In the pore size distribution, the integral value of the pore volume of carbon nanotubes having a diameter of 3 nm to 20 nm is 50% or more relative to the integral value of the pore volume of carbon nanotubes having a diameter of 2 nm or more and 200 nm or less; and the pore volume is 0.80 to 1.90 $cm^3$/g.

**Description**

Technical Field

The invention relates to carbon nanotubes. More specifically, the invention relates to carbon nanotubes, a carbon nanotube dispersion liquid, a resin composition containing the carbon nanotube dispersion liquid and a binder resin, a composite slurry containing the carbon nanotube dispersion liquid, the binder resin, and an active material, an electrode film containing a coating film of the composite slurry, a nonaqueous electrolyte secondary battery using the same, a nonaqueous electrolyte secondary battery containing carbon nanotubes, and a vehicle including the nonaqueous electrolyte secondary battery.

Related Art

Carbon nanotubes have a structure in which a graphite layer is arranged in a cylindrical shape, are chemically stable, and exhibit conductivity and mechanical toughness. Therefore, carbon nanotubes can be used for various purposes, such as electronic materials, structural materials, and paints. As the purposes of carbon nanotubes, specifically, examples may include electrode materials, semiconductor materials, filler materials, microscope tip probes, adhesion materials, filler materials, etc. Among the above, the electrode materials using carbon nanotubes have excellent conductive property. Therefore, applications to nonaqueous electrolyte secondary batteries, fuel batteries, electric dual-layer capacitors, etc., are anticipated.

Through the popularity of electric vehicles, as well as lighter and smaller portable apparatuses with outstanding performance, there is a demand for nonaqueous electrolyte secondary batteries having high energy density as well as high capacity of nonaqueous electrolyte secondary batteries. Under such background, due to its high energy density and high voltage, nonaqueous electrolyte secondary batteries using nonaqueous electrolyte, specifically, lithium ion secondary batteries, are used in many apparatuses.

As a negative electrode material used in such lithium ion secondary batteries, carbon materials, represented by graphite, having a large charging/discharging capacity per unit mass at a base potential close to lithium (Li) are used. However, the electrode materials are used to the extent that the charging/discharging capacity per mass is close to the theoretical value, and the energy density per mass of the battery is approaching to the limit. In order to facilitate the utilization rate as an electrode, there have been attempts to reduce conductive aids, binders, etc., which make no contribution to the discharging capacity.

As conductive aids, carbon black, Ketjen black, fullerene, graphene, fine carbon materials, etc., are used. In particular, many carbon nanotubes, which is a type of fine carbon fibers, are used. For example, by adding carbon nanotubes to negative electrodes made of carbon black, silicon, etc., the electrode resistance is reduced, the load resistance of the batteries is reduced, the material strength of the electrodes is increased, and the electrode expansion and contraction properties are improved. Thus, the cycle life of lithium nonaqueous electrolyte secondary batteries is increased (see Patent Documents 1 to 3). In addition, investigations have been made that, by adding carbon nanotubes to positive electrodes, the electrode resistance is reduced (see Patent Document 4). Among the carbon nanotubes, multi-layered carbon nanotubes with an outer diameter of 10 nm to several tens of nanometers are relatively inexpensive and are expected to be put into practice.

When carbon nanotubes with a small averaged outer diameter are used, a conductive network can be formed efficiently by using a small amount, and the amount of conductive aids contained in the positive and negative electrodes used in the lithium ion secondary batteries can be reduced. In addition, it is known that, in the case where carbon nanotubes with a long fiber length are used, the same effect can be achieved (see Patent Document 5). However, carbon nanotubes with such feature have a high aggregation force, making it difficult to disperse. Therefore, a carbon nanotube dispersion liquid having a sufficient dispersion property cannot be obtained.

Therefore, methods for stabilizing the dispersion of carbon nanotubes by using various dispersants have been proposed. For example, dispersion in water and N-methyl-2-pyrrolidone (NMP) using a polymeric dispersant such as water-soluble polymer polyvinylpyrrolidone has been proposed (see Patent Document 6). Nevertheless, in Patent Document 6, while electrodes manufactured by using carbon nanotubes with an outer diameter of 10 to 150 nm are evaluated, an issue of high electrode resistance has arisen. Also, in Patent Document 7, a carbon nanotube dispersant containing a triazine derivative with an acid functional group has been proposed. Nevertheless, in the case where carbon nanotubes are dispersed in an aqueous liquid medium, carbon nanotubes aggregate easily.

In Patent Document 8, it is proposed that, by specifying the wettability index that is the mass of the adsorbed solvent with respect to the mass of carbon nanotubes, a carbon nanotube dispersion containing 2% by mass or more of carbon nanotubes and having low viscosity even at high concentration has been proposed. In Patent Document 8, while carbon nanotubes are dry-pulverized by using a milling device containing metal or ceramic balls to control the wettability index, in specific examples, batch-type dry pulverization is performed by using an attrition mill for 10 to 140 minutes.

In Patent Document 9, the pore diameter peak on the adsorption side obtained by using the BJH method is present at 2.6 nm to 200 nm, and porous carbon particles in which specific area and pore volume are specified used for manufacturing a filter, an electric dual-layer capacitor electrode, and a lithium ion battery electrode have been proposed. In Patent Document 9, by performing wet-type medium dispersion on general spherical or irregular porous carbon particles, porous carbon particles having desired porous properties are manufactured.

In Patent Document 10, a carbon nanotube paint as follows is proposed: the averaged outer diameter is 1.0 to 13.0 nm, carbon nanotubes in which the surface oxygen concentration is further specified are used, and the carbon nanotube paint contributes to blackness and gloss to a resin molded body, a vehicle body of an automobile, etc. In Patent Document 10, by performing a pulverization process on unprocessed carbon nanotubes without the intervention of an aqueous medium by using a pulverization medium, the surface oxygen concentration of the carbon nanotubes is controlled.

Citation List

Patent Literature

Patent Document 1: Japanese Patent No. H04-155776
Patent Document 2: Japanese Patent No. H04-237971
Patent Document 3: Japanese Laid-open No. 2004-178922
Patent Document 4: Japanese Laid-open No. 2011-70908
Patent Document 5: Japanese Laid-open No. 2012-221672
Patent Document 6: Japanese Laid-open No. 2011-70908
Patent Document 7: Japanese Laid-open No. 2020-11872
Patent Document 8: Korean Patent No. 10-2125933
Patent Document 9: Japanese Laid-open No. 2019-151525
Patent Document 10: Japanese Laid-open No. 2020-029372

SUMMARY OF INVENTION

Technical Problem

Since carbon nanotubes have a high aspect ratio, with applications such as compositions, molded articles including carbon nanotubes in a state in which the high aspect ratio is maintained, it is possible to increase conductivity, material strength, etc., and the dispersibility of carbon nanotubes in the composition becomes important.

Patent Document 8 discloses that, by increasing bulk density through dry pulverization of carbon nanotubes and using the carbon nanotubes with high density, the viscosity of the dispersion liquid gradually increases at an initial dispersion stage, making the dispersion process easy. Therefore, while it is possible to improve the viscosity of the carbon nanotubes at the initial stage, there is still room for investigation regarding the improvement of storage stability.

In Patent Document 9, the issue as follows has not been investigated: only the porous properties of the general spherical or irregular porous carbon particles are specified, and in the carbon material with a high aspect ratio such as carbon nanotubes, with the fibers being defibrated before or after the dispersion process, the viscosity may increase drastically.

Patent Document 10 focuses on the blackness and gloss of the carbon nanotube paint. Therefore, in the case of widely applying the carbon nanotube dispersion liquid, there is still room for improvement in terms of initial viscosity and storage stability of the carbon nanotube dispersion liquid given the extent of the pulverization process disclosed in Patent Document 10. In particular, the improvement on storage stability of the carbon nanotubes is desired.

Moreover, even if the dispersibility of carbon nanotubes remain favorable in the aqueous liquid medium, if the dispersibility of carbon nanotubes is affected before a binder resin and an active material, etc., are mixed with the carbon nanotube dispersion liquid to form a coating film, etc., the inherent properties, particularly the conductivity, of the carbon nanotubes in the coating film, etc., may be deteriorated.

An objective of the invention is to provide carbon nanotubes, a carbon nanotube dispersion liquid, a carbon nanotube resin composition, and a composite slurry exhibiting excellent dispersibility and storage stability in an aqueous liquid medium. Moreover, another objective of the invention is to provide an electrode film with high conductivity, a nonaqueous electrolyte secondary battery exhibiting excellent rate and cycle properties, and a vehicle including the same.

Solution to Problem

The inventors of the invention have made extensive studies to solve the above issues. Carbon nanotubes have a high aspect ratio and become highly viscous when dispersed, making it difficult to increase the concentration. In particular, in the case where the carbon nanotubes in the aggregated state are dispersed in the aqueous liquid medium, the intake amount of the aqueous liquid medium increases through swelling of the carbon nanotube aggregate at the initial dispersion stage. Accordingly, the initial viscosity increases drastically. The dispersibility of the carbon nanotubes are investigated, and it is found that, by focusing on the pore size at the peak top in the pore size distribution of the carbon nanotubes and the accumulation frequency in the pore size distribution and properly controlling these factors, the dispersibility of the carbon nanotubes can be facilitated. By suppressing the initial viscosity of the carbon nanotubes in the aqueous liquid medium from decreasing, a carbon nanotube dispersion liquid, a resin composition, and a composite slurry with facilitated dispersibility and storage stability can be provided. By using the composition in which the dispersibility of the carbon nanotubes is favorable, a nonaqueous electrolyte secondary battery having an electrode film in which the carbon nanotubes are finely dispersed can be obtained, and a nonaqueous electrolyte secondary battery with excellent rate and cycle properties can be provided. In addition, by suppressing the initial viscosity of the carbon nanotubes in the aqueous liquid medium, a dispersion liquid including the carbon nanotubes at a high concentration can be maintained at low viscosity and provided. By using the carbon nanotube dispersion liquid with a high concentration and low viscosity, the carbon nanotubes can be contained uniformly at a high concentration in the electrode film and the nonaqueous electrolyte secondary battery, the conductivity can be increased, and excellent rate and cycle properties can be provided.

Several aspects of the invention are as follows.

<1> Carbon nanotubes are provided. The carbon nanotubes satisfy $3 \leq Z \leq 80$, where Z (nm) is a pore size at a peak top in a pore size distribution of the carbon nanotubes having a diameter of 2 or more nm and 200 nm or less as determined by a BJH method and

satisfy (A) or (B) as follows:

(A) in the pore size distribution, an integral value of a pore volume of carbon nanotubes having a diameter of 10 nm or more and 80 nm or less is 50% or more relative to an integral value of a pore volume of carbon nanotubes having a diameter of 2 nm or more and 200 nm or less, and the pore volume is 1.10 to 2.20 cm$^3$/g; and

(B) in the pore size distribution, an integral value of a pore volume of carbon nanotubes having a diameter of 3 nm or more and 20 nm or less is 50% or more relative to the integral value of the pore volume of carbon nanotubes having a diameter of 2 nm or more and 200 nm or less, and the pore volume is 0.80 to 1.90 cm$^3$/g.

<2> In the carbon nanotubes according to <1>, an averaged outer diameter of the carbon nanotubes is 5 to 20 nm.

<3> In the carbon nanotubes according to <1> or <2>, a volume resistivity of the carbon nanotubes is $1.0 \times 10^{-2}$ to $3.0 \times 10^{-2}$ $\Omega \cdot$cm.

<4> In the carbon nanotubes according to any one of <1> to <3>, when a maximum solvent absorption capability defined in accordance with Formula 5 below is set as Y and a bulk density is set as X (g/cm$^3$), Formulae 1 to 4 below are satisfied:

$$(\text{Formula 1}) \quad Y \leq -110X + 32.35$$

$$(\text{Formula 2}) \quad Y \geq 180X - 19.95$$

$$(\text{Formula 3}) \quad Y \geq -200X + 27$$

$$(\text{Formula 4}) \quad Y \leq 200X + 7$$

Maximum solvent adsorption capability (Y) = (mass (W) of absorbed N-methyl-2-pyrrolidone)/(mass (V) of carbon nanotube),     (Formula 5)

(in Formula 5, V refers to a mass (g) of the carbon nanotubes, and W refers to a maximum mass (g) of the absorbed N-methyl-2-pyrrolidone into the carbon nanotubes when N-methyl-2-pyrrolidone is dropped into the carbon nanotubes of Vg under an environment of 25°C).

<5> In the carbon nanotubes according to <1> to <3>, (A) is satisfied and $40 \leq Z \leq 80$ is satisfied.

<6> In the carbon nanotubes according to <5>, when a maximum solvent absorption capability defined in accordance with Formula 5 below is set as Y and a bulk density is set as X (g/cm³), Formulae 1-1 to 4-1 below are satisfied:

$$\text{(Formula 1-1) } Y \leq -200X+37$$

$$\text{(Formula 2-1) } Y \geq 200X-17$$

$$\text{(Formula 3-1) } Y \geq -200X+27$$

$$\text{(Formula 4-1) } Y \leq 200X+7$$

Maximum solvent absorption capability (Y) = (mass (W) of absorbed N-methyl-2-pyrrolidone)/(mass (V) of carbon nanotube),     (Formula 5)

(in Formula 5, V refers to a mass (g) of the carbon nanotubes, and W refers to a maximum mass (g) of the absorbed N-methyl-2-pyrrolidone into the carbon nanotubes when N-methyl-2-pyrrolidone is dropped into the carbon nanotubes of Vg under an environment of 25°C).

<7> In the carbon nanotubes according to <1> to <3>, (B) is satisfied and $3 \leq Z \leq 20$ is satisfied.

<8> In the carbon nanotubes according to <5>, when a maximum solvent absorption capability defined in accordance with Formula 7 below is set as Y and a bulk density is set as X (g/cm³), Formulae 1-2 to 4-2 below are satisfied:

$$\text{(Formula 1-2) } Y \leq -110X+32.35$$

$$\text{(Formula 2-2) } Y \geq 180X-19.95$$

$$\text{(Formula 3-2) } Y \geq -110X+23.55$$

$$\text{(Formula 4-2) } Y \leq 180X+7.6$$

Maximum solvent absorption capability (Y) = (mass (W) of absorbed N-methyl-2-pyrrolidone)/(mass (V) of carbon nanotube),     (Formula 5)

(in Formula 5, V refers to a mass (g) of the carbon nanotubes, and W refers to a maximum mass (g) of the absorbed N-methyl-2-pyrrolidone into the carbon nanotubes when N-methyl-2-pyrrolidone is dropped into the carbon nanotubes of Vg under an environment of 25°C).

<9> A carbon nanotube dispersion liquid includes the carbon nanotubes according to any one of <1> to <8> and an aqueous liquid medium.

<10> The carbon nanotube dispersion liquid according to <9> further includes a dispersant. A content of the dispersant is 10 to 150 parts by mass based on 100 parts by mass of the carbon nanotubes.

<11> A carbon nanotube resin composition includes the carbon nanotube dispersion liquid according to <9> or <10> and a binder resin.

<12> A composite slurry includes the carbon nanotube dispersion liquid according to <9> or <10>, a binder resin, and an active material.

<13> An electrode film includes a coating film of the composite slurry according to <12>.

<14> A nonaqueous electrolyte secondary battery, includes a positive electrode, a negative electrode, and an electrolyte. At least one of the positive electrode and the negative electrode includes the electrode film according to <13>.

<15> A nonaqueous electrolyte secondary battery includes the carbon nanotubes according to any one of <1> to <8>.

<16> A vehicle includes the nonaqueous electrolyte secondary battery according to <14> or <15>.

DESCRIPTION OF EMBODIMENTS

In the following, several embodiments of the invention are described. Specifically, the following are described in detail: carbon nanotubes, a carbon nanotube dispersion liquid, a resin composition containing the carbon nanotube dispersion liquid and a binder resin, a composite slurry containing the carbon nanotube dispersion liquid, the binder resin, and an active material, an electrode film using the same, a nonaqueous electrolyte secondary battery using the same, and a vehicle using the same. The invention is not limited to the following embodiments, and the invention also covers embodiments implemented without changing the gist.

In the specification, carbon nanotubes may be represented as "CNT". Also, in the specification, a carbon nanotube dispersion liquid may be simply referred to as "dispersion liquid". In addition, N-methyl-2-pyrrolidone may be represented as "NMP".

In the numerical ranges recited in steps in the specification, the upper limit or the lower limit of the numerical range in a step can be arbitrarily combined with the upper limit or the lower limit of the numerical ranges in other steps. In addition, in the specification, the upper limits or lower limits of the numerical ranges may be replaced with values of the examples. In the specification, numerical ranges with "-" or "to" indicate ranges including the values recited before and after "-" or "to" respectively the minimum and maximum values.

<Carbon Nanotubes>

Carbon nanotubes of the embodiment satisfy $3 \leq Z \leq 80$, where $Z$ (nm) is the pore size at the peak top in the pore size distribution of the carbon nanotubes having a diameter of 2 nm or more and 200 nm or less as determined by a BJH method, while satisfying the requirement (A) or (B) described below.

(A) In the pore size distribution, the integral value of the pore volume of carbon nanotubes having a diameter of 10 nm or more and 80 nm or less is 50% or more relative to the integral value of the pore volume of carbon nanotubes having a diameter of 2 nm or more and 200 nm or less; and the pore volume is 1.10 to 2.20 $cm^3$/g.

(B) In the pore size distribution, the integral value of the pore volume of carbon nanotubes having a diameter of 3 nm to 20 nm is 50% or more relative to the integral value of the pore volume of carbon nanotubes having a diameter of 2 nm or more and 200 nm or less; and the pore volume is 0.80 to 1.90 $cm^3$/g.

In the specification, a pore size distribution of carbon nanotubes having a diameter of 2 nm or more and 200 nm or less as determined by the BJH method is simply represented as a pore size distribution. Also, the items indicated in (A) above are simply referred to as condition (A), and the items indicated in (B) above are simply referred to as condition (B).

The carbon nanotubes of the first embodiment satisfy the condition (A). An example of the carbon nanotubes of the first embodiment satisfies $40 \leq Z \leq 80$, where $Z$ (nm) is the pore size at the peak top in the pore size distribution of the carbon nanotubes having a diameter of 2 nm or more and 200 nm or less as determined by the BJH method, and in the pore size distribution, the integral value of the pore volume of carbon nanotubes having a diameter of 10 nm or more and 80 nm or less is 50% or more relative to the integral value of the pore volume of carbon nanotubes having a diameter of 2 nm or more and 200 nm or less, and the pore volume is 1.10 to 2.20 $cm^3$/g.

The carbon nanotubes of the second embodiment satisfy the condition (B). An example of the carbon nanotubes of the second embodiment satisfies $3 \leq Z \leq 20$, where $Z$ (nm) is the pore size at the peak top in the pore size distribution of the carbon nanotubes having a diameter of 2 nm or more and 200 nm or less as determined by the BJH method, and in the pore size distribution, the integral value of the pore volume of carbon nanotubes having a diameter of 3 nm to 20 nm is 50% or more relative to the integral value of the pore volume of carbon nanotubes having a diameter of 2 nm or more and 200 nm or less relative to the integral value of the pore volume of carbon nanotubes having a diameter of 2 nm or more and 200 nm or less; and the pore volume is 0.80 to 1.90 $cm^3$/g.

The pore diameter $Z$ (nm) at the peak top in the pore size distribution of the carbon nanotubes having a diameter of 2 nm or more and 200 nm or less as determined by the BJH method is a pore diameter (nm) that measures a nitrogen adsorption isotherm and indicates a maximum value in the pore size range having a diameter of 2 nm or more and 200 nm or less. In the following, it is simply referred to as the pore size $Z$ at the peak top.

The measurement procedures of the pore size distribution of the carbon nanotubes are as follows. Before measuring the pore size distribution of the carbon nanotubes, the carbon nanotubes are pre-processed by performing vacuum drying at a pre-processing temperature of 305°C and for a pre-processing time of 18 to 21 hours.

The pre-processed carbon nanotubes are weighed, and the nitrogen adsorption isotherm is measured by using the nitrogen adsorption method. The nitrogen adsorption isotherm measurement is performed under the following conditions: adsorption temperature: 77K, adsorbate: nitrogen. For the nitrogen adsorption isotherm measurement, a fully automatic specific surface area measurement device (Belsorp MAX II manufactured by Microtrac MRB) can be used.

A BJH plot is calculated from the nitrogen adsorption isotherm of the carbon nanotubes, and the pore size at the peak top on the adsorption side is determined. The BJH plot can be calculated by using the FHH standard curve recommended by Microtrac-Bel Co., Ltd. In the case where there are two or more maximum values in the pore size range having a diameter of 2 nm or more and 200 nm or less, the pore diameter (nm) with a higher peak is determined as the pore diameter (nm) at the peak top.

The pore size Z (nm) at the peak top in the pore size distribution preferably satisfies Formula 6 as follows.

$$(\text{Formula } 6) \ 3 \leq Z \leq 80$$

The carbon nanotubes satisfying Formula 6 can appropriately incorporate a solvent into their pores in an aqueous liquid medium, can suppress the increase in initial viscosity and improve the dispersibility, and can maintain the dispersibility for a long term to improve storage stability. In addition, by controlling the pore size of the carbon nanotubes, in the carbon nanotube powder and a molded article using the same, the volume resistivity can be reduced, and favorable conductivity can be attained.

From the perspective of the dispersibility and the storage stability in the aqueous liquid medium of the carbon nanotubes, the pore size Z at the peak top is preferably 80 nm or less, more preferably 70 nm or less, and even more preferably 50 nm or less. From the perspective of reducing the volume resistivity of the carbon nanotubes and obtaining favorable conductivity of the molded article including the carbon nanotubes, the pore size Z at the peak top is preferably 3 nm or more, and more preferably 4 nm or more. In addition, the pore size of the carbon nanotubes serves as an index of the pulverization degree of raw carbon nanotubes, and can be used to evaluate the state in which the raw carbon nanotubes are excessively pulverized and carbon nanotubes aggregate. With the pore size Z at the peak top being 3 nm or more or 4 nm or more, the aggregation of the carbon nanotubes can be suppressed, and the dispersibility of the carbon nanotubes in the aqueous liquid medium can be facilitated. For example, by using a dispersion liquid containing the carbon nanotubes, the conductivity of the nonaqueous electrolyte secondary battery can be further increased.

In the case where the carbon nanotubes in the aggregated state are dispersed in the aqueous liquid medium, the intake amount of the aqueous liquid medium increases through swelling of the carbon nanotube aggregates at the initial dispersion stage. Accordingly, the initial viscosity increases drastically. In the embodiment, the dispersibility of the carbon nanotubes are investigated, and the pore size at the peak top in the pore size distribution of the carbon nanotubes and the accumulation frequency in the pore size distribution are focused on and it is found that, by properly controlling these factors, the dispersibility of the carbon nanotubes can be facilitated. That is, with the pore size Z (nm) of the peak top being $3 \leq Z \leq 80$ and the condition (A) or the condition (B) being satisfied, the effects can be attained. In the following, the condition (A) and the condition (B) are described in detail.

<First Embodiment>

In the following, the first embodiment is described. The carbon nanotubes of the first embodiment satisfy the condition (A). The carbon nanotubes of the first embodiment preferably satisfy the condition (A), and the pore size Z (nm) at the peak top in the pore size distribution preferably satisfies Formula 6-1 as follows.

$$(\text{Formula } 6\text{-}1) \ 40 \leq Z \leq 80$$

The carbon nanotubes satisfying Formula 6-1 can appropriately incorporate a solvent into their pores in the aqueous liquid medium, can suppress the increase in initial viscosity and improve the dispersibility, and can maintain the dispersibility for a long term to improve storage stability. In addition, by controlling the pore size of the carbon nanotubes, in the carbon nanotube powder and a molded article using the same, the volume resistivity can be reduced, and favorable conductivity can be attained.

From the perspective of the dispersibility and the storage stability in the aqueous liquid medium of the carbon nanotubes, the pore size Z at the peak top is preferably 80 nm or less, more preferably 70 nm or less, and even more preferably 50 nm or less. From the perspective of reducing the volume resistivity of the carbon nanotubes and obtaining favorable conductivity of the molded article including the carbon nanotubes, the pore size Z at the peak top is preferably 40 nm or more, and more preferably 45 nm or more. In addition, the pore size of the carbon nanotubes serves as an index of the pulverization degree of raw carbon nanotubes, and can be used to evaluate the state in which the raw carbon nanotubes are excessively pulverized and carbon nanotubes aggregate. With the pore size Z at the peak top being 40 nm or more or 45 nm or more, the aggregation of the carbon nanotubes can be suppressed, and the dispersibility of the carbon nanotubes in the aqueous liquid medium can be facilitated. For example, by using a dispersion liquid containing the carbon nanotubes, the conductivity of the nonaqueous electrolyte secondary battery can be further increased.

Regarding the carbon nanotubes, in the pore size distribution, the integral value of the pore volume of the pore size range having a diameter of 10 nm or more and 80 nm or less is preferably 50% or more relative to the integral value of the pore volume of the pore size range having a diameter of 2 nm or more and 200 nm or less.

Regarding the ratio of the integral value of the pore volume of the pore size range having a diameter of 10 nm or more and 80 nm or less, like the pore size Z at the peak top, the nitrogen adsorption isotherm is measured, a BJH plot is calculated from the nitrogen adsorption isotherm, and the ration can be attained.

With a higher ratio of the integral value of the pore volume of the pore size range having a diameter of 10 nm or more and 80 nm or less, the aqueous liquid medium is easily absorbed into the pores of the carbon nanotubes, and the dispersibility as well as the long-term storage stability of the carbon nanotubes can be improved. From this perspective, the ratio of the integral value of the pore volume of the pore range having a diameter of 10 nm or more and 80 nm or less is preferably 50% or more, more preferably 55% or more, and even more preferably 60% or more. Also, in the carbon nanotubes of this range, the pore size can be evaluated as being controlled to be suitably pulverized, the aggregation of the carbon nanotubes can be suppressed, and the dispersibility of the carbon nanotubes in the aqueous liquid medium can be facilitated.

The ratio of the integral value of the pore volume of the pore size range having a diameter of 10 nm or more and 80 nm or less is not particularly limited. For the ease of obtaining carbon nanotubes, the ratio may be 90% or less, 80% or less, or 70% or less.

The pore volume of the carbon nanotubes is the total pore volume obtained from the nitrogen adsorption amount when the relative pressure (p/p0) is 0.99. Regarding the pore volume, the nitrogen adsorption isotherm is measured, like the pore size Z of the peak top, and the pore volume can be obtained from the nitrogen adsorption amount when the relative pressure (p/p0) is 0.99 at the nitrogen adsorption isotherm.

The pore volume of the carbon nanotubes is preferably 1.10 to 2.20 cm$^3$/g.

With the pore volume of the carbon nanotubes being 2.20 cm$^3$/g or less, more preferably 2.10 cm$^3$/g or less, and even more preferably 2.00 cm$^3$/g or less, the amount of the aqueous liquid medium taken into the pores of the carbon nanotubes in the aqueous liquid medium is reduced, the amount of the aqueous liquid medium contributing to the fluidity is increased, and the viscosity of the carbon nanotube dispersion can be reduced. For example, even with a high-concentration carbon nanotube dispersion in which the amount of the aqueous liquid medium is reduced, the viscosity can be reduced. Therefore, the dispersibility of the carbon nanotubes in the aqueous liquid medium are favorable in the initial state, and the storage stability is also favorable as the deterioration in dispersibility is further suppressed.

With the pore volume of the carbon nanotubes being 1.10 cm$^3$/g or more, more preferably 1.15 cm$^3$/g or more, and even more preferably 1.20 cm$^3$/g or more, the wettability of the aqueous liquid medium to the carbon nanotubes can be prevented from deteriorating significantly, and the deterioration of the dispersibility can be suppressed. With the pore volume of the carbon nanotubes being 1.10 to 2.20 cm$^3$/g to make the dispersibility of the carbon nanotubes favorable, carbon nanotubes can be finely dispersed in the electrode film obtained by using the carbon nanotube dispersion liquid, and the conductivity of the electrode film can be increased.

<Second Embodiment>

In the following, the second embodiment is described. The carbon nanotubes of the second embodiment satisfy the condition (B). The carbon nanotubes of the second embodiment satisfy the condition (B), and it is preferable that the pore size Z (nm) at the peak top in the pore size distribution satisfies Formula 6-2 as follows.

$$\text{(Formula 6-2) } 3 \leq Z \leq 20$$

The carbon nanotubes satisfying Formula 6-2 can appropriately incorporate a solvent into their pores in the aqueous liquid medium, can suppress the increase in initial viscosity and improve the dispersibility, and can maintain the dispersibility for a long term to improve storage stability. In addition, by controlling the pore size of the carbon nanotubes, in the carbon nanotube powder and a molded article using the same, the volume resistivity can be reduced, and favorable conductivity can be attained.

From the perspective of the dispersibility and the storage stability in the aqueous liquid medium of the carbon nanotubes, the pore size Z at the peak top is preferably 20 nm or less, more preferably 15 nm or less, and even more preferably 10 nm or less.

From the perspective of reducing the volume resistivity of the carbon nanotubes and obtaining favorable conductivity of the molded article including the carbon nanotubes, the pore size Z at the peak top is preferably 3 nm or more, and more preferably 4 nm or more. In addition, the pore size of the carbon nanotubes serves as an index of the pulverization degree of raw carbon nanotubes, and can be used to evaluate the state in which the raw carbon nanotubes are excessively pulverized and carbon nanotubes aggregate. With the pore size Z at the peak top being 3 nm or more or 4 nm or more, the aggregation of the carbon nanotubes can be suppressed, and the dispersibility of the carbon nanotubes in the aqueous liquid medium can be facilitated. For example, by using a dispersion liquid containing the carbon nanotubes, the conductivity of the nonaqueous electrolyte secondary battery can be further increased.

Regarding the carbon nanotubes, in the pore size distribution, the integral value of the pore volume of the pore size range having a diameter of 3 nm to 20 nm is preferably 50% or more relative to the integral value of the pore volume of the pore size range having a diameter of 2 nm or more and 200 nm or less.

Regarding the ratio of the integral value of the pore volume of the pore size range having a diameter of 3 nm to 20 nm, like the pore size Z at the peak top, the nitrogen adsorption isotherm is measured, a BJH plot is calculated from the nitrogen adsorption isotherm, and the ration can be attained.

With a higher ratio of the integral value of the pore volume of the pore size range having a diameter of 3 nm to 20 nm, the aqueous liquid medium is easily absorbed into the pores of the carbon nanotubes, and the dispersibility as well as the long-term storage stability of the carbon nanotubes can be improved. From this perspective, the ratio of the integral value of the pore volume of the pore range having a diameter of 3 nm to 20 nm is preferably 50% or more, more preferably 55% or more, and even more preferably 60% or more. Also, in the carbon nanotubes of this range, the pore size can be evaluated as being controlled to be suitably pulverized, the aggregation of the carbon nanotubes can be suppressed, and the dispersibility of the carbon nanotubes in the aqueous liquid medium can be facilitated.

The ratio of the integral value of the pore volume of the pore size range having a diameter of 3 nm to 20 nm is not particularly limited. For the ease of obtaining carbon nanotubes, the ratio may be 90% or less, 80% or less, or 70% or less.

The pore volume of the carbon nanotubes is preferably 0.80 to 1.90 cm$^3$/g.

With the pore volume of the carbon nanotubes being 1.90 cm$^3$/g or less, more preferably 1.80 cm$^3$/g or less, and even more preferably 1.70 cm$^3$/g or less, the amount of the aqueous liquid medium taken into the pores of the carbon nanotubes in the aqueous liquid medium is reduced, the amount of the aqueous liquid medium contributing to the fluidity is increased, and the viscosity of the carbon nanotube dispersion can be reduced. For example, even with a high-concentration carbon nanotube dispersion in which the amount of the aqueous liquid medium is reduced, the viscosity can be reduced. Therefore, the dispersibility of the carbon nanotubes in the aqueous liquid medium are favorable in the initial state, and the storage stability is also favorable as the deterioration in dispersibility is further suppressed.

With the pore volume of the carbon nanotubes being 0.80 cm$^3$/g or more, more preferably 0.90 cm$^3$/g or more, and even more preferably 1.00 cm$^3$/g or more, the wettability of the aqueous liquid medium to the carbon nanotubes can be prevented from deteriorating significantly, and the deterioration of the dispersibility can be suppressed. With the pore volume of the carbon nanotubes being 0.80 to 1.90 cm$^3$/g to make the dispersibility of the carbon nanotubes favorable, carbon nanotubes can be finely dispersed in the electrode film obtained by using the carbon nanotube dispersion liquid, and the conductivity of the electrode film can be increased.

<Maximum Solvent Absorption Capability Y and Bulk Density X>

In the embodiment, as described above, with the pore size Z (nm) at the peak top being $3 \leq Z \leq 80$ and the condition (A) or the condition (B) being satisfied, the intake amount of the aqueous liquid medium through swelling of the carbon nanotube aggregate at the initial dispersion stage can be reduced, and the increase in viscosity at the initial stage can be suppressed. In addition, with the condition being satisfied, from the degree of defibration of the carbon nanotubes, the aggregation of the carbon nanotubes can also be suppressed.

Meanwhile, from the perspective of controlling the defibration degree of the carbon nanotubes and microscopically controlling the dispersibility in the carbon nanotube dispersion liquid, when the carbon nanotubes are defined with the maximum solvent absorption capability defined in Formula 5 below being set as Y and the bulk density being set as X(g/cm$^3$), it is preferable to satisfy Formulae 1 to 4 below. That is, in the embodiment, when the pore size Z (nm) at the peak top is $3 \leq Z \leq 80$ and at least one of the condition (A) and the condition (B) is satisfied, it is preferable to satisfy Formulae 1 to 4 below.

$$\text{(Formula 1)} \quad Y \leq -110X + 32.35$$

$$\text{(Formula 2)} \quad Y \geq 180X - 19.95$$

$$\text{(Formula 3)} \quad Y \geq -200X + 27$$

$$\text{(Formula 4)} \quad Y \leq 200X + 7$$

Maximum solvent absorption capability (Y) = (mass (W) of absorbed N-methyl-2-pyrrolidone)/(mass (V) of carbon nanotube), (Formula 5)

(where in Formula 5, V refers to the mass (g) of the carbon nanotubes, and W refers to the maximum mass (g) of the absorbed N-methyl-2-pyrrolidone into the carbon nanotubes when N-methyl-2-pyrrolidone is dropped into the carbon nanotubes of Vg under the environment of 25°C).

The maximum solvent absorption capability of the carbon nanotubes is defined according to Formula 5 above. The maximum solvent absorption capability is the maximum mass of N-methyl-2-pyrrolidone absorbed by the carbon nanotubes per mass of the carbon nanotubes when the carbon nanotubes absorbs N-methyl-2-pyrrolidone. The maximum mass of N-methyl-2-pyrrolidone absorbed by the carbon nanotubes is the total mass of N-methyl-2-pyrrolidone that has been dropped until N-methyl-2-pyrrolidone flows from carbon nanotube powder when N-methyl-2-pyrrolidone is dropped into the carbon nanotube powder.

Specifically, under the environment at 25°C, in a state in which the carbon nanotube powder of 5g (Vg) is dropped naturally into a container made of polypropylene, having a cylindrical shape, and exhibiting a diameter of 10 mm, stored, and placed stationarily, 0.5 g of N-methyl-2-pyrrolidone is dropped onto the surface of the carbon nanotube powder each time at one-minute intervals. Whether the droplets of N-methyl-2-pyrrolidone starts to flow from the surface of the carbon nanotube powder without being absorbed by the carbon nanotube powder is observed. The total mass (g) of N-methyl-2-pyrrolidone having been dropped until the droplets of N-methyl-2-pyrrolidone starts to flow from the surface of the carbon nanotube powder is set as W.

The bulk density X of the carbon nanotubes is the bulk density when the carbon nanotubes are stacked loosely. The bulk density X is obtained as follows. The carbon nanotubes are dropped naturally into a container having a predetermined volume and an upper opening until the carbon nanotubes overflow, the carbon nanotubes raised from the upper end surface are cut off by using a cutting plate in a state of being placed stationarily, the mass of the carbon nanotubes is calculated, and the mass of the carbon nanotubes is divided by the volume of the container.

As a specific method for measuring the bulk density X, the carbon nanotube powder is dropped naturally and contained in a stainless cylindrical container of 30 ml, the raised portion on the upper end surface of the container is cut off. Then, the mass of the carbon nanotube powder is obtained, and the bulk density X can be obtained by dividing the mass of the carbon nanotube powder mass by the volume of the container. In order to disintegrate the aggregates formed when the carbon nanotube powder is stored and cause the obtained sample to flow naturally into the test container until the sample overflows, a sufficient amount of the sample for performing the test is prepared through a 0.5 mm sieve.

In the following, Formulae 1 to 4 are described.

The maximum solvent absorption capability Y and the bulk density X obtained above preferably satisfy Formulae 1 to 4. In the range specified according to Formulae 1 to 4, high dispersibility and storage stability of the carbon nanotubes can be exhibited.

$$\text{(Formula 1)} \quad Y \leq -110X + 32.35$$

$$\text{(Formula 2)} \quad Y \geq 180X - 19.95$$

$$\text{(Formula 3)} \quad Y \geq -200X + 27$$

$$\text{(Formula 4)} \quad Y \leq 200X + 7$$

Although the maximum solvent absorption capability Y is the maximum mass of N-methyl-2-pyrrolidone absorbed in the carbon nanotubes, the type of the aqueous liquid medium is not limited thereto. The smaller the maximum solvent absorption capability Y is, the more the increase in initial viscosity of the carbon nanotubes in the aqueous liquid medium tends to be suppressed, contributing to improved dispersibility. Meanwhile, the bulk density X is a factor affecting the dispersibility and the storage stability of the carbon nanotubes in the aqueous liquid medium. While it may differ case-by-case, as the bulk density X increases, the carbon nanotubes tend to settle in the aqueous liquid medium, and as the bulk density X decreases, the wettability of the carbon nanotubes in the aqueous liquid medium deteriorates, and the dispersibility deteriorates easily.

The embodiment focuses on the interaction between the maximum solvent absorption capability Y and the bulk density X and affects the dispersibility and storage stability of the carbon nanotubes in the aqueous liquid medium, and specifies the carbon nanotubes according to Formulae 1 to 4. In the embodiment, it is preferable that, at the time of improving the dispersibility and the storage stability of the carbon nanotubes, the carbon nanotubes are defibrated in a state of maintaining fiber length, and are finely dispersed in the aqueous liquid medium. In order to preferably obtain the dispersibility and the storage stability, the carbon nanotubes are specified according to the pore size Z of the carbon nanotubes at the peak top, the ratio of the integral value of the pore volume within the pore range having a diameter of 10 nm or more and 80 nm or less or having a diameter of 3 nm to 20 nm, the pore volume, and Formulae 1 to 4 above. For example, the carbon nanotubes are preferably set according to the pore size Z of the carbon nanotubes at the peak top and Formulae 1 to 4.

In the case where the condition (A) is satisfied and $40 \leq Z \leq 80$ is satisfied, when the maximum solvent absorption capability defined by Formula 5 below is set as Y and the bulk density is defined as X ($g/cm^3$), the carbon nanotubes satisfy Formulae 1-1 to 4-1 below. In the range specified according to Formulae 1-1 to 4-1, high dispersibility and storage stability of the carbon nanotubes can be exhibited.

$$\text{(Formula 1-1)} \quad Y \leq -200X+37$$

$$\text{(Formula 2-1)} \quad Y \geq 200X-17$$

$$\text{(Formula 3-1)} \quad Y \geq -200X+27$$

$$\text{(Formula 4-1)} \quad Y \leq 200X+7$$

Maximum solvent absorption capability (Y) = (mass (W) of absorbed N-methyl-2-pyrrolidone) / (mass (V) of carbon nanotube), (wherein in Formula 5, V refers to the mass (g) of the carbon nanotubes, and W refers to the maximum mass (g) of the absorbed N-methyl-2-pyrrolidone into the carbon nanotubes when N-methyl-2-pyrrolidone is dropped into the carbon nanotubes of Vg under the environment of 25°C).

A preferable example of Formulae 1-1 to 4-1 is the carbon nanotubes satisfying Formulae 1a to 4a and 6a below.

$$\text{(Formula 1a)} \quad Y \leq -200X+37$$

$$\text{(Formula 2a)} \quad Y \geq 200X-17$$

$$\text{(Formula 3a)} \quad Y \geq -200X+28,$$

more preferably (Formula 3a') $Y \geq -200X+30$

$$\text{(Formula 4a)} \quad Y \leq -200X-4$$

$$\text{(Formula 6a)}\ 40 \le Z \le 80$$

Another preferable example of Formulae 1-1 to 4-1 is the carbon nanotubes satisfying Formulae 1b to 4b and 6b below.

$$\text{(Formula 1b)}\ Y \le -200X+37$$

$$\text{(Formula 2b)}\ Y \ge 200X-17$$

$$\text{(Formula 3b)}\ Y \ge -200X+28,$$

more preferably (Formula 3b') $Y \ge -200X+30$

$$\text{(Formula 4b)}\ Y \le 200X-5$$

$$\text{(Formula 6b)}\ 40 \le Z \le 80$$

Another preferable example of Formulae 1-1 to 4-1 is the carbon nanotubes satisfying Formulae 1c to 4c and 6c below.

$$\text{(Formula 1c)}\ Y \le -200X+35,$$

more preferably (Formula 3c') $Y \le -200X+33$

$$\text{(Formula 2c)}\ Y \ge 200X-17$$

$$\text{(Formula 3c)}\ Y \ge -200X+27$$

$$\text{(Formula 4c)}\ Y \le 200X+7,$$

more preferably (Formula 4c') $Y \le 200X-4$ even more preferably

$$\text{(Formula 4c'')}\ Y \le 200X-5$$

$$\text{(Formula 6c)}\ 40 \le Z \le 80$$

Another preferable example of Formulae 1-1 to 4-1 is the carbon nanotubes satisfying Formulae 1d to 4d and 6d below.

$$\text{(Formula 1d)}\ Y \le -200X+33$$

$$\text{(Formula 2d)}\ Y \ge 200X-4$$

$$\text{(Formula 3d) } Y \geq -200X+28$$

$$\text{(Formula 4d) } Y \leq 200X+7$$

$$\text{(Formula 6d) } 40 \leq Z \leq 80$$

In these examples, in each range of $40 \leq Z \leq 80$, $40 \leq Z \leq 70$ is more preferred, and $45 \leq Z \leq 50$ is even more preferred.

Neither of the maximum solvent absorption capability Y and the bulk density X are particularly limited to individual numerical ranges. For example, the maximum solvent absorption capability Y may be 5 to 22, 5 to 18, or 14 to 18. For example, the bulk density X may be 0.05 to 0.135, 0.065 to 0.105, or 0.065 to 0.085. As another example, the maximum solvent absorption capability Y may be 5 to 12 or 14 to 22. As another example, the bulk density X may be 0.05 to 0.080 or 0.100 to 0.135.

In the case where the condition (B) is satisfied and $3 \leq Z \leq 20$ is satisfied, when the maximum solvent absorption capability defined by Formula 5 below is set as Y and the bulk density is defined as X (g/cm$^3$), the carbon nanotubes satisfy Formulae 1-2 to 4-2 below. In the range specified according to Formulae 1-2 to 4-2, high dispersibility and storage stability of the carbon nanotubes can be exhibited.

$$\text{(Formula 1-2) } Y \leq -110X+32.35$$

$$\text{(Formula 2-2) } Y \geq 180X-19.95$$

$$\text{(Formula 3-2) } Y \geq -110X+23.55$$

$$\text{(Formula 4-2) } Y \leq 180X+7.6$$

Maximum solvent absorption capability (Y) = (mass (W) of absorbed N-methyl-2-pyrrolidone)/(mass (V) of carbon nanotube),     (Formula 5)

(wherein in Formula 5, V refers to the mass (g) of the carbon nanotubes, and W refers to the maximum mass (g) of the absorbed N-methyl-2-pyrrolidone into the carbon nanotubes when N-methyl-2-pyrrolidone is dropped into the carbon nanotubes of Vg under the environment of 25°C).

A preferable example of Formulae 1-2 to 4-2 is the carbon nanotubes satisfying Formulae 1-2a to 4-2a and 6-2a below.

$$\text{(Formula 1-2a) } Y \leq -110X+31.35$$

$$\text{(Formula 2-2a) } Y \geq 180X-18.95$$

$$\text{(Formula 3-2a) } Y \geq -110X+24.55$$

$$\text{(Formula 4-2a) } Y \leq 180X+0.6$$

In the case where the condition (B) is satisfied, the pore size Z at the peak top is preferably $3 \leq Z \leq 20$, and more preferably $4 \leq Z \leq 20$.

Neither of the maximum solvent absorption capability Y and the bulk density X are particularly limited to individual numerical ranges. For example, the maximum solvent absorption capability Y may be 6 to 23, 7 to 23, 11 to 16, or 12 to 16, and may also be 11 to 14. For example, the bulk density X may be 0.055 to 0.22, 0.055 to 0.18, 0.075 to 0.17, 0.075 to 0.135, 0.125 to 0.135, and may also be 0.125 to 0.17.

<Physical Properties of Carbon Nanotubes>

The carbon nanotubes have a shape in which planar graphite is wound in a cylindrical shape. The carbon nanotubes may be single-layered carbon nanotubes, multi-layered carbon nanotubes, or a mixture thereof. The single-layered carbon nanotubes have a structure in which one layer of graphite is wound. The multi-layered carbon nanotubes have a structure in which two or three or more layers of graphite are wound. The carbon nanotubes may also be bundled carbon nanotubes of single-layered carbon nanotubes. From the perspective of the dispersibility of the aqueous liquid medium, multi-layered carbon nanotubes are preferred as the carbon nanotubes. The number of layers of the multi-layered carbon nanotubes is not particularly limited. The number of layers is preferably 2 to 30 layers, preferably 3 to 20 layers, and preferably 3 to 10 layers.

It may also be that the sidewalls of the carbon nanotubes are not in graphite structure. For example, carbon nanotubes having sidewalls of an amorphous structure can also be used as the carbon nanotubes. In addition, carbon nanonanotubes containing organic compounds, metal atoms, or substances such as fullerene can also be used.

The shape of the carbon nanotubes is not limited. As the shape of the carbon nanotubes, examples may include various shapes, including a needle shape, a cylindrical tubular shape, a fish bone shape (or a cup-laminated shape), and a coil shape, etc. Among the above, the needle shape or the cylindrical tubular shape are preferred for the shape of the carbon nanotubes. The carbon nanotubes may have a single shape or a combination of two or more shapes.

Regarding the form of the carbon nanotubes, examples of the form of the carbon nanotubes can include graphite whiskers, filamentous carbon, graphite fibers, ultrafine carbon tubes, carbon tubes, carbon fibrils, carbon microtubes, and carbon nanofibers. However, the invention is not limited thereto. The carbon nanotubes may have a single form or a combination of two or more of these forms.

The carbon nanotubes preferably have an averaged outer diameter of 5 to 25 nm, more preferably have an averaged outer diameter of 5 to 20 nm, and even more preferably have an averaged outer diameter of 5 to 15 nm. Within the above ranges, the conductivity and the toughness of the carbon nanotubes can be increased.

The outer diameter and the averaged outer diameter of the carbon nanotubes are obtained according to the following. Firstly, carbon nanotubes are observed and imaged by using a transmission electron microscope. Then, 300 arbitrary carbon nanotubes are selected in the observed image and the outer diameter of each is measured. Then, as the numerical average of the outer diameters, the averaged outer diameter (nm) is calculated.

The volume resistivity of the carbon nanotubes is preferably $1.0 \times 10^{-2}$ to $3.0 \times 10^{-2} \, \Omega \cdot cm$, and more preferably $1.0 \times 10^{-2}$ to $2.0 \times 10^{-2} \, \Omega \cdot cm$. The volume resistivity of the carbon nanotubes can be measured by using a powder resistivity measurement device (Nitto Seiko Analytech Co., Ltd.: Loresta GP Powder Resistivity Measurement System MCP-PD-51).

The BET specific surface area of the carbon nanotubes may be 100 to 1200 $m^2/g$, may also be 150 to 1000 $m^2/g$, and may also be 200 to 800 $m^2/g$. The method for measuring the BET specific surface area may be as described in the examples. For example, after the carbon nanotubes are vacuum-dried and pre-processed, the BET specific surface area can be calculated by using the BET method from the nitrogen adsorption isotherm of the carbon nanotubes obtained according to the nitrogen adsorption method using a fully automatic specific surface area measurement device (Microtrac MRB, Belsorp MAX II).

The fiber length of the carbon nanotubes is preferably 100 nm or more and 5000 nm or less, may also be 200 nm or more and 2000 nm or less, and may also be 500 nm or more and 1000 nm or less. With the fiber length of the carbon nanotubes being 100 nm or more, the conductivity and the toughness can be further increased. In addition, with the fiber length of the carbon nanotubes being 1000 nm or less, even if defibration progresses in the dispersion process, the occurrence of aggregation can be suppressed to further prevent the viscosity of the dispersion liquid from increasing.

The carbon nanotubes are evaluated by using a G/D ratio (a peak ratio of G-band and D-band). The G/D ratio of the carbon nanotubes is obtained by using Raman spectroscopy. In the carbon nanotubes, when the maximum peak intensity within the range of 1560 to 1600 $cm^{-1}$ in Raman spectroscopy is set as G and the maximum peak intensity within the range of 1310 to 1350 $cm^{-1}$ in Raman spectroscopy is set as D, the G/D ratio is preferably 0.5 to 1.0, more preferably 0.5 to 4.5, and even more preferably 0.5 to 2.0.

The carbon purity of carbon nanotubes is expressed by the content (% by mass) of carbon atoms in the carbon nanotubes. The carbon purity is preferably 90% by mass or more, more preferably 95% by mass or more, and even more preferably 98% by mass or more, based on 100% by mass of carbon nanotubes.

The amount of metal contained in the carbon nanotubes is preferably 10% by mass or less, more preferably 5% by mass or less, and even more preferably 2% by mass or less, based on 100% by mass of carbon nanotubes. As the metal contained in the carbon nanotubes, examples may include metals and metal oxides used as a catalyst when synthesizing the carbon nanotubes. Specific examples may include metals such as cobalt, nickel, aluminum, magnesium, silica, manganese, and molybdenum, oxides of the metals, and composite oxides thereof.

The carbon nanotubes of the first embodiment satisfy the condition (A), and preferably satisfy the condition (A) and satisfy that the pore size Z at the peak top is $40 \leq Z \leq 80$.

For the condition (A), the averaged outer diameter of the carbon nanotubes is preferably 5 to 20 nm, and more preferably 8 to 15 nm.

For the condition (A), the BET specific surface area of the carbon nanotubes is preferably 150 to 350 $m^2$/g, and more preferably 200 to 330 $m^2$/g.

With the carbon nanotubes satisfying the condition (A) in the range in which the pore size Z at the peak top satisfies $40 \leq Z \leq 80$, carbon nanotubes exhibiting excellent dispersibility and storage stability in the aqueous liquid medium can be obtained.

As the carbon nanotubes satisfying the condition (A), multi-layered carbon nanotubes can be preferably used. Among the above as well, as the carbon nanotubes satisfying the condition (A), for example, the averaged outer diameter may be 5 to 20 nm and the BET specific area may be 150 to 350 $m^2$/g, or the averaged outer diameter may be 8 to 15 nm and the BET specific area may be 200 to 330 $m^2$/g.

The carbon nanotubes of the second embodiment satisfies the condition (B), and preferably satisfies the condition (B) and satisfies that the pore size Z at the peak top is $3 \leq Z \leq 20$. For the condition (B), the averaged outer diameter of the carbon nanotubes is preferably 4 to 8 nm, and more preferably 5 to 7 nm.

For the condition (B), the BET specific surface area of the carbon nanotubes is preferably 600 to 900 $m^2$/g, and more preferably 700 to 800 $m^2$/g.

With the carbon nanotubes satisfying the condition (B) in the range in which the pore size Z at the peak top satisfies $3 \leq Z \leq 20$, carbon nanotubes exhibiting excellent dispersibility and storage stability in the aqueous liquid medium can be obtained.

As the carbon nanotubes satisfying the condition (B), multi-layered carbon nanotubes can be preferably used. Among the above as well, as the carbon nanotubes satisfying the condition (B), for example, the averaged outer diameter may be 4 to 8 nm and the BET specific area may be 600 to 900 $m^2$/g, or the averaged outer diameter may be 5 to 7 nm and the BET specific area may be 700 to 850 $m^2$/g.

<Pre-processing of Carbon Nanotubes>

Regarding the carbon nanotubes of the embodiments, the manufacturing method thereof is not particularly limited, and may be specified according to the physical properties thereof. The carbon nanotubes of the embodiment can be prepared by performing pre-processing on carbon nanotubes manufactured according to a conventional manufacturing method or conventional carbon nanotubes. As a method for pre-processing the carbon nanotubes, a surface process, a thermal process, a pulverization process, etc., using a chemical agent may be used.

For example, the carbon nanotubes according to the embodiment can be obtained by performing a pulverization process on carbon nanotubes having physical properties that are easy to attain. As the pulverization process, any of wet pulverization and dry pulverization may be performed, pulverization with a medium may be performed, and pulverization without a medium may also be used. From the ease of the physical properties of the carbon nanotubes, dry pulverization is preferred, and a combination of dry pulverization and medium pulverization is further preferred. For example, as the pulverization device, examples may include a bead mill, a ball mill, an attrition mill, etc. The components to be put into the pulverization device may be the unprocessed carbon nanotubes only, and an arbitrary component, such as a lubricant, a dispersant, a surfactant, etc., may also be further added. While dry pulverization is preferred, a liquid medium may also be put into the pulverization device as needed together with the unprocessed carbon nanotubes. In the case where the pulverization device is used, the pulverization process may be a processing method of a batch type, a continuous dispersion type, a circulation dispersion type, etc. However, from the ease of controlling the physical properties of the carbon nanotubes, a continuous dispersion type pulverization process is preferred. In the continuous dispersion type pulverization process, by controlling the input mass per unit time of the carbon nanotubes put into the pulverization device, the type of the pulverization medium, the diameter, the input amount, etc., the desired carbon nanotubes can be obtained. In an example, a continuous bead mill may be used to continuously input carbon nanotube raw materials and perform dry pulverization. For the continuous bead mill, examples may include "Dynamic Mill" manufactured by NIPPON COKE & ENGINEERING CO.,LTD. and "Dry Star" manufactured by Ashizawa Finetech Co., Ltd. Although it varies depending on the scale and the type of the pulverization device, for example, the pulverization medium is preferably zirconia, alumina, iron, iron, etc. In addition, the medium diameter is preferably 1 to 15 mm, and more preferably 1 to 10 mm. In addition, the input amount of the carbon nanotubes may be set by considering the pulverization efficiency according to device scale, etc., the input amount may be, for example, 1 to 100 kg/h.

The unprocessed carbon nanotubes as the raw material are not particularly limited, and the unprocessed carbon nanotubes may be carbon nanotubes manufactured by any method. The carbon nanotubes can generally be produced by a laser ablation process, an arc discharging process, a thermal CVD process, a plasma CVD process, and a combustion process. However, the invention is not limited thereto. For example, the carbon nanotubes can be manufactured by catalytically reacting a carbon source with a catalyst at 500 to 1000°C. in an atmosphere with an oxygen concentration of 1% by volume or less. The carbon source may be at least one of hydrocarbon and alcohol.

Any conventionally known raw material gas can be used as the carbon source for unprocessed carbon nanotubes. For example, hydrocarbons such as methane, ethylene, propane, butane, and acetylene, carbon monoxide, and alcohol can be used as the carbon-containing raw material gas. However, the invention is not limited thereto. Particularly from the perspective of ease of use, it is desirable to use at least one of hydrocarbon and alcohol as the raw material gas.

Unprocessed carbon nanotubes usually exist as secondary particles. The shape of the secondary particles may be, for example, a state in which carbon nanotubes, which are common primary particles, are intricately entangled. It may also be an aggregate of carbon nanotubes in a linear shape. The secondary particles, which are aggregates of linear carbon nanotubes, are easier to unravel than those that are entangled. In addition, linear carbon nanotubes have better dispersibility than entangled carbon nanotubes. Therefore, linear carbon nanotubes can be suitably used as the carbon nanotubes.

It is preferable to perform a pulverization process on the unprocessed carbon nanotubes to satisfy desired physical property values.

The carbon nanotubes may also be carbon nanotubes on which a surface process is performed. Further, the carbon nanotubes may be a carbon nanotube derivative to which a functional group represented by a carboxyl group is applied. In the case where the pulverization process is performed, the process may be performed before, during, or after the pulverization process.

The unprocessed carbon nanotubes as the raw material differ in terms of the distributions of fiber length, pore size, etc., depending on the type. Therefore, depending on the type of carbon nanotubes, the compression of the carbon nanotubes through processing such as dry pulverization and the manner in which carbon nanotubes are bent, etc., differ. The distributions of various properties of the obtained carbon nanotubes differ in accordance with the type and the processing method of carbon nanotubes. Therefore, a suitable processing method may be applied in accordance with the type of the carbon nanotubes. For example, as the processing method, it suffices as long as the selection of the pulverization processing device, the processing time, etc., are adjusted as appropriate.

<Carbon Nanotube Dispersion Liquid>

The carbon nanotube dispersion liquid of the embodiment contains the carbon nanotubes and aqueous liquid medium. The details of the carbon nanotubes are as described above. The aqueous liquid medium may be water, a water-soluble organic solvent, or a combination thereof. The carbon nanotube dispersion liquid may further contain a dispersant for increasing the dispersibility of the carbon nanotubes.

The aqueous liquid medium is not particularly limited as long as the carbon nanotubes can be dispersed. However, it is preferable that the aqueous liquid medium is at least one selected from the group consisting of water and water-soluble organic solvents. In the case where the carbon nanotube dispersion liquid contains water, it is preferred that the aqueous liquid medium substantially consists of water or a combination of water and a water-soluble organic solvent. In the case where the carbon nanotube dispersion liquid does not substantially contain water, it is preferred that the aqueous liquid medium substantially consists of a water-soluble organic solvent. In the case where the carbon nanotube dispersion liquid contains water, based on the total amount of the aqueous liquid medium, water is preferably contained in an amount of 50% by mass or more, preferably 95% by mass or more, more preferably 98% by mass or more, and the aqueous liquid medium may also substantially consist of water only.

As the water-soluble organic solvent, examples may include: alcohol-based organic solvents (methanol, ethanol, propanol, isopropanol, butanol, isobutanol, secondary butanol, tertiary butanol, benzyl alcohol, etc.), polyhydric alcohol-based organic solvents (ethylene glycol, diethylene glycol, triethylene glycol, polyethylene glycol, propylene glycol, dipropylene glycol, polypropylene glycol, butylene glycol, hexanediol, pentanediol, glycerin, hexanetriol, thiodiglycol, etc.), polyhydric alcohol ether-based organic solvents (ethylene glycol monomethyl ether, ethylene glycol monoethyl ether, ethylene glycol monobutyl ether, diethylene glycol monomethyl ether, diethylene glycol monoethyl ether, diethylene glycol monobutyl ether, propylene glycol monomethyl ether, propylene glycol monoethyl ether, propylene glycol monobutyl ether, ethylene glycol monomethyl ether acetate, triethylene glycol monomethyl ether, triethylene glycol monoethyl ether, triethylene glycol monobutyl ether, ethylene glycol monophenyl ether, propylene glycol monophenyl ether, etc.), amine-based organic solvents (ethanolamine, diethanolamine, triethanolamine, N-methyldiethanolamine, N-ethyldiethanolamine, morpholine, N-ethylmorpholine, ethylenediamine, diethylenediamine, triethylenetetramine, tetraethylenepentamine, polyethyleneimine, pentamethyldiethylenetriamine, tetramethylpropylenediamine, etc.), amide-based organic solvents (N-methyl-2-pyrrolidone (NMP), N-ethyl-2-pyrrolidone (NEP), N,N-dimethylformamide, N,N-dimethylacetamide, N,N-diethylacetamide, N-methylcaprolactam, etc.), heterocyclic organic solvents (cyclohexylpyrrolidone, 2-oxazolidone, 1,3-dimethyl-2-imidazolidinone, γ-butyrolactone, etc.), sulfoxide-based (dimethyl sulfoxide etc.), sulfonic organic solvents (hexamethylphosphorotriamide, sulfolane, etc.), lower ketone-based organic solvents (acetone, methyl ethyl ketone, etc.), others, tetrahydrofuran, urea, acetonitrile, etc. The above may be used alone or in combination of two or more.

The carbon nanotube dispersion liquid may be substantially free of water, and the aqueous liquid medium may consist solely of a water-soluble organic solvent. In the case where the aqueous liquid medium is substantially free of water, the water-soluble organic solvent may preferably contain an amide-based organic solvent, and may be a combination of an amide-based organic solvent and another water-soluble organic solvent. In the case where the water-soluble organic solvent contains an amide-based organic solvent, based on the total amount of the aqueous liquid medium, the amide-based organic solvent is preferably contained in an amount of 50% by mass or more, preferably 95% by mass or more, more preferably 98% by mass or more, and the aqueous liquid medium may also substantially consist of the amide-based organic solvent only. The carbon nanotube dispersion liquid may contain one or more amide organic solvents. In the specification, "substantially free of water" means that no water is intentionally added.

Examples of the amide-based organic solvent may include N-methyl-2-pyrrolidone (NMP), N-ethyl-2-pyrrolidone (NEP), N,N-dimethylformamide, N,N-dimethylacetamide, N,N-diethylacetamide, N-methylcaprolactam, etc. The above may be used alone or in combination of two or more. In particular, at least one selected from the group consisting of N-methyl-2-pyrrolidone and N-ethyl-2-pyrrolidone is preferably selected, and N-methyl-2-pyrrolidone is more preferably selected. The aqueous liquid medium may substantially consist only of N-methyl-2-pyrrolidone and N-ethyl-2-pyrrolidone, and may substantially consist only of N-methyl-2-pyrrolidone.

In the carbon nanotube dispersion liquid containing water as the aqueous liquid medium, the pH value is preferably 7.0 or more and 10.5 or less, and is preferably 9.0 or more and 10.5 or less. When the pH is below the above range, the carbon nanotube dispersion liquid tends to gel. If the pH exceeds the above range, issues such as corrosion of various raw materials within the battery and exterior materials, or gelation of the binder resin may occur easily. The pH value can be measured with a common pH meter.

In the specification, "pH" of the carbon nanotube dispersion liquid substantially free of water as the aqueous liquid medium refers to the value obtained by adding water to the carbon nanotube dispersion liquid, preparing to make the solid content concentration after water is added 50% when the solid content concentration before water is added is 100%, and measuring the value by using a common pH meter.

While stirring the carbon nanotube dispersion liquid with a solid content concentration of 5% by using a dispersing machine or the like, water is added so that the solid content concentration of the carbon nanotube dispersion liquid becomes 2.5%. After stirring uniformly, the pH of the carbon nanotube dispersion liquid can be measured at 25°C by using a tabletop pH meter (Seven Compact S220 Expert Pro, manufactured by Mettler Toledo).

The pH of the carbon nanotube dispersion liquid substantially free of water and containing an amide-based organic solvent, as the aqueous liquid medium, is preferably 9.0 or higher. Moreover, the pH is preferably 12.0 or less, and more preferably 11.0 or less.

The carbon nanotube dispersion liquid may further contain a dispersant for further increasing the dispersibility of the carbon nanotubes.

The dispersant is not limited, within the range able to stably dispersing the carbon nanotubes, and a surfactant, a resin-type dispersant, etc., can be used. Surfactants are mainly classified into anionic, cationic, nonionic and amphoteric. In accordance with the properties required for dispersing carbon nanotubes, a suitable type of dispersant can be used in a suitable amount.

In the case where an anionic surfactant is selected, the type is not particularly limited. Specifically, examples may include fatty acid salt, polysulfonate, polycarboxylate, alkyl sulfate ester salt, alkylaryl sulfonate, alkylnaphthalene sulfonate, dialkyl sulfonate, dialkyl sulfosuccinate, alkyl phosphate, polyoxyethylene alkyl ether sulfate, polyoxyethylene alkylaryl ether sulfate, naphthalene sulfonic acid formalin condensate, polyoxyethylene alkyl phosphate sulfonate, glycerol borate fatty acid ester, polyoxyethylene glycerol fatty acid ester, etc. However, the invention is not limited thereto. Furthermore, specific examples may include sodium dodecylbenzenesulfonate, sodium laurate sulfate, sodium polyoxyethylene lauryl ether sulfate, polyoxyethylene nonylphenyl ether sulfate salt, and sodium salt of β-naphthalene sulfonic acid formalin condensate, etc. However, the invention in not limited thereto.

Further, typical examples of cationic surfactants include alkylamine salts and quaternary ammonium salts. Specifically, examples may include stearylamine acetate, trimethylyacyanmonium chloride, trimethyltallow ammonium chloride, dimethyldioleylammonium chloride, methyloleyl diethanol chloride, tetramethylammonium chloride, laurylpyridinium chloride, laurylpyridinium bromide, laurylpyridinium disulfate, cetylpyridinium bromide, 4-alkylmercaptopyridine, poly(vinylpyridine)-dodecyl bromide as well as dodecylbenzyltriethylammonium chloride. However, the invention is not limited thereto. In addition, examples of amphoteric surfactants may include, but are not limited to, aminocarboxylate salts, etc.

Moreover, as a nonionic surfactant, specific examples may include polyoxyethylene alkyl ether, polyoxyalkylene derivative, polyoxyethylene phenyl ether, sorbitan fatty acid ester, polyoxyethylene sorbitan fatty acid ester, and alkyl allyl ether, etc. However, the invention is not limited thereto. Specific examples may include, but are not limited to, polyoxyethylene lauryl ether, sorbitan fatty acid ester, and polyoxyethylene octylphenyl ether, etc. However, the invention is not limited thereto.

The selected surfactant is not limited to a single surfactant. Therefore, it is also possible to use two or more types of surfactants in combination. For example, a combination of an anionic surfactant and a nonionic surfactant, or a combination of a cationic surfactant and a nonionic surfactant can be used. The blending amount in such situation is preferably a blending amount suitable for each surfactant component. As for the combination, a combination of an anionic surfactant and a nonionic surfactant is preferred. Preferably, the anionic surfactant is a polycarboxylate. Preferably, the nonionic surfactant is polyoxyethylene phenyl ether.

In addition, specific examples of the resin-type dispersant may include: cellulose derivatives (cellulose acetate, cellulose acetate butyrate, cellulose butyrate, cyanoethylcellulose, ethylhydroxyethylcellulose, nitrocellulose, methylcellulose, ethylcellulose, hydroxyethylcellulose, hydroxypropylcellulose, hydroxypropylmethylcellulose, carboxymethylcellulose, etc., or salts thereof), polyvinyl alcohol, polyvinyl butyral, polyvinylpyrrolidone, polyacrylonitrile, polyacrylonitrile polymers (copolymers of polyacrylonitrile and acrylic acid, etc.), poly(meth)acrylic acid or salts thereof, poly(meth)acrylates, nitrile rubbers (acrylonitrile butadiene rubber, hydrogenated acrylonitrile butadiene rubber, copolymers of hydrogenated nitrile rubber and hydrogenated butadiene acrylonitrile, etc.), etc. Polymers in which other substituents have been introduced into some of these polymers, modified polymers, etc., may also be used. In particular, methylcellulose, ethylcellulose, carboxymethylcellulose, or salts thereof, polyvinyl alcohol, polyvinyl butyral, polyvinylpyrrolidone, polyacrylonitrile polymer, copolymer of acrylonitrile and acrylic acid, (meth)acrylic acid or salts thereof, hydrogenated nitrile rubber and hydrogenated butadiene acrylonitrile copolymers are preferred. The resin-type dispersant may be used alone or in combination of two or more. The weight average molecular weight (Mw) of the resin-type dispersant is preferably 5,000 to 250,000, more preferably 10,000 to 150,000.

In the carbon nanotube dispersion liquid, based on the total amount of the carbon nanotube dispersion liquid, carbon nanotubes are preferably contained in an amount of 0.5 to 15% by mass, more preferably 1.5 to 10% by mass, even more preferably 2 to 10% by mass, even more preferably 2 to 7% by mass, and particularly preferably 3 to 7% by mass. In addition, based on the total amount of the carbon nanotube dispersion liquid, the carbon nanotubes satisfying the condition (A) are preferably 2 to 10% by mass, and particularly preferably 3 to 7% by mass. In addition, based on the total amount of the carbon nanotube dispersion liquid, the carbon nanotubes satisfying the condition (B) is preferably 0.5 to 5% by mass, more preferably 1.0 to 4% by mass, and even more preferably 1.5 to 3% by mass.

In the carbon nanotube dispersion liquid, the dispersant is preferably 10 to 200 parts by mass, more preferably 20 to 150 parts by mass, and even more preferably 20 to 120 parts by mass, based on 100 parts by mass of the carbon nanotubes. In addition, the dispersant may be used in an amount of 10 to 100 parts by mass, 20 to 80 parts by mass, or 20 to 50 parts by mass based on 100 parts by mass of the carbon nanotubes.

In particular, in the carbon nanotube dispersion liquid using the carbon nanotubes satisfying the condition (A), the dispersant is preferably 10 to 100 parts by mass, more preferably 20 to 80 parts by mass, and even more preferably 20 to 50 parts by mass, based on 100 parts by mass of the carbon nanotubes. Also, in the carbon nanotube dispersion liquid using the carbon nanotubes satisfying the condition (B), the dispersant is preferably 10 to 200 parts by mass, more preferably 20 to 150 parts by mass, and even more preferably 20 to 120 parts by mass, based on 100 parts by mass of the carbon nanotubes.

The carbon nanotube dispersion liquid may further contain, as necessary, other arbitrary components, such as amine compounds, inorganic bases, wetting agents, antifoaming agents, surfactants, pH adjusters, wetting and penetrating agents, antioxidants, preservatives, antifungal agents, leveling agents, etc. Further, the carbon nanotube dispersion liquid may contain a conductive material and a polymer component other than carbon nanotubes as long as the objective of the invention is not affected. Such optional component can be added at any timing, such as before the preparation of the carbon nanotube dispersion liquid, during the dispersion process, or after the dispersion process.

The carbon nanotube dispersion liquid may further include an amine compound, an inorganic base, or a combination thereof, preferably in combination with the dispersant. As the amine compound, primary amine, secondary amine, and tertiary amine are used, and ammonia and quaternary ammonium compounds are not included. In addition to monoamine, amine compounds such as diamine, triamine, and tetramine having multiple amino groups in the molecule can be used as the amine compound. Specific examples may include, for example, aliphatic primary amines such as methylamine, ethylamine, butylamine, octylamine, aliphatic secondary amines such as dimethylamine, diethylamine, dibutylamine, aliphatic tertiary amines such as trimethylamine, triethylamine, dimethyloctylamine, amino acids such as alanine, methionine, proline, serine, asparagine, glutamine, lysine, arginine, histidine, aspartic acid, glutamic acid, cysteine, alkanolamines such as dimethylaminoethanol, monoethanolamine, diethanolamine, methylethanolamine, triethanolamine, and alicyclic nitrogen-containing heterocyclic compounds such as hexamethylenetetramine, morpholine, piperidine, etc. However, the invention is not limited thereto. Examples of the inorganic base may include, alkali metal hydroxides, alkaline earth metal hydroxides, alkali metal carbonates, alkaline earth metal carbonates, alkali metal phosphates, alkaline earth metal phosphates, etc. Examples of alkali metal hydroxides include, for example, lithium hydroxide, sodium hydroxide, potassium hydroxide, etc. Examples of alkaline earth metal hydroxides include, for example, calcium hydroxide, magnesium hydroxide, etc. Examples of alkali metal carbonates include, for example, lithium carbonate, lithium hydrogen carbonate, sodium carbonate, sodium hydrogen carbonate, potassium carbonate, potassium hydrogen carbonate, etc. Examples of alkaline earth metal carbonates include, for example, calcium carbonate, magnesium carbonate, etc.

The amine compound and the inorganic base are respectively included to improve the dispersibility and storage stability of the carbon nanotube dispersion liquid. However, if the contents thereof are excessive, the storage stability may deteriorate and further corrosion may occur inside the dispersion device and/or the battery. From the perspective, the total amount of the amine compound and the inorganic base is preferably 0.01 to 3% by mass, more preferably 0.02 to 1% by mass, based on the total amount of the carbon nanotube dispersion liquid. In the case where the carbon nanotube dispersion liquid contains a dispersant, the total amount of the amine compound and the inorganic base is preferably 0.1 to 40 parts by mass, more preferably 0.5 to 30 parts by mass, based on 100 parts by mass of the dispersant. In addition, the total amount of the amine compound and the inorganic base may be 0.1 to 20 parts by mass, 0.5 to 15 parts by mass, or 1 to 10 parts by mass based on 100 parts by mass of the dispersant. In particular, in the case where a dispersant is contained in the carbon nanotube dispersion liquid using the carbon nanotubes satisfying the condition (A), the total amount of the amine compound and the inorganic base is preferably 0.1 to 20 parts by mass, more preferably 0.5 to 15 parts by mass, and even more preferably 1 to 10 parts by mass based on 100 parts by mass of the dispersant. In addition, in the case where a dispersant is contained in the carbon nanotube dispersion liquid using the carbon nanotubes satisfying the condition (B), the total amount of the amine compound and the inorganic base is preferably 0.1 to 40 parts by mass, and more preferably 0.5 to 30 parts by mass, based on 100 parts by mass of the dispersant.

The carbon nanotube dispersion liquid may include an antifoaming agent, and preferably include a combination of an antifoaming agent and a dispersing agent. Any antifoaming agent, such as commercially available antifoaming agents, wetting agents, hydrophilic organic solvents, and water-soluble organic solvents, etc., can be used as long as it has an antifoaming effect, and one type of antifoaming agent may be used and multiple types of antifoaming agent may be used in combination. Examples may include: alcohol types: ethanol, propanol, isopropanol, butanol, octyl alcohol, hexadecyl alcohol, acetylene alcohol, ethylene glycol monobutyl ether, methyl cellosolve, butyl cellosolve, propylene glycol monomethyl ether, acetylene glycol, polyoxyalkylene glycol, propylene glycol, other glycols, etc.; fatty acid ester types: diethylene glycol laurate, glycerin monoricinolate, alkenyl succinic acid derivatives, sorbitol monolaurate, sorbitol trioleate, polyoxyethylene monolaurate, polyoxyethylene sorbitol monolaurate, natural wax, etc.; amide types: polyoxyalkylene amide, acrylate polyamine, etc.; phosphate ester types: tributyl phosphate, sodium octyl phosphate, etc.; metal soap types; aluminum stearate, calcium oleate, etc.; oil and fat types: animal and vegetable oils, sesame oil, castor oil, etc.; mineral oil types: kerosene, paraffin, etc.; silicone types: dimethyl silicone oil, silicone paste, silicone emulsion, organically modified polysiloxane, fluorosilicone oil, etc. In the carbon nanotube dispersion liquid, the content of the antifoaming agent may be adjusted as appropriate depending on the prescription.

The carbon nanotube dispersion liquid preferably has a complex modulus of elasticity of 1 to 100 Pa, more preferably 3 to 70 Pa, and even more preferably 5 to 50 Pa, at 25°C and 1 Hz by dynamic viscoelasticity measurement. The complex modulus of elasticity of carbon nanotubes can be evaluated by dynamic viscoelasticity measurement. More specifically, the complex modulus of elasticity can be measured by the method described in the examples.

The complex modulus of elasticity indicates the hardness of the carbon nanotube dispersion liquid. The better the dispersibility of the carbon nanotubes and the lower the viscosity of the carbon nanotube dispersion liquid, the smaller the complex modulus of elasticity. However, in the case where the fiber length of the carbon nanotubes is large, even if carbon nanotubes are uniformly and stably unraveled in a medium, the carbon nanotubes themselves have structural viscosity, so the complex modulus of elasticity may be high. The carbon nanotube dispersion liquid having a complex modulus of elasticity within the above range has favorable dispersion particle size and dispersibility of carbon nanotubes, and is suitable, for example, as the carbon nanotube dispersion liquid for a nonaqueous electrolyte secondary battery.

The dispersibility of the carbon nanotubes in the carbon nanotube dispersion liquid can also be evaluated by the gloss of the coating film.

It is preferable that the film obtained by coating a carbon nanotube dispersion liquid onto a substrate and drying the liquid has a gloss of 10 to 120 when measured at 60°. Specifically, the gloss is a gloss measured at 60° of a coating film obtained by coating on a smooth glass substrate, baking, and drying. That is, the gloss is the intensity of the light reflected at 60° with respect to the incident angle. For example, a coating film obtained by dropping 1 mL of the carbon nanotube dispersion liquid onto a smooth glass substrate, performing coating by using a No. 7 bar coater at 2 cm/sec., then baking the liquid in a hot air oven at 140°C for 10 minutes and left to cool. Using a gloss meter (BYK Gardner gloss meter micro-gloss 60°), three positions on the coated surface, excluding the end parts, are randomly selected, and the average value of each measurement can be taken as the gloss at 60°. The better the dispersibility of the light incident on the coating film, the smoother the coating surface, and therefore the higher the gloss. Conversely, the poorer the dispersibility, the more light is scattered due to the unevenness of the coating surface, resulting in lower gloss. More specifically, the gloss at 60° can be measured by using the method described in the examples. The gloss is preferably 10 or more, more preferably 30 or more, even more preferably 40 or more, and particularly preferably 50 or more. Moreover, 120 or less is preferable, and 100 or less is more preferable. By setting the gloss within the above range, a carbon nanotube dispersion liquid in an appropriate dispersion state can be obtained. If the gloss falls below the range, aggregated carbon nanotubes tend to exist. In addition, if the gloss exceeds the range, many finely cut carbon nanotubes may be produced, making it difficult to form an efficient conductive network.

In the carbon nanotube dispersion liquid, a 50% particle size (D50) of the carbon nanotubes, which is the particle size at which the cumulative frequency is 50% on a volume basis in a laser diffraction/scattering type particle size distribution is preferably 0.1 to 20 $\mu$m, more preferably 0.4 to 10 $\mu$m, and even more preferably 0.4 to 5 $\mu$m. The 50% particle size (D50) obtained in the laser diffraction/scattering type particle size distribution can estimate the particle size of the aggregated carbon nanotube particles based on the scattered light intensity distribution of the particles, and serves as an index for evaluating the dispersibility of the carbon nanotubes dispersion liquid. With the 50% particle size (D50) falling within the range, the carbon nanotube dispersion liquid with favorable dispersibility can be provided. When the 50% particle size (D50) exceeds the range, carbon nanotubes are present in the aggregated state. In addition, when the 50% particle size (D50) falls below the range, many finely cut carbon nanotubes may be produced, making it difficult to form an efficient conductive network. The specific method for measuring the 50% particle size (D50) is as described in the examples. For example, the 50% particle size (D50) can be measured by using a particle size distribution measurement device after the measurement sample is diluted so that the transmittance of the red laser diode is 60 to 80%. The particle size standard is set as volume-based, and the 50% particle size (D50) is measured accordingly.

It is preferable that the carbon nanotube dispersion liquid is in a state where no sedimentation or separation of carbon nanotubes is observed immediately after the dispersion process. In addition, it is preferable that the carbon nanotube dispersion liquid maintains a dispersed state for a long period of time immediately after the dispersion process. Moreover, if the carbon nanotube dispersion liquid gels during storage, the liquid becomes difficult to disperse again. Therefore, it is preferable that the carbon nanotube dispersion liquid does not gel for a long period of time. The dispersibility of the carbon nanotube dispersion liquid can also be evaluated by viscosity. The lower the viscosity, the better the dispersibility. From the perspective, the viscosity of the carbon nanotube dispersion liquid is preferably less than 10,000 mPa s when measured at 60 rpm by using a B-type viscometer at 25°C, more preferably less than 2,000 mPa·s, and even more preferably less than 500 mPa·s. The viscosity is 1 mPa·s or more, 10 mPa s or more, or 100 mPa's or more. The specific method for measuring the viscosity is as described in the examples. For example, the CNT dispersion liquid can be sufficiently stirred with a spatula at a temperature of 25°C., and then the viscosity can be measured at a B-type viscometer rotor rotation speed of 60 rpm by using a B-type viscometer.

<Dispersion Method>

The carbon nanotube dispersion liquid of the embodiment is not limited to the manufacturing method thereof, but may be manufactured according to a conventional manufacturing method. For example, in the method for manufacturing the carbon nanotube dispersion liquid according to the embodiment, it is preferable to perform a process of dispersing the carbon nanotubes in the aqueous liquid medium. The dispersion device used to perform such process is not particularly limited.

As the dispersion device, a dispersion machine commonly used for pigment dispersion etc., can be used. Examples may include mixers such as dispersing machines, homo mixers, and planetary mixers, homogenizers ("Advanced Digital Sonifer (registered trademark), MODEL 450DA" manufactured by BRANSON, "Clearmix" manufactured by M Technique Co., Ltd., "Filmix" manufactured by PRIMIX Corporation, "Abramix" manufactured by Silverson, etc.), paint conditioners (manufactured by Red Devil), colloid mills ("PUC Colloid Mill" manufactured by PUC, "Colloid Mill MK" manufactured by IKA), cone mills ("Cone Mill MKO" manufactured by IKA, etc.), ball mills, sand mills ("Dyno Mill" manufactured by Shinmaru Enterprises Co., Ltd., etc.), attritors, pearl mills ("DCP mill" manufactured by Eirich, etc.), media type dispersion machine such as Coball mill, high pressure homogenizers ("Genus PY" manufactured by Genus Co., Ltd., "Star burst" manufactured by Sugino Machine Co., Ltd., "Nanomizer" manufactured by Nanomizer Co., Ltd., etc.), medialess dispersion machines such as "Clear SS-5" manufactured by M Technique Co., Ltd. and "MICROS" manufactured by Nara Machinery Co., Ltd., other roll mills, etc. However, the invention is not limited thereto.

For example, from the perspective of facilitating wetting of the carbon nanotubes and dissolving coarse particles, a high shear mixer is preferably used in the initial dispersion process. Then, from the perspective of dispersing while maintaining the fiber length of the carbon nanotubes, a high pressure homogenizer is preferably used. In addition, by dispersing carbon nanotubes with a high-pressure homogenizer and then further dispersing with a bead mill, the dispersion state can be made uniform while maintaining the fiber length. The pressure when using a high-pressure homogenizer is preferably 60 to 150 MPa, more preferably 60 to 120 MPa.

While the dispersion using a dispersion device includes batch-type dispersion, pass-type dispersion, circular dispersion, etc., any of these processes may be used, or two or more processes may be combined. Batch type dispersion is a process in which dispersion is performed using only a dispersion device body without using a pipe, etc. Since such process is easy to handle, it is preferred in the case of manufacture of small quantities. In the pass-type dispersion, the dispersion device body is provided with a duct supplying a dispersed liquid via a pipe and a duct receiving the dispersed liquid, and dispersion is performed by passing the dispersed liquid through the dispersion device body. In addition, circulation dispersion refers to a process in which the dispersed liquid passing through the dispersion device body returns to the duct supplying the dispersed liquid to be dispersed while being circulated. In either process, the longer the processing time, the more the dispersion progresses. Therefore, it suffices as long as pass or circulation is repeated until the desired dispersion state is achieved. If the size of the duct or the processing time is changed, the processing amount can be increased. Pass-type dispersion is preferable compared to circulation-type dispersion in that it is easier to make the dispersion state uniform. Circulation-type dispersion is preferable compared to pass-type dispersion because it requires simpler work and manufacture equipment. In the dispersion process, the disintegration of aggregated particles, unraveling, wetting, stabilizing, etc., of carbon nanotubes proceed sequentially or simultaneously, and the finished dispersion state differs depending on how the processes progress. Therefore, it is preferable to manage the dispersion state in each dispersion process by using various evaluation methods. For example, it can be managed by the method described in the example.

<Carbon Nanotube Resin Composition>

The carbon nanotube resin composition of the embodiment may include the carbon nanotube dispersion liquid and a binder resin. The details of the carbon nanotube dispersion liquid are as described above. That is, the carbon nanotube resin composition may include carbon nanotubes, an aqueous liquid medium, and a binder resin. The aqueous liquid medium may include water, a water-soluble organic solvent, or a combination thereof. The carbon nanotube resin composition may further contain a dispersant and may further contain arbitrary components. The details are as described above. The carbon nanotube resin composition can be used as a resin composition for a nonaqueous electrolyte secondary battery.

The binder resin is not particularly limited as long as it is normally used as a binder resin for paints, and can be appropriately selected depending on the purpose. The binder resin may be a resin that binds substances such as active materials, carbon nanotubes, and other conductive materials. Examples of the binder resin may include, for example: a homopolymer or copolymer containing, as a constituent unit, ethylene, propylene, vinyl chloride, vinyl acetate, vinyl alcohol, maleic acid, acrylic acid, acrylic ester, methacrylic acid, methacrylic ester, acrylonitrile, styrene, vinyl butyral, vinyl acetal, vinylpyrrolidone, etc.; polyurethane resin, polyester resin, phenol resin, epoxy resin, phenoxy resin, urea resin, melamine resin, alkyd resin, acrylic resin, formaldehyde resin, silicone resin, fluororesin; cellulose resin such as carboxymethyl cellulose or its salt; elastomers such as hydrogenated or non-hydrogenated styrene-butadiene rubber, fluororubber; polyaniline, polyacetylene, etc. Modified products of the resins and copolymers of the resins may also be used. The binder resin may be used alone or in combination of two or more. Among these, when used as a binder resin for the positive electrode of a nonaqueous electrolyte secondary battery, from the perspective of durability, a homopolymer or copolymer having fluorine atoms in the molecule, such as polyvinylidene fluoride, polyvinyl fluoride, polytetrafluoroethylene, a modified product, a copolymer thereof is preferred. In addition, in the case of being used as a binder resin of a negative electrode of a nonaqueous electrolyte secondary battery, CMC (carboxymethyl cellulose or salts thereof), hydrogenated or non-hydrogenated styrene-butadiene rubber, polyacrylic acid, etc., which have good adhesion, are preferable.

In the carbon nanotube resin composition, the binder resin is preferably 0.5 to 30% by mass, more preferably 0.5 to 25% by mass, based on the total non-volatile content of the carbon nanotube resin composition.

<Composite Slurry>

The composite slurry of the embodiment may include the carbon nanotube dispersion liquid, a binder resin, and an active material. The composite slurry of another embodiment may include the carbon nanotube resin composition and an active material. Details of the carbon nanotube resin composition are as described above. That is, the composite slurry may include carbon nanotubes, an aqueous liquid medium, a binder resin, and an active material. The aqueous liquid medium may include water, a water-soluble organic solvent, or a combination thereof. The composite slurry may further contain a dispersant or arbitrary components. The details are as described above. The active material may be either a positive electrode active material or a negative electrode active material. The composite slurry can be used as a composite slurry for a nonaqueous electrolyte secondary battery electrode, and may either be a positive electrode composite slurry or a negative electrode composite slurry for a nonaqueous electrolyte secondary battery.

The positive electrode active material is not particularly limited. For example, for the application as a lithium ion secondary battery, metal compounds such as metal oxides and metal sulfides that can be reversibly doped or intercalated with lithium ions can be used. Examples may include composite oxide powder of lithium and transition metal, such as lithium manganese composite oxide (e.g. $Li_xMn_2O_4$ or $Li_xMnO_2$), lithium nickel composite oxide (e.g. $Li_xNiO_2$),

lithium cobalt composite oxide ($Li_xCoO_2$), lithium nickel cobalt composite oxide (e.g. $Li_xNi_{1-y}Co_yO_2$), lithium manganese cobalt composite oxide (e.g. $Li_xMn_yCo_{1-y}C_2$), lithium nickel manganese cobalt composite oxide (e.g. $Li_xNi_yCo_zMn_{1-y-z}O_2$), spinel type lithium manganese nickel composite oxide (e.g., $Li_xMn_{2-y}Ni_yO_4$), lithium phosphorous oxide powder having an olivine structure (e.g., $Li_xFePO_4$, $Li_xFe_{1-y}Mn_yPO_4$, $Li_xCoPO_4$, etc.), transition metal oxide powder such as manganese oxide, iron oxide, copper oxide, nickel oxide, vanadium oxide (e.g. $V_2O_5$, $V_6O_{13}$), titanium oxide, transition metal sulfide powder such as iron sulfate ($Fe_2(SO_4)_3$), $TiS_2$, and FeS, etc. However, x, y, and z are numerals, and $0<x<1$, $0<y<1$, $0<z<1$, and $0<y+z<1$. The positive electrode active materials can also be used alone or in combination.

The negative electrode active material is not particularly limited. For example, metal Li, or an alloy thereof, that can be reversibly doped or intercalated with lithium ions, tin alloy, silicon alloy negative electrode, metal oxide such as $Li_xTiO_2$, $Li_xFe_2O_3$, $Li_xFe_3O_4$, $Li_xWO_2$, conductive polymer such as polyacetylene, poly-p-phenylene, artificial graphite such as highly graphitized carbon materials, or carbonaceous powder such as natural graphite, resin-sintered carbon materials, etc. However, x is a numeral, and $0<x<1$. The negative electrode active materials can also be used alone or in combination. In particular, in the case where a silicon alloy negative electrode is used, the theoretical capacity is large, whereas the volumetric expansion is extremely large. Therefore, it is preferable to use electrode in combination with artificial graphite such as a highly graphitized carbon material, or carbonaceous powder such as natural graphite, a resin-sintered carbon material, etc.

The content of the carbon nanotubes in the composite slurry, based on the mass of the active material (assuming the mass of the active material is 100% by mass), is preferably 0.01% by mass or more, more preferably 0.02% by mass or more, even more preferably 0.03% by mass or more. Moreover, it is preferably 10% by mass or less, more preferably 5% by mass or less, and even more preferably 3% by mass or less.

In the case where the composite slurry contains a dispersant, based on the mass of the active material (assuming the mass of the active material is 100% by mass), the content of the dispersant in the composite slurry is preferably 0.01% by mass or more, more preferably 0.02% by mass or more. In addition, it is preferably 10% by mass or less, more preferably 5% by mass or less.

The content of the binder resin in the composite slurry is, based on the mass of the active material (assuming the mass of the active material is 100% by mass), preferably 0.5% by mass or more, more preferably 0.5% by mass or more. Moreover, it is preferably 30% by mass or less, more preferably 25% by mass or less, and even more preferably 20% by mass or less.

The content of the solid content in the composite slurry is, based on the mass of the composite slurry (assuming the mass of the composite slurry is 100% by mass), preferably 30% by mass or more, more preferably 40% by mass or more. In addition, it is preferably 90% by mass or less, more preferably 80% by mass or less.

The composite slurry of the embodiment is not limited to the manufacturing method thereof, but may be manufactured according to a conventional manufacturing method. Examples may include: a manufacturing method by adding a binder resin after adding an active material to a carbon nanotube dispersion liquid; a manufacturing method by adding an active material after adding a binder resin to a carbon nanotube dispersion liquid; a manufacturing method by simultaneously adding an active material and an active material to a carbon nanotube dispersion liquid, etc. As a method for manufacturing the composite slurry, a method in which a binder resin is added to a carbon nanotube dispersion liquid, and then an active material is further added and dispersed or a method in which an active material is added to a carbon nanotube dispersion liquid and then a binder resin is further added and dispersed is preferred. The dispersion device used in dispersion is not particularly limited. The composite slurry can be obtained by using the dispersion device mentioned in the description of the carbon nanotube dispersion liquid.

<Electrode film>

The electrode film of the embodiment is a coating film of the composite slurry. That is, the electrode film may include the carbon nanotubes, a binder resin, and an active material. The active material may be either a positive electrode active material or a negative electrode active material. The electrode film may further contain a dispersant or arbitrary components. The details are as described above. The electrode film can be used as a nonaqueous electrolyte secondary battery electrode film, and may either be an electrode film for a nonaqueous electrolyte secondary battery positive electrode or a nonaqueous electrolyte secondary battery negative electrode.

The electrode film may be a coating film obtained by using the composite slurry, and can be formed, for example, by coating and drying the composite slurry.

An electrode can be provided by using the electrode film. The electrode may include a current collector and an electrode film. The electrode can be obtained by coating the current collector with the composite slurry and drying the composite slurry to form a coating film. A positive electrode can be provided by using the electrode film containing a positive electrode active material, a negative electrode can be provided by using the electrode film containing a negative electrode active material, and the positive and negative electrodes can be provided as positive and negative electrodes, respectively, of a nonaqueous electrolyte secondary battery.

The material and shape of the current collector are not particularly limited, and can be appropriately selected from those suitable for various non-aqueous electrolyte secondary batteries. Examples of the material of the current collector include conductive metal such as aluminum, copper, nickel, titanium, or stainless steel, or an alloy thereof. In addition, as the shape, a flat foil is used in general, but a current collector with a roughened surface, a perforated foil-like current collector, and a mesh-like current collector can also be used. The thickness of the current collector is preferably about 0.5 to 30 $\mu$m.

The method for coating the composite slurry on the current collector is not particularly limited, and a conventional method can be used. Specifically, examples may include: a die coating method, a dip coating method, a roll coating method, a doctor coating method, a knife coating method, a spray coating method, a gravure coating method, a screen printing method or an electrostatic coating method, etc. As the drying method, examples can include leaving to dry or drying using a blower dryer, a hot air dryer, an infrared heating device, a far-infrared heating device, etc. However, the invention is not limited thereto.

The electrode film after coating may be subjected to a rolling process by using a lithographic press, a calendar roll, etc. The thickness of the formed electrode film is, for example, 1 $\mu$m or more and 500 $\mu$m or less, preferably 10 $\mu$m or more and 300 $\mu$m or less.

<Nonaqueous Electrolyte Secondary Battery>

The non-aqueous electrolyte secondary battery of the embodiment includes a positive electrode, a negative electrode, and an electrolyte, and at least one of the positive electrode and the negative electrode includes the electrode film. The positive electrode and the negative electrode may each include a current collector and an electrode film. The details are as described above. A non-aqueous electrolyte secondary battery as a lithium ion secondary battery is more preferred.

As the electrolyte, various conventionally known electrolytes that allow movement of ions can be used. In the lithium ion secondary battery, the electrolyte preferably contains a lithium salt and a nonaqueous solvent. For example, examples of the electrolyte may include lithium salts such as $LiBF_4$, $LiClO_4$, $LiPF_6$, $LiAsF_6$, $LiSbF_6$, $LiCF_3SO_3$, $Li(CF_3SO_2)_2N$, $LiC_4F_9SO_3$, $Li(CF_3SO_2)_3C$, LiI, LiBr, LiCl, $LiAlCl$, $LiHF_2$, LiSCN, or $LiBPh_4$ (however, Ph is a phenyl group). However, the invention is not limited thereto. One type of the lithium salts may be used alone, or two or more types may be used in combination. The electrolyte is preferably an electrolytic solution in which a lithium salt is dissolved in the non-aqueous solvent.

Although the nonaqueous solvent for the electrolyte is not particularly limited, examples may include carbonate such as ethylene carbonate, propylene carbonate, butylene carbonate, dimethyl carbonate, ethylmethyl carbonate, and diethyl carbonate; lactones such as γ-butyrolactone, γ-valerolactone, and γ-octanoic lactone; glyme such as tetrahydrofuran, 2-methyltetrahydrofuran, 1,3-dioxolane, 4-methyl-1,3-dioxolane, 1,2-methoxyethane, 1,2-ethoxyethane, and 1,2-dibutoxyethane; esters such as methyl formate, methyl acetate, and methyl propionate; sulfoxide such as dimethyl sulfoxide and sulfolane; and nitrile such as acetonitrile, etc. One type of the nonaqueous solvents may be used alone, or two or more types may be used in combination.

The nonaqueous electrolyte secondary battery may further include a separator. The separator is disposed between the positive electrode and the negative electrode and used. The separator is not particularly limited. Examples may include, for example, polyethylene non-woven fabrics, polypropylene non-woven fabrics, polyamide non-woven fabrics, porous polyethylene, porous polypropylene, porous polyamide, etc., and those subjected to a hydrophilic process, etc.

While the structure of the nonaqueous electrolyte secondary battery is not particularly limited, the battery generally includes a positive electrode, a negative electrode, and a separator as necessary, and can be formed in various shapes depending on the purpose of use, such as a paper type, a cylindrical type, a button type, and a laminated type.

Another example of the nonaqueous electrolyte secondary battery of the embodiment is a nonaqueous electrolyte secondary battery containing the carbon nanotubes of the embodiment described above. The nonaqueous electrolyte secondary battery of the example includes a positive electrode, a negative electrode, and an electrolyte. The positive electrode, the negative electrode, and the electrolyte, or a combination of two or more thereof may contain the carbon nanotubes of the embodiment described above. The details of the carbon nanotubes are as described above. For example, as described above, the nonaqueous electrolyte secondary battery may be a nonaqueous electrolyte secondary battery in which the electrode films of the positive electrode and the negative electrode are obtained using the composite slurry of the embodiment described above. In addition, at least one of the positive electrode and the negative electrode includes an intermediate layer between the current collector and the electrode film, and the intermediate layer may include the carbon nanotubes of the embodiment. A non-aqueous electrolyte secondary battery may include the electrode film obtained by adding the carbon nanotubes or the carbon nanotube dispersion liquid of the embodiment to composite slurry without the carbon nanotubes of the embodiment afterwards and using the substance.

The nonaqueous electrolyte secondary battery of the embodiment can be used for various purposes, such as vehicles, electronic devices, small communication devices, large capacity batteries, stationary storage batteries, and the like. Preferably, a vehicle including the nonaqueous electrolyte secondary battery of the embodiment can be provided. As the vehicle, examples may include an electric vehicle, a hybrid vehicle, a plug-in hybrid vehicle, a train, a motorcycle, an electric bicycle, a motorized bicycle, a construction vehicle, etc. Among the above, the demand for electric vehicles, hybrid vehicles, and plug-in hybrid vehicles is increasing worldwide. Therefore, the nonaqueous electrolyte secondary battery of the embodiment can be preferably used for such vehicles. The carbon nanotubes of the embodiment have favorable dispersibility and storage stability in the carbon nanotube dispersion liquid, the carbon nanotube resin composition, and the composite slurry. Therefore, the nonaqueous electrolyte secondary battery obtained using the same exhibits high rate and cycle properties, and can be preferably used in various vehicles.

The carbon nanotubes of the embodiment have excellent dispersibility and storage stability in the aqueous liquid medium. Therefore, the molded article obtained using the same can exhibit uniform conductivity and toughness by suppressing the aggregation of carbon nanotubes. Therefore, in addition to the nonaqueous electrolyte secondary battery, the carbon nanotubes of the embodiment, the dispersion liquid including the carbon nanotubes and the aqueous liquid medium, and the composition including the carbon nanotubes, the aqueous liquid medium, and the binder resin can also be applied to electronic materials, structural materials, paints, etc., more specifically, other electrode materials for fuel cells, electric dual-layer capacitors, etc., semiconductor materials, filler materials, short needle probes for microscopes, adsorption materials, filter materials, etc.

The disclosure of the application is related to the subject matter described in Japanese Patent Application No. 2021-214069 filed with the Japan Patent Office on December 28, 2021, the entire disclosure of which is incorporated herein by reference.

Examples

The invention is further described in detail by using examples below. The invention is not limited to the following examples unless it exceeds the gist the invention. In the examples, carbon nanotubes may be briefly represented as "CNT". Unless otherwise specified, "parts" represent "parts by mass" and "%" represent "% by mass."

Table 1 shows details of the carbon nanotubes, Table 2 shows details of the carbon nanotube dispersion liquid, Table 3 shows details of the positive electrode composite slurry and the positive electrode, and Table 4 shows the negative electrode composite slurry and the negative electrode.

<Preparation of CNT>

In Examples and Comparative Examples, the unprocessed carbon nanotubes used are as follows. BT1003M: LUCAN BT1003M, manufactured by LG Chem. Ltd., multi-layer CNT, outer diameter: 10-15 nm

JENOTUBE10B: Manufactured by JEIO, multilayer CNT, outer diameter: 7-12 nm
AMC (registered trademark): Manufactured by UBE Corporation, multilayer CNT, outer diameter: 5-11 nm
JENOTUBE6A: Manufactured by JEIO, multilayer CNT, outer diameter: 5-7 nm

Table 1 shows the types of carbon nanotubes and manufacture conditions. In Example 1, in a dynamic mill, zirconia beads with a diameter of 8 mm were charged as pulverization media, BT1003M was supplied as carbon nanotubes at an operating condition of 10.0 kg/h, and processed at a circumferential speed of 5.0 m/s, and Carbon Nanotubes (1) were obtained.

Except that the types of carbon nanotubes and manufacturing conditions shown in Table 1 were changed, Examples 2 to 16 and Comparative Examples 4, 5, 7, and 8 were carried out like Example 1. Accordingly, Carbon Nanotubes (2) to (16) and Comparative Carbon Nanotubes (4), (5), (7), and (8) were obtained.

In Comparative Examples 1 to 3, unprocessed Comparative Carbon Nanotubes (1) to (3) without the pulverization process were prepared.

In Comparative Example 6, in a paint shaker, 10 parts of BT1003M as the unprocessed carbon nanotubes and 200 parts of zirconia beads with a diameter of 2 mm as pulverization media were charged, and the pulverization process was performed for 40 minutes to obtain Comparative Carbon Nanotubes (6).

The following physical property values were measured by using the obtained carbon nanotubes, and the results are shown in the table.

<CNT Pore Size Distribution>

The pore diameter Z (nm) at the peak top in the pore size distribution of the carbon nanotubes having a diameter of 2 nm or more and 200 nm or less as determined by the BJH method is a pore diameter (nm) that measures a nitrogen adsorption isotherm and indicates a maximum value in the pore size range having a diameter of 2 nm or more and 200 nm or less. In the case where there are two or more maximum values in the pore size range of the diameter of 2 nm or more and 200 nm or less, the pore diameter (nm) with a higher peak is determined as the pore diameter Z (nm) at the peak top. The measurement procedure of the CNT pore size distribution is as follows. Firstly, before measuring the CNT pore size distribution, the carbon nanotubes were pre-processed by performing vacuum drying at a pre-processing temperature of 305°C and for a pre-processing time of 18 to 21 hours.

After the pre-processing, 0.04 to 0.07 g of CNT was weighed, and the nitrogen adsorption isotherm of the CNT was measured according to the nitrogen adsorption method by using a fully automatic specific surface area measurement device (Microtrac MRB, Belsorp MAX II) under the following conditions.

Adsorption temperature: 77K; Adsorbate: Nitrogen.

From the nitrogen adsorption isotherm of CNT, a BJH plot was calculated using the FHH standard curve recommended by Microtrac-Bel Co., Ltd., and the pore diameter Z (nm) at the peak top on the adsorption side was determined.

<d of Pore Volume = Integral Value of 10 to 80>

"d of Pore Volume = Integral Value of 10 to 80" refers to the ratio of the integral value of the pore volume having a diameter of 10 nm or more and 80 nm or less with respect to the integral value of the pore volume having a diameter of 2 nm or more and 200 nm or less in the pore size distribution, "d of Pore Volume = Integral Value of 10 to 80" was obtained by calculating the integral value of the pore volume having a diameter of 2 nm or more and 200 nm or less and the integral value of the pore volume having a diameter of 10 nm or more and 80 nm or less in the nitrogen adsorption isotherm as measured above.

<d of Pore Volume = Integral Value of 3 to 20>

"d of Pore Volume = Integral Value of 3 to 20" refers to the ratio of the integral value of the pore volume having a diameter of 3 nm to 20 nm with respect to the integral value of the pore volume having a diameter of 2 nm or more and 200 nm or less in the pore size distribution, "d of Pore Volume = Integral Value of 3 to 20" was obtained by calculating the integral value of the pore volume having a diameter of 2 nm or more and 200 nm or less and the integral value of the pore volume having a diameter of 3 nm to 20 nm in the nitrogen adsorption isotherm as measured above.

<Pore Volume>

The pore volume is the total pore volume obtained from the nitrogen adsorption amount when the relative pressure (p/p0) is 0.99. The pore volume was obtained from the nitrogen adsorption amount when the relative pressure (p/p0) was 0.99 in the nitrogen adsorption isotherm as measured above.

<Maximum Solvent Capability Y of CNT>

The maximum solvent absorption capability is the maximum mass of the solvent absorbed by the carbon nanotubes per unit mass of the carbon nanotubes when the carbon nanotubes absorb the solvent. The maximum mass of the solvent absorbed by the carbon nanotubes is the total mass of the solvent that has been dropped until the solvent flows from carbon nanotube powder when the solvent is dropped into the carbon nanotube powder. The maximum solvent absorption capability was measured according to the following procedures.

Firstly, before measurement, the carbon nanotubes were pre-processed by performing vacuum drying at a pre-processing temperature of 305°C and for a pre-processing time of 18 to 21 hours. Then, under the environment at 25°C, in a state in which the carbon nanotube powder of 5g (Vg) was dropped naturally into a container made of polypropylene, having a cylindrical shape, and exhibiting a diameter of 10 cm, stored, and placed stationarily, 0.5 g of N-methyl-2-pyrrolidone was dropped onto the surface of the carbon nanotube powder at one-minute intervals, and the total mass (Wg) of N-methyl-2-pyrrolidone having been dropped until the droplets of N-methyl-2-pyrrolidone started to flow from the surface of the carbon nanotube powder without being absorbed by the carbon nanotube powder was measured. The maximum solvent absorption capability was calculated from Formula 5.

Maximum solvent absorption capability (Y) = (mass (W) of absorbed N-methyl-2-pyrrolidone) / (mass (V) of carbon nanotube), (Formula 5)

In Formula 5, V refers to the mass of the carbon nanotubes, and W refers to the maximum mass of the absorbed N-methyl-2-pyrrolidone into the carbon nanotubes by dropping N-methyl-2-pyrrolidone into the carbon nanotubes of Vg under the environment of 25°C.

<Bulk Density X of CNT>

The bulk density X was measured according to the following procedures based on JIS K 5101-12-1.
Firstly, before measurement, the carbon nanotubes were pre-processed by performing vacuum drying at a pre-processing temperature of 305°C and for a pre-processing time of 18 to 21 hours. Then, in order to disintegrate the aggregates formed when the carbon nanotube powder was stored and cause the obtained sample to flow naturally into the test container until the sample overflew, a sufficient amount of the sample for performing the test was prepared through a 0.5 mm sieve. The prepared carbon nanotube powder was dropped naturally and contained in a stainless cylindrical container of 30 ml, the raised portion on the upper end surface of the container was cut off, and then, the mass of the carbon nanotube powder was obtained, and the bulk density X (g/cm$^3$) was obtained by dividing by the volume of the container.

<Averaged Outer Diameter of CNT>

An electronic balance (manufactured by Sartorius, MSA225S100DI) was used to weigh 0.2 g of CNT into a 450 mL SM sample bottle (manufactured by Sansho Co., Ltd.), 200 mL of toluene was added, an ultrasonic homogenizer (Advanced Digital Sonifer (registered trademark), MODEL 450DA, manufactured by BRANSON) was used, and a dispersion process was performed under ice cooling at an amplitude of 50% for 5 minutes to prepare a CNT dispersion liquid for measurement. Then, the CNT dispersion liquid was appropriately diluted, several μL was dropped onto a collodion film, dried at room temperature, and then directly observed by using a transmission electron microscope (H-7650, manufactured by Hitachi, Ltd.). For observation, multiple photos were taken at a magnification of 50,000 times, with 10 or more CNTs included in the field of view. The outer diameters of 300 arbitrarily extracted CNTs were measured, and the average value was defined as the averaged outer diameter (nm) of the CNT.

<Volume Resistivity of CNT>

A powder resistivity measurement device (Nitto Seiko Analytech Co., Ltd.: Loresta GP Powder Resistivity Measurement System MCP-PD-51) was used, the sample mass was set as 0.8g, and, the volume resistivity [Ω·cm] of the conductive powder was measured under various pressures by using an applied voltage limiter of 90V by using a powder probe unit (four probes/ring electrodes, electrode spacing: 5.0 mm, electrode radius: 1.0 mm, sample radius: 12.5 mm). The volume resistivity of CNT at a density of 1 g/cm$^3$ was evaluated.

<Specific Surface Area (BET) of CNT>

Firstly, before measuring the CNT pore size distribution, the carbon nanotubes were pre-processed by performing vacuum drying at a pre-processing temperature of 305°C and for a pre-processing time of 18 to 21 hours.
After the pre-processing, 0.04 to 0.07 g of CNT was weighed, and the nitrogen adsorption isotherm of the CNT was measured according to the nitrogen adsorption method by using a fully automatic specific surface area measurement device (Microtrac MRB, Belsorp MAX II) under the following conditions.
Adsorption temperature: 77K; Adsorbate: Nitrogen.
The specific surface area was calculated by using the BET method from the nitrogen adsorption isotherm of CNT.

<Manufacture of CNT Dispersion Liquid>

According to the prescriptions and the manufacturing conditions shown in Table 2, in Example 1-1, materials other than CNT were added to a stainless container. Then, 2.0 parts by mass of the CNT (1) was taken and added while being stirred by a dispersion machine, and a square hole high shear screen was attached to a high shear mixer (L5M-A, manufactured by SILVERSON), batch dispersion was carried out at a speed of 8,600 rpm until the entirety was uniform and the dispersed particle size was 250 μm or less using a grind gauge. At this time, the dispersed particle size confirmed with a grind gauge was 220 μm. Then, from the stainless container, the dispersed liquid was supplied to a high pressure homogenizer (Starburst Lab HJP-17007, manufactured by Sugino Machine Co., Ltd.) via a pipe, and the circulation-type dispersion process was performed. The dispersion process was performed by using a single nozzle chamber with a nozzle diameter of 0.25 mm and a pressure of 100 MPa. Dispersion was performed by repeating circulation until the viscosity of the dispersed liquid at 60 rpm measured with a B-type viscometer (manufactured by TOKISANGYO, VISCOMETER, MODEL: BL) was 3,000 mPa s or less. Then, 0.5 parts by mass of the CNT (1) was further added into the stainless container while being stirred by the dispersion machine, and the circulation-type dispersion process was performed again by using the high pressure homogenizer. The process of adding 0.5 parts by mass of the CNT (1) to the stainless container while being stirred by the dispersion machine after the dispersion was performed by repeating circulation until the viscosity was 3,000 mPa·s or less by using the high pressure homogenizer was repeated six times in total (the total Added amount of the CNT (1) was 5.0 parts by mass). Then, the pass-type dispersion process was performed in the high pressure homogenizer until a total of 30 times was reached, and a CNT dispersion liquid 1-1 containing 5.0 parts by mass of CNT was obtained.

In other Examples 1-2 to 1-16, 2-1 to 2-2, 3-1 to 3-16, 4-1 to 4-2, 5-1 to 5-2, 6-1 to 6-2, 7-1 to 7-2, 8-1 to 8-16, 9-1 to 9-16, 10-1 to 10-2, and 11-1 to 11-2, and Comparative Examples 1-1 to 1-2, 2-1 to 2-2, 4-1, 5-1, 6-1, and 7-1, except that the prescriptions and manufacture conditions shown in Table 2 were changed, the CNT dispersion liquids were obtained like Example 1-1. In Example 1-17, the substance dispersed by using the high pressure homogenizer in the same procedures as Example 12 was additionally dispersed by using a bead mill to obtain the CNT dispersion liquid. Regarding the bead mill, "SC100" manufactured by Nippon Coke was used to carry out the circulation dispersion with a residence time of 5 minutes under the condition of the bead size at 1.25 mm, the bead filling rate of 60%, the peripheral velocity at 10m/s, and the supply speed of 800 g/min. In Comparative Examples 2-1 and 2-2, the comparative CNT (2) was used in place of the CNT (1), and the usage amount of the comparative CNT (2) was a half of the usage amount of the CNT (1) of Example 1-1.

According to the prescriptions and the manufacturing conditions shown in Table 2, in Embodiment 13-1, materials other than CNT were added to a stainless container. Then, 0.5 parts by mass of the CNT (13) was added while being stirred by a dispersion machine, and a square hole high shear screen was attached to a high shear mixer (L5M-A, manufactured by SILVERSON), batch dispersion was carried out at a speed of 8,600 rpm until the entirety was uniform and the dispersed particle size was 250 $\mu$m or less using a grind gauge. At this time, the dispersed particle size confirmed with a grind gauge was 220 $\mu$m. Then, from the stainless container, the dispersed liquid was supplied to a high pressure homogenizer (Starburst Lab HJP-17007, manufactured by Sugino Machine Co., Ltd.) via a pipe, and the circulation-type dispersion process was performed. The dispersion process was performed by using a single nozzle chamber with a nozzle diameter of 0.25 mm and a pressure of 100 MPa. Dispersion was performed by repeating circulation until the viscosity of the dispersed liquid at 60 rpm measured with a B-type viscometer (manufactured by TOKISANGYO, VISCOMETER, MODEL: BL) was 3,000 mPa s or less. Then, 0.5 parts by mass of the CNT (13) was further added into the stainless container while being stirred by the dispersion machine, and the circulation-type dispersion process was performed again by using the high pressure homogenizer. The process of adding 0.5 parts by mass of the CNT (13) to the stainless container while being stirred by the dispersion machine after dispersion was performed by repeating circulation until the viscosity was 3,000 mPa·s or less by using the high pressure homogenizer was repeated four times in total (the total Added amount of the CNT (13) was 2.5 parts by mass). Then, the pass-type dispersion process was performed in the high pressure homogenizer until a total of 30 times was reached, and a CNT dispersion liquid 13-1 containing 2.5 parts by mass of CNT was obtained.

In other Examples 12-1 to 12-2, 13-2 to 13-16, 14-1 to 14-16, 15-1 to 15-2, and 16-1 to 16-2, and Comparative Examples 3-1, 3-2, 6-1, and 8-2, except that the prescriptions and manufacture conditions shown in Table 3 were changed, the CNT dispersion liquids were obtained like Example 13-1.

The following physical property values were measured by using the obtained CUT distribution liquid, and the results are shown in the table.

The dispersant used in the manufacture of the CNT dispersion liquid is as follows:

PVP: Polyvinylpyrrolidone "K-30" (manufactured by Nippon Shokubai Co., Ltd.)
PVA: Kuraray Poval "PVA-403" (manufactured by Kuraray Co., Ltd.), Polyvinyl alcohol (averaged degree of polymerization 300, degree of saponification 87.0-89.0 mol%)
ZETPOLE2000L: Hydrogenated nitrile rubber, manufactured by Nippon Zeon Co., Ltd.
ZETPOLE2010L: Hydrogenated nitrile rubber, manufactured by Nippon Zeon Co., Ltd.
Therban 3404: Hydrogenated butadiene acrylonitrile copolymer, manufactured by LANXESS
Therban 3406: Hydrogenated butadiene acrylonitrile copolymer, manufactured by LANXESS
Therban 4307: Hydrogenated butadiene acrylonitrile copolymer, manufactured by LANXESS CMC: Carboxymethyl cellulose sodium salt "Sunrose A APP-84" (manufactured by Nippon Paper
Industries Co., Ltd., weight average molecular weight 17600)
PAN: Copolymer of acrylonitrile and acrylic acid, synthesized with the following formulation
PAA: Polyacrylic acid, manufactured by Fujifilm Wako Pure Chemical Industries, Ltd., average molecular weight 25,000

The additives used in the preparation of the CNT dispersion liquid were 2-aminoethanol, NaOH, and $Na_2CO_3$.

<PAN: Synthesis of Copolymer of Acrylonitrile and Acrylic acid>

100 parts of acetonitrile were charged into a reaction vessel equipped with a gas inlet tube, a thermometer, a condenser, and a stirrer, and the mixture was replaced with nitrogen gas. The inside of the reaction vessel was heated to 75°C, the mixture of 90.0 parts of acrylonitrile, 10.0 parts of acrylic acid, and 5.0 parts of 2,2'-azobis(2,4-dimethylvaleronitrile) ("V-65" manufactured by NOF Corporation) were dropped for three hours, and a polymerization reaction was performed. After the dropping ended, after further reacting at 75°C for 1 hour, 0.5 part of perbutyl O was added, and the reaction was further continued at 75°C for 1 hour. Then, it was confirmed by the non-volatile content measurement that the conversion rate exceeded 98%, and the dispersion medium was completely removed by concentration under reduced pressure to obtain a copolymer of acrylonitrile and acrylic acid. The weight average molecular weight (Mw) of the copolymer of acrylonitrile and acrylic acid was 45,000.

<Measurement of Initial Viscosity of CNT Dispersion Liquid>

Regarding the viscosity value measurement, using a B-type viscometer ("BL" manufactured by Toki Sangyo Co., Ltd.), the CNT dispersion liquid can be sufficiently stirred with a spatula at a temperature of 25°C., and then the viscosity can be measured at the B-type viscometer rotor rotation speed of 60 rpm. The rotor used in the measurement was No. 1 in the case where the viscosity value was less than 100 mPa·s, No. 2 in the case where the viscosity value was 100 mPa·s or more and less than 500 mPa·s, No. 3 in the case where the viscosity value was 500 mPa·s or more and less than 2,000 mPa s, and No. 4 in the case where the viscosity value was 2,000 mPa·s or more and less than 10,000 mPa·s. The lower the viscosity, the better the dispersibility, and the higher the viscosity, the worse the dispersibility. If the obtained dispersion liquid exhibits clear separation or sedimentation, the dispersibility of the dispersion liquid was judged as poor.

Criteria

◎: less than 500 mPa's
○: 500 mPa·s or more and less than 2000 mPa·s
△: 2000 mPa s or more and less than 10000 mPa s
×: 10000 mPa·s or more, exhibiting separation or sedimentation

<Evaluation on Storage Stability of CNT Dispersion Liquid>

Storage stability was evaluated based on the following criteria based on changes in liquid properties after the CNT dispersion liquid was stored at 50°C for 7 days. Changes in liquid properties were determined from the ease with which the CNT dispersion was stirred with a spatula. Criteria

◎: like the initial stage

○: viscosity changes slightly

△: viscosity increases but no gelation

×: gelled

<Method for Measuring Gloss>

For the sample for gloss measurement, 1 mL of the CNT dispersion liquid was dropped onto a smooth glass substrate, and after coating with a No. 7 bar coater at 2 cm/sec, the liquid was baked in a hot air oven at 140°C for 10 minutes and left to cool. The coating area was approximately 10cm × 10cm. Using a gloss meter (BYK Gardner gloss meter micro-gloss 60°), three positions on the coated surface, excluding the end parts, were randomly selected, and the average value of each measurement can be taken as the gloss at 60°.

Criteria

○: 50 or more

○: 30 or more and less than 50

△: 10 or more and less than 30

×: less than

<Complex Modulus of Elasticity of CNT Dispersion Liquid>

The complex modulus elasticity of the CNT dispersion liquid was evaluated by using a rheometer (RheoStress 1 rotation rheometer manufactured by Thermo Fisher Scientific Co., Ltd.) with a cone having a diameter of 35 mm and 2°, and carrying out viscoelasticity measurement at 25°C and a frequency of 1 Hz in the strain rate range of 0.01% to 5%.

Criteria

◎: 5 Pa or more and less than 50 Pa

○: 1 Pa or more and less than 5 Pa, or 50 Pa or more and 100 Pa or less

×: Less than 1 Pa or exceeding 100 Pa

<Particle Size (D50) of CNT Dispersion Liquid>

The 50% particle size was measured by using a particle size distribution analyzer (Partical LA-960V2, manufactured by Horiba, Ltd.). Circulation/ultrasonic operating conditions were: circulation speed: 3, ultrasound intensity: 7, ultrasound time: 1 minute, stirring speed: 1, and stirring mode: continuous. Further, during air removal, ultrasonic operation was performed at the ultrasonic intensity of 7 and the ultrasonic time of 5 seconds. The refractive index of NMP was 1.468, the refractive index of water was 1.333, and the refractive index of carbon material was 1.92. The measurement was performed after the measurement sample was diluted so that the transmittance of the red laser diode was 60 to 80%, and the particle size standard was based on volume.

Criteria

◎: 0.4 $\mu$m or more and 5 $\mu$m or less

○: more than 5 $\mu$m and 10 $\mu$m or less

×: less than 0.4 $\mu$m or exceeding 10 $\mu$m

<Charge Properties>

In the manufacture of the CNP dispersion liquids of Examples 1-1 to 1-17, 2-1 to 2-2, 3-1 to 3-16, 4-1 to 4-2, 5-1 to 5-2, 6-1 to 6-2, 7-1 to 7-2, 8-1 to 8-16, 9-1 to 9-16, 10-1 to 10-16, 11-1 to 11-2, Comparative Examples 1-1 to 1-2, 2-1 to 2-2, 4-1, 5-1, 6-1, 7-1 (may be referred to as Examples 1 to 11 and Comparative Examples 1 to 2, 4 to 7), the charge properties were evaluated based on the following criteria from the achieved CNT concentration at the time point when the sixth circulation was completed during the period of repeating the process of adding 0.5 parts by mass of the CNT to the stainless container while being stirred by the dispersion machine after dispersion was performed by repeating circulation until the viscosity was 3,000 mPa·s or less by using a high pressure homogenizer. It was determined that the higher the CNT concentration at the time point when the sixth circulation was completed, the better the charge properties.

Criteria

◎: More than 4 parts by mass;

○: More than 3 parts by mass and 4 parts by mass or less

△: More than 2 parts by mass and 3 parts by mass or less

✕: 2 parts by mass or less

<Charge Properties>

In the manufacture of the CNP dispersion liquids of Examples 12-1 to 12-12, 13-1 to 13-16, 14-1 to 14-16, 15-1 to 15-2, 16-1 to 16-2, Comparative Examples 3-1, 3-2, 8-1 (may be referred to as Examples 12 to 16 and Comparative Examples 3, 8), the charge properties were evaluated based on the following criteria from the achieved CNT concentration at the time point when the tenth circulation was completed during the period of repeating the process of adding 0.5 parts by mass of the CNT to the stainless container while being stirred by the dispersion machine after dispersion was performed by repeating circulation until the viscosity was 3,000 mPa·s or less by using a high pressure homogenizer. It was determined that the higher the CNT concentration at the time point when the tenth circulation is completed, the better the charge properties.

Criteria

◎: More than 1.5 parts by mass;

○: More than 1 part by mass and 1.5 parts by mass or less

△: More than 0.5 parts by mass and 1 part by mass or less

✕: 0.5 parts by mass or less

<Manufacture of Positive Electrode Slurry and Positive Electrode>

According to the prescriptions shown in Table 3, in Example 1-1, after adding a CNT dispersion liquid 1-1 and NMP as the same medium as the CNT dispersion liquid to a plastic container with a capacity of 150 cm$^3$, stirring was performed at 2,000 rpm for 30 seconds by using a rotation/revolution mixer (Awatori Rentaro, ARE-310, manufactured by Thinky Co., Ltd.), and then , NMC was added as a positive electrode active material, and stirring was performed at 2,000 rpm for 150 seconds by using the rotation/revolution mixer (Awatori Rentaro, ARE-310, manufactured by Thinky Co., Ltd.). Thereafter, PVDF was added as a binder resin , and stirring was performed for 30 seconds at 2,000 rpm by using the rotation/revolution mixer (Awatori Rentaro, ARE-310, manufactured by Thinky Co., Ltd.) to obtain a positive electrode composite slurry. The non-volatile components of the positive electrode composite slurry were 75% by mass. Among the non-volatile components of the positive electrode composite slurry, the ratio of active material: CNT: binder resin was 98.2:0.3:1. In addition, positive electrode composite slurries were similarly obtained in Examples 12 to 16 and Comparative Examples 3 and 8. Among the non-volatile components of the positive electrode composite slurries in Examples 12 to 16 and Comparative Examples 3 and 8, the ratio of active material: CNT: binder resin was 98.25:0.25:1.5.
The positive electrode composite slurry of Example 1-1 was coated onto an aluminum foil with a thickness of 20 μm by using an applicator, and then dried in an electric oven at 120°C ± 5°C for 25 minutes to prepare an electrode film.. Then, the electrode film was rolled using a roll press (manufactured by Thank-Metal Co., Ltd., 3t hydraulic roll press) to obtain a positive electrode (positive electrode 3a). The basis weight per unit of the composite layer was 20 mg/cm$^2$, and the density of the composite layer after the rolling process was 3.2 g/cc.
According to the prescriptions shown in Table 3, in Example 1-13, after adding a CNT dispersion liquid 1-13 and water as a medium to a plastic container with a capacity of 150 cm$^3$, stirring was performed at 2,000 rpm for 30 seconds by using the rotation/revolution mixer (Awatori Rentaro, ARE-310, manufactured by Thinky Co., Ltd.), and then , LFP was added as a positive electrode active material, and stirring was performed at 2,000 rpm for 150 seconds by using the rotation/revolution mixer (Awatori Rentaro, ARE-310, manufactured by Thinky Co., Ltd.). Thereafter, PTFE was added as a binder resin , and stirring was performed for 30 seconds at 2,000 rpm by using the rotation/revolution mixer (Awatori Rentaro, ARE-310, manufactured by Thinky Co., Ltd.) to obtain a positive electrode composite slurry. The non-volatile components of the positive electrode composite slurry were 50% by mass. Among the non-volatile components of the positive electrode composite slurry, the ratio of active material: CNT: binder resin was 97.5:1.0:1.5. In addition, positive electrode composite slurries were similarly obtained in Examples 12 to 16 and Comparative Examples 3 and 8. Among the non-volatile components of the positive electrode composite slurries in Examples 12 to 16 and Comparative Examples 3 and 8, the ratio of active material: CNT: binder resin was 97.2:0.8:1.5.

The positive electrode composite slurry of Example 1-13 was coated onto an aluminum foil with a thickness of 20 $\mu$m by using an applicator, and then dried in an electric oven at 120°C $\pm$ 5°C for 25 minutes to prepare an electrode film. Then, the electrode film was rolled using a roll press (manufactured by Thank-Metal Co., Ltd., 3t hydraulic roll press) to obtain a positive electrode (positive electrode 15a). The basis weight per unit of the composite layer was 20 mg/cm$^2$, and the density of the composite layer after the rolling process was 2.1 cc.

In the case where the active material is NMC, other positive electrodes were manufactured in the same manner as the positive electrode 3a except that the CNT dispersion liquid was changed according to the recipe shown in Table 3, and in the case where the active material is LFP, other positive electrodes were manufactured in the same manner as the positive electrode 15a except that the CNT dispersion liquid was changed according to the recipe shown in Table 3.

The used components are as follows.

Active material "NMC": NCM523 (manufactured by Nippon Chemical Industry Co., Ltd., composition: LiNi$_{0.5}$Co$_{0.2}$Mn$_{0.3}$O$_2$, solid content 100%)
Active material "LFP": Lithium iron phosphate HED (trademark) LFP-400 (manufactured by BASF, non-volatile content 100%)
Binder resin "PVDF": Polyvinylidene fluoride (Solef #5130 (manufactured by Solvey Corporation), solid content 100%)
Binder resin "PTFE": Polytetrafluoroethylene, Polyflon "PTFED-210C" (manufactured by Daikin Industries, Ltd., non-volatile content 60%)

<Method for Evaluating Conductivity of Positive Electrode>

The surface resistivity ($\Omega/\square$) of the composite layer of the obtained positive electrode was measured by using Loresta GP, MCP-T610 manufactured by Nitto Seiko Analytech Co., Ltd. After the measurement, the volume resistivity ($\Omega \cdot cm$) of the positive electrode was obtained by multiplying the thickness of the composite layer. The thickness of the composite layer was determined by subtracting the film thickness of the aluminum foil from the average value measured at three points in the electrode to obtain the volume resistivity (Q - cm) of the positive electrode by using a film thickness meter (manufactured by NIKON Corporation, DIGIMICROMH-15M).

Criteria

◎: less than 10 $\Omega \cdot cm$

○: 10 $\Omega \cdot cm$ or more and less than 20 $\Omega \cdot cm$

×: 20 $\Omega \cdot cm$ or more

<Manufacture of Negative Electrode Slurry and Negative Electrode>

According to the prescriptions and manufacture conditions shown in Table 4, in Example 1-13, after adding a CNT dispersion liquid and water as the same medium as the CNT dispersion liquid to a plastic container with a capacity of 150 cm$^3$, and stirring was performed at 2,000 rpm for 30 seconds by using a rotation/revolution mixer (Awatori Rentaro, ARE-310, manufactured by Thinky Co., Ltd.). Then, artificial graphite and silicon were added as the negative electrode active materials, and stirring was performed at 2,000 rpm for 150 seconds by using the rotation/revolution mixer. Thereafter, CMC, SBR were added, and stirring was performed for 30 seconds at 2,000 rpm by using the rotation/revolution mixer to obtain a negative electrode composite slurry. The non-volatile components of the negative electrode composite slurry were 48% by mass. Among the non-volatile components of the negative electrode composite slurry, the ratio of artificial graphite: silicon: CNT: CMC: SBR was 87:10:0.5:1:1.5. In addition, negative electrode composite slurries were similarly obtained in Examples 12 to 16 and Comparative Examples 3 and 8. Among the non-volatile components of the positive electrode composite slurries in Examples 12 to 16 and Comparative Examples 3 and 8, the ratio of artificial graphite: silicon: CNT: CMC: SBR was 87.1:10:0.4: 1.5.

The obtained negative electrode composite slurry was coated onto an aluminum foil with a thickness of 20 $\mu$m by using an applicator, and then the coating film was dried in an electric oven at 120°C $\pm$ 5°C for 25 minutes to prepare an electrode film.. Then, the electrode film was rolled using a roll press (manufactured by Thank-Metal Co., Ltd., 3t hydraulic roll press) to obtain a negative electrode (negative electrode 15a). The basis weight per unit of the composite layer was 10 mg/cm$^2$, and the density of the composite layer after the rolling process was 1.6 g/cc.

Other negative electrodes were manufactured in the same manner as the negative electrode 15a, except that the CNT dispersion, the active material, and the binder resin shown in Table 4 were used in their respective contents.

The used components are as follows.

Artificial graphite: CGB-20 (manufactured by Nippon Graphite Industries Co., Ltd., non-volatile content 100%)

Silicon: Silicon monoxide (manufactured by Osaka Titanium Technologies Co., Ltd., SILICONMONOOXIDE, SiO 1.3C, 5 μm, non-volatile content 100%)

Binder resin "CMC": MAC500LC (carboxymethylcellulose sodium salt Sunrose special type MAC500LC, manufactured by Nippon Paper Industries Co., Ltd., non-volatile content 100%) Binder resin "SBR": Styrene-butadiene rubber TRD2001 (manufactured by JSR Corporation, non-volatile content 48%)

<Method for Evaluating Conductivity of Negative Electrode>

The conductivity of the obtained negative electrode was evaluated in the same manner as the negative electrode except that copper foil was used instead of aluminum foil.

Criteria

◎: less than 0.3 Ω·cm

○: 0.3 Ω·cmor more and less than 0.5 Ω·cm

×: 0.5 Ω·cmor more

<Preparation of Standard Positive Electrode>

As the positive electrode active material, 69.0 parts by mass of LFP (RED (trademark) LFP-400, manufactured by BASF, non-volatile content 100%), acetylene black (Denka Black (registered trademark) HS-100, manufactured by Denka, non-volatile content 100%) 3.0 parts by mass, and 1.2 parts by mass of MAC500LC (carboxymethylcellulose sodium salt Sunrose special type MAC500LC, manufactured by Nippon Paper Industries Co., Ltd., non-volatile content 100%) were added to a plastic container with a capacity of 150 ml. Then, the powder was mixed by using a spatula until uniform. Then, 65.4 parts by mass of water was added and stirring was performed for 30 seconds at 2,000 rpm by using a rotation/revolution mixer (Awatori Rentaro, ARE-310, manufactured by Thinky Co., Ltd.). Then, the mixture in the plastic container was mixed until uniform by using a spatula, and 3.0 parts by mass of PTFE (manufactured by Daikin, non-volatile content 60% by mass) was added and stirring was performed at 2,000 rpm for 30 seconds by using the above-mentioned rotation/revolution mixer. Furthermore, 8.4 parts by mass of water was added, and stirring was performed for 30 seconds at 2,000 rpm by using the rotation/revolution mixer. Finally, stirring was performed for 10 minutes at 3,000 rpm by using a high-speed stirrer to obtain a standard positive electrode composite slurry. The non-volatile components of the standard positive electrode composite slurry were 50% by mass.

After coating the standard positive electrode composite slurry onto an aluminum foil with a thickness of 20 μm serving as a current collector by using an applicator, the electrode was dried at 120°C±5°C for 25 minutes in an electric oven to adjust the basis weight per unit area of the electrode to 20 mg/cm$^2$. Moreover, a standard positive electrode having a composite layer density of 2.1 g/cm$^3$ was manufactured by rolling with a roll press (3-ton hydraulic roll press manufactured by Thank-Metal Co., Ltd.).

<Preparation of Standard Negative Electrode>

After adding 0.5 parts by mass of acetylene black (Denka Black (registered trademark) HS-100, manufactured by Denka), 1 part by mass of MAC500LC (carboxymethylcellulose sodium salt Sunrose special type MAC500LC, manufactured by Nippon Paper Industries Co., Ltd., non-volatile content 100%), and 98.4 parts by mass of water to a plastic container with a capacity of 150 ml, stirring was performed for 30 seconds at 2,000 rpm by using a rotation/revolution mixer (Awatori Rentaro, ARE-310, manufactured by Thinky Co., Ltd.). In addition, as active materials, 87 parts by mass of artificial graphite (CGB-20, manufactured by Nippon Graphite Industries Co., Ltd.) and 10 parts by mass of silicon were added, and stirring was performed for 150 seconds at 2,000 rpm by using a rotation/revolution mixer (Awatori Rentaro, ARE-310, manufactured by Thinky Co., Ltd.). Then, 3.1 parts by mass of SBR (TRD2001, manufactured by JSR) was added, and stirring was performed for 30 seconds at 2,000 rpm by using a rotation/revolution mixer (Awatori Rentaro, ARE-310, manufactured by Thinky Co., Ltd.), and a standard negative electrode composite slurry was stirred. The non-volatile components of the standard negative electrode composite slurry were 50% by mass.

After coating the standard negative electrode composite slurry onto a copper foil with a thickness of 20 μm serving as a current collector by using an applicator, the electrode was dried at 80°C±5°C for 25 minutes in an electric oven to adjust the basis weight per unit area of the electrode to 10 mg/cm$^2$. Moreover, a standard negative electrode having a composite layer density of 1.6 g/cm$^3$ was manufactured by rolling with a roll press (3-ton hydraulic roll press manufactured by Thank-Metal Co., Ltd.).

<Manufacture of Nonaqueous Electrolyte Secondary Battery>

The manufactured negative and positive electrodes were used and punched into 50 mm × 45 mm and 45 mm × 40 mm, respectively, a separator (porous polypropylene film) was inserted in between, and the components were inserted into an aluminum laminate bag and dried in an electric oven at 70°C for 1 hour. Then, 2 mL of an electrolyte (a nonaqueous electrolyte prepared by preparing a mixed solvent by mixing ethylene carbonate, dimethyl carbonate, and diethyl carbonate at a volume ratio of 1:1:1, as an additive, adding 1 part by mass of vinylene carbonate relative to 100 parts by mass, and dissolving LiPF$_6$ at a concentration of 1M) was injected into a glove box filled with argon gas, and aluminum laminate was sealed to manufacture each nonaqueous electrolyte secondary battery was each manufactured.

<Method for Evaluating Rate Properties of Nonaqueous Electrolyte Secondary Battery> The obtained non-aqueous electrolyte secondary battery was placed in a constant temperature room at 25°C, and charging and discharging measurements were performed by using a charging and discharging device (manufactured by Hokuto Denko Co., Ltd., SM-8). After performing constant-current constant-voltage charging (cutoff current 1 mA (0.02 C)) at a charging current of 10 mA (0.2 C) and a charging end voltage of 4.3 V, constant current discharging was performed at a discharging current of 10 mA (0.2 C) and a discharging end voltage of 3V. After repeating the operation for three times, at a charging current of 10 mA (0.2 C), at the charging end voltage of 4.3 V in the case where the positive electrode active material is NMC, and at the charging end voltage of 3.8 V in the case where the positive electrode active material is LFP, constant-current constant-voltage charging (cutoff current (1 mA (0.02 C))) was performed, Constant-current discharging was performed at discharging currents of 0.2 C and 3 C until the discharging end voltage reached 3.0V, and the discharging capacity was determined, respectively. The rate characteristic can be expressed by the ratio between the discharging capacity of 0.2 C to the discharging capacity of 3 C, and Equation 1 as follows:

Rate characteristics = discharging capacity of 3C / discharging capacity of 0.2 C of the third time × 100 (%)  (Equation 1)

Criteria

◎: 80% or more

O: 60% or more and less than 80%

×: less than 60%

<Method for Evaluating Cycle Properties of Nonaqueous Electrolyte Secondary Battery>

The obtained nonaqueous electrolyte secondary battery was placed in a constant temperature room at 25°C, and charging and discharging measurements were performed by using a charging and discharging device (manufactured by Hokuto Denko Co., Ltd., SM-8). At a charging current of 25 mA (0.5 C), at the charging end voltage of 4.3 V in the case where the positive electrode active material is NMC, and at the charging end voltage of 3.8 V in the case where the positive electrode active material is LFP, constant-current constant-voltage charging (cutoff current 2.5 mA (0.05 C)) was performed, and constant-current discharging was performed at a discharging current of 25 mA (0.5 C) and a discharging end voltage of 3V. The operation is repeated 200 times. The cycle characteristic can be expressed by the ratio between the discharging capacity of 0.5 C of the third time to the discharging capacity of 0.5 C of the 200$^{th}$ time, and Equation 2 as follows:

Cycle characteristics = discharging capacity of 0.5 C of the third time / discharging capacity of 0.5 C of the 200$^{th}$ time $\times$ 100 (%)     (Equation 2)

Criteria

O: 85% or more

O: 80% or more and less than 85%

$\times$: less than 80%

[Table 1]

Table 1

| | Manufacturing Condition | | | | | Pore size Z at peak top nm | Integral value of pore volume of d = 10 nm to 80 nm | Integral value of pore volume of d = 3 nm to 20 nm | Pore volume p/p0 = 0.99 cm³/g | Volume density X g/cm³ | Maximum solvent absorption capability Y - | Averaged outer diameter nm | Volume resistivity ×10⁻² [Ω·cm] | BET specific surface area m²/g |
|---|---|---|---|---|---|---|---|---|---|---|---|---|---|---|
| | Pulverization device | Raw CNT Type | Bead size mm | Operation condition kg/h | Circumferential speed m/s | | | | | | | | | |
| Comparative Example 1 | - | BT1003M | - | - | - | 109 | 30.0% | 5.8% | 2.65 | 0.113 | 15 | 13 | 1.52 | 182 |
| Example 1 | Dynamic mill | BT1003M | 8 | 10.0 | 5.0 | 80 | 61.2% | 8.8% | 1.99 | 0.080 | 16.5 | 13 | 1.66 | 212 |
| Example 2 | Dynamic mill | BT1003M | 8 | 5.0 | 5.0 | 45 | 63.3% | 10.4% | 1.68 | 0.085 | 14.5 | 13 | 1.74 | 227 |
| Example 3 | Dynamic mill | BT1003M | 8 | 3.3 | 5.0 | 45 | 70.4% | 16.4% | 1.48 | 0.088 | 11 | 13 | 1.99 | 246 |
| Example 4 | Dynamic mill | BT1003M | 8 | 1.0 | 5.0 | 45 | 71.3% | 21.3% | 1.13 | 0.107 | 7.5 | 13 | 2.40 | 281 |
| Example 5 | Dynamic mill | BT1003M | 3 | 10.0 | 5.0 | 80 | 60.3% | 8.1% | 2.07 | 0.070 | 17.5 | 13 | 1.60 | 208 |
| Example 6 | Dynamic mill | BT1003M | 3 | 3.3 | 5.0 | 45 | 69.5% | 15.0% | 1.57 | 0.087 | 11.5 | 13 | 1.91 | 231 |
| Comparative Example 2 | - | JENOTUBE 10B | - | - | - | 95 | 44.3% | 6.1% | 2.46 | 0.045 | 20 | 9 | 1.26 | 204 |
| Example 7 | Dynamic mill | JENOTUBE 10B | 8 | 15.0 | 5.0 | 70 | 52.1% | 10.2% | 2.13 | 0.057 | 19 | 9 | 1.31 | 207 |
| Example 8 | Dynamic mill | JENOTUBE 10B | 8 | 10.0 | 5.0 | 45 | 64.2% | 13.5% | 1.86 | 0.068 | 17 | 9 | 1.41 | 220 |
| Example 9 | Dynamic mill | JENOTUBE 10B | 8 | 3.3 | 5.0 | 45 | 64.0% | 28.1% | 1.62 | 0.098 | 13 | 9 | 1.58 | 330 |
| Example 10 | Dynamic mill | JENOTUBE 10B | 3 | 10.0 | 5.0 | 45 | 69.4% | 12.1% | 1.97 | 0.065 | 18 | 9 | 1.34 | 216 |
| Example 11 | Dynamic mill | JENOTUBE 10B | 3 | 3.3 | 5.0 | 45 | 64.7% | 23.3% | 1.67 | 0.080 | 16.5 | 9 | 1.46 | 307 |
| Comparative Example 3 | - | JENOTUBE 6A | - | - | - | 25.0 | 67.7% | 41.6% | 2.25 | 0.042 | 20.0 | 6 | 1.52 | 690 |

(continued)

| | Manufacturing Condition | | | | | Pore size Z at peak top nm | Integral value of pore volume of d = 10 nm to 80 nm | Integral value of pore volume of d = 3 nm to 20 nm | Pore volume p/p0 = 0.99 cm$^3$/g | Volume density X g/cm$^3$ | Maximum solvent absorption capability Y - | Averaged outer diameter nm | Volume resistivity $\times 10^{-2}$ [$\Omega \cdot$cm] | BET specific surface area m$^2$/g |
|---|---|---|---|---|---|---|---|---|---|---|---|---|---|---|
| | Pulverization device | Raw CNT Type | Bead size mm | Operation condition kg/h | Circumferential speed m/s | | | | | | | | | |
| Example 12 | Dynamic mill | JENOTUBE 6A | 8 | 8.0 | 5.0 | 12.5 | 45.0% | 52.0% | 1.81 | 0.078 | 16.0 | 6 | 1.67 | 736 |
| Example 13 | Dynamic mill | JENOTUBE 6A | 8 | 3.3 | 5.0 | 8.3 | 37.7% | 61.2% | 1.20 | 0.133 | 12.4 | 6 | 1.87 | 784 |
| Example 14 | Dynamic mill | JENOTUBE 6A | 8 | 1.1 | 5.0 | 4.4 | 22.3% | 60.9% | 0.88 | 0.215 | 6.7 | 6 | 2.82 | 828 |
| Example 15 | Dynamic mill | JENOTUBE 6A | 3 | 3.3 | 5.0 | 10.9 | 42.5% | 56.4% | 1.29 | 0.128 | 13.8 | 6 | 1.80 | 731 |
| Example 16 | Dynamic mill | JENOTUBE 6A | 3 | 1.7 | 5.0 | 6.4 | 29.4% | 58.9% | 1.14 | 0.167 | 11.2 | 6 | 2.08 | 771 |
| Comparative Example 4 | Dynamic mill | BT1003M | 8 | 0.5 | 5.0 | 39 | 73.1% | 35.0% | 0.95 | 0.128 | 5 | 13 | 3.07 | 311 |
| Comparative Example 5 | Dynamic mill | AMC® | 8 | 3.3 | 5.0 | 45 | 59.7% | 13.8% | 1.06 | 0.089 | 7.5 | 10 | 2.15 | 241 |
| Comparative Example 6 | Paint oscillator | JENOTUBE 10B | 2 | 40 min. | - | 80 | 51.0% | 6.3% | 2.31 | 0.038 | 18.0 | 9 | 1.42 | 209 |
| Comparative Example 7 | Dynamic mill | JENOTUBE 10B | 3 | 0.5 | 3.0 | 39 | 71.4% | 46.8% | 1.08 | 0.096 | 12.5 | 13 | 2.87 | 331 |
| Comparative Example 8 | Dynamic mill | JENOTUBE 6A | 8 | 0.8 | 5.0 | 3.5 | 21.1% | 60.3% | 0.67 | 0.229 | 5.7 | 6 | 3.11 | 856 |

[Table 2-1]

[Table 2-1]

Table 2-1

| | Processed CNT | | Dispersant | | Additive | | Dispersion medium | | Dispersion condition | | Preparation property | CNT dispersion liquid | | | | |
|---|---|---|---|---|---|---|---|---|---|---|---|---|---|---|---|---|
| | Type | Added amount | Type | Added amount | Type | Added amount | Type | Added amount | Dispersion machine | Pass times | | Complex elastic modulus | Gloss | D50 | Initial viscosity | Storage stability |
| | - | Part(s) | - | Part(s) | - | Part(s) | - | Part(s) | - | Times | - | Pa | - | μm | - | - |
| Comparative Example 1-1 | Comparative Example 1 | 5 | PVP | 1 | 2-aminoethanol | 0.25 | NMP | 93.75 | Star burst | 30 | △ | × | ○ | △ | △ | × |
| Comparative Example 1-2 | Comparative Example 1 | 5 | PVP | 1 | 2-aminoethanol | 0.25 | Water | 93.75 | Star burst | 30 | △ | × | △ | × | △ | × |
| 1-1 | 1 | 5 | PVA | 1 | 2-aminoethanol | 0.25 | NMP | 93.75 | Star burst | 30 | ○ | ○ | ○ | ○ | ○ | △ |
| 1-2 | 1 | 5 | PVP | 1 | 2-aminoethanol | 0.25 | NMP | 93.75 | Star burst | 30 | ○ | ○ | ○ | ○ | ○ | ○ |
| 1-3 | 1 | 5 | ZETPOLE 2000 | 1 | - | | NMP | 94.00 | Star burst | 30 | ○ | ○ | ◎ | ◎ | ○ | ◎ |
| 1-4 | 1 | 5 | ZETPOLE 2000 | 1 | NaOH | 0.04 | NMP | 93.96 | Star burst | 30 | ◎ | ◎ | ◎ | ◎ | ◎ | ○ |
| 1-5 | 1 | 5 | ZETPOLE 2010 | 1 | - | | NMP | 94.00 | Star burst | 30 | ○ | ○ | ◎ | ◎ | ○ | ◎ |
| 1-6 | 1 | 5 | ZETPOLE 2010 | 1 | NaOH | 0.04 | NMP | 93.96 | Star burst | 30 | ○ | ◎ | ◎ | ◎ | ◎ | ○ |
| 1-7 | 1 | 5 | Therban 3404 | 1 | - | | NMP | 94.00 | Star burst | 30 | ○ | ○ | ◎ | ◎ | ○ | ◎ |
| 1-8 | 1 | 5 | Therban 3404 | 1 | NaOH | 0.04 | NMP | 93.96 | Star burst | 30 | ◎ | ◎ | ◎ | ◎ | ◎ | ○ |

| | Processed CNT | | Dispersant | | Additive | | Dispersion medium | | Dispersion condition | | Preparation property | CNT dispersion liquid | | | | |
|---|---|---|---|---|---|---|---|---|---|---|---|---|---|---|---|---|
| | Type | Added amount | Type | Added amount | Type | Added amount | Type | Added amount | Dispersion machine | Pass times | | Complex elastic modulus | Gloss | D50 | Initial viscosity | Storage stability |
| | - | Part(s) | - | Part(s) | - | Part(s) | - | Part(s) | - | Times | - | Pa | - | μm | - | - |
| 1-9 | 1 | 5 | Therban 3406 | 1 | - | | NMP | 94.00 | Star burst | 30 | ○ | ○ | ◎ | ◎ | ○ | ◎ |
| 1-10 | 1 | 5 | Therban 3406 | 1 | NaOH | 0.04 | NMP | 93.96 | Star burst | 30 | ◎ | ◎ | ◎ | ◎ | ◎ | ○ |
| 1-11 | 1 | 5 | Therban 4307 | 1 | - | | NMP | 94.00 | Star burst | 30 | ○ | ○ | ◎ | ◎ | ○ | ◎ |
| 1-12 | 1 | 5 | Therban 4307 | 1 | NaOH | 0.04 | NMP | 93.96 | Star burst | 30 | ○ | ○ | ◎ | ◎ | ○ | ○ |
| 1-13 | 1 | 5 | CMC | 1 | | | Water | 94.00 | Star burst | 30 | ○ | ○ | ○ | ◎ | ○ | Δ |
| 1-14 | 1 | 5 | PAN | 1 | $Na_2CO_3$ | 0.25 | Water | 93.75 | Star burst | 30 | ◎ | ○ | ○ | ○ | ○ | ○ |
| 1-15 | 1 | 5 | PAA | 1 | NaOH | 0.25 | Water | 93.75 | Star burst | 30 | ◎ | ○ | ◎ | ◎ | ○ | ○ |
| 1-16 | 1 | 5 | PVP | 1 | 2-aminoethanol | 0.25 | Water | 93.75 | Star burst | 30 | ○ | ○ | ○ | Δ | ○ | Δ |
| 1-17 | 1 | 5 | Therban 4307 | 1 | NaOH | 0.04 | NMP | 93.96 | Star burst SC100 | 30 5 min. | ○ | ○ | ◎ | ◎ | ○ | ◎ |

EP 4 458 910 A1

39

[Table 2-2]

Table 2-2

| | Processed CNT | | Dispersant | | Additive | | Dispersion medium | | Dispersion condition | | | CNT dispersion liquid | | | | | |
|---|---|---|---|---|---|---|---|---|---|---|---|---|---|---|---|---|---|
| | Type | Added amount | Type | Added amount | Type | Added amount | Type | Added amount | Dispersion machine | Pass times | Preparation property | Complex elastic modulus | Gloss | D50 | Initial viscosity | Storage stability |
| | - | Part(s) | - | Part(s) | - | Part(s) | - | Part(s) | - | Times | - | Pa | - | μm | - | - |
| 2-1 | 2 | 5 | PVP | 1 | 2-aminoethanol | 0.25 | NMP | 93.75 | Star burst | 30 | ○ | ○ | ○ | ◎ | ○ | ○ |
| 2-2 | 2 | 5 | PVP | 1 | 2-aminoethanol | 0.25 | Water | 93.75 | Star burst | 30 | ○ | ○ | ○ | ◎ | ○ | ○ |
| 3-1 | 3 | 5 | PVA | 1 | 2-aminoethanol | 0.25 | NMP | 93.75 | Star burst | 30 | ◎ | ◎ | ○ | ◎ | ◎ | ○ |
| 3-2 | 3 | 5 | PVP | 1 | 2-aminoethanol | 0.25 | NMP | 93.75 | Star burst | 30 | ◎ | ◎ | ○ | ◎ | ◎ | ○ |
| 3-3 | 3 | 5 | ZETPOLE 2000 | 1 | - | | NMP | 94.00 | Star burst | 30 | ○ | ◎ | ○ | ◎ | ◎ | ◎ |
| 3-4 | 3 | 5 | ZETPOLE 2000 | 1 | NaOH | 0.04 | NMP | 93.96 | Star burst | 30 | ◎ | ◎ | ◎ | ◎ | ◎ | ◎ |
| 3-5 | 3 | 5 | ZETPOLE 2010 | 1 | - | | NMP | 94.00 | Star burst | 30 | ◎ | ◎ | ○ | ◎ | ◎ | ◎ |
| 3-6 | 3 | 5 | ZETPOLE 2010 | 1 | NaOH | 0.04 | NMP | 93.96 | Star burst | 30 | ◎ | ◎ | ◎ | ◎ | ◎ | ○ |
| 3-7 | 3 | 5 | Therban 3404 | 1 | - | | NMP | 94.00 | Star burst | 30 | ◎ | ◎ | ○ | ◎ | ◎ | ◎ |
| 3-8 | 3 | 5 | Therban 3404 | 1 | NaOH | 0.04 | NMP | 93.96 | Star burst | 30 | ◎ | ◎ | ◎ | ◎ | ◎ | ◎ |

(continued)

| | Processed CNT | | Dispersant | | Additive | | Dispersion medium | | Dispersion condition | | Preparation property | CNT dispersion liquid | | | | |
| | Type | Added amount | Type | Added amount | Type | Added amount | Type | Added amount | Dispersion machine | Pass times | | Complex elastic modulus | Gloss | D50 | Initial viscosity | Storage stability |
| | - | Part(s) | - | Part(s) | - | Part(s) | - | Part(s) | - | Times | - | Pa | - | μm | - | - |
| 3-9 | 3 | 5 | Therban 3406 | 1 | - | | NMP | 94.00 | Star burst | 30 | ◎ | ◎ | ○ | ◎ | ◎ | ◎ |
| 3-10 | 3 | 5 | Therban 3406 | 1 | NaOH | 0.04 | NMP | 93.96 | Star burst | 30 | ◎ | ◎ | ◎ | ◎ | ◎ | ◎ |
| 3-11 | 3 | 5 | Therban 4307 | 1 | - | | NMP | 94.00 | Star burst | 30 | ◎ | ◎ | ○ | ◎ | ○ | ◎ |
| 3-12 | 3 | 5 | Therban 4307 | 1 | NaOH | 0.04 | NMP | 93.96 | Star burst | 30 | ◎ | ◎ | ○ | ◎ | ○ | ○ |
| 3-13 | 3 | 5 | CMC | 1 | | | Water | 94.00 | Star burst | 30 | ◎ | ○ | ○ | ◎ | ○ | △ |
| 3-14 | 3 | 5 | PAN | 1 | Na$_2$CO$_3$ | 0.25 | Water | 93.75 | Star burst | 30 | ◎ | ○ | ○ | ○ | ○ | ○ |
| 3-15 | 3 | 5 | PAA | 1 | NaOH | 0.25 | Water | 93.75 | Star burst | 30 | ◎ | ○ | ◎ | ◎ | ○ | ○ |
| 3-16 | 3 | 5 | PVP | 1 | 2-aminoethanol | 0.25 | Water | 93.75 | Star burst | 30 | ◎ | ○ | ○ | ○ | ○ | △ |
| 4-1 | 4 | 5 | PVP | 1 | 2-aminoethanol | 0.25 | NMP | 93.75 | Star burst | 30 | ◎ | ○ | ◎ | ◎ | ○ | ◎ |
| 4-2 | 4 | 5 | PVP | 1 | 2-aminoethanol | 0.25 | Water | 93.75 | Star burst | 30 | ◎ | ○ | ◎ | ◎ | ○ | ◎ |
| 5-1 | 5 | 5 | PVP | 1 | 2-aminoethanol | 0.25 | NMP | 93.75 | Star burst | 30 | ○ | ○ | ○ | ○ | ○ | ○ |

| | Processed CNT | | Dispersant | | Additive | | Dispersion medium | | Dispersion condition | | | CNT dispersion liquid | | | | | |
|---|---|---|---|---|---|---|---|---|---|---|---|---|---|---|---|---|---|
| | Type | Added amount | Type | Added amount | Type | Added amount | Type | Added amount | Dispersion machine | Pass times | Preparation property | Complex elastic modulus | Gloss | D50 | Initial viscosity | Storage stability |
| | - | Part(s) | - | Part(s) | - | Part(s) | - | Part(s) | - | Times | - | Pa | - | μm | - | - |
| 5-2 | 5 | 5 | PVP | 1 | 2-aminoethanol | 0.25 | Water | 93.75 | Star burst | 30 | ○ | ○ | ○ | ○ | ○ | ○ |
| 6-1 | 6 | 5 | PVP | 1 | 2-aminoethanol | 0.25 | NMP | 93.75 | Star burst | 30 | ○ | ◎ | ◎ | ◎ | ◎ | ◎ |
| 6-2 | 6 | 5 | PVP | 1 | 2-aminoethanol | 0.25 | Water | 93.75 | Star burst | 30 | ○ | ○ | ○ | ◎ | ◎ | ◎ |
| Comparative Example 2-1 | Comparative Example 2 | 2.5 | PVP | 0.5 | 2-aminoethanol | 0.25 | NMP | 96.75 | Star burst | 30 | × | × | ○ | × | Δ | × |
| Comparative Example 2-2 | Comparative Example 2 | 2.5 | PVP | 0.5 | 2-aminoethanol | 0.25 | Water | 96.75 | Star burst | 30 | × | × | Δ | × | Δ | × |

[Table 2-3]

Table 2-3

| | Processed CNT | | Dispersant | | Additive | | Dispersion medium | | Dispersion condition | | | CNT dispersion liquid | | | | | |
|---|---|---|---|---|---|---|---|---|---|---|---|---|---|---|---|---|---|
| | Type | Added amount | Type | Added amount | Type | Added amount | Type | Added amount | Dispersion machine | Pass times | Preparation property | Complex elastic modulus | Gloss | D50 | Initial viscosity | Storage stability |
| | - | Part(s) | - | Part(s) | - | Part(s) | - | Part(s) | - | Times | - | Pa | - | μm | - | - |
| 7-1 | 7 | 5 | PVA | 1 | 2-aminoethanol | 0.25 | NMP | 93.75 | Star burst | 30 | △ | ○ | ○ | ○ | △ | △ |
| 7-2 | 7 | 5 | PVP | 1 | 2-aminoethanol | 0.25 | NMP | 93.75 | Star burst | 30 | △ | ○ | ○ | ○ | △△ | △ |
| 8-1 | 8 | 5 | PVA | 1 | 2-aminoethanol | 0.25 | NMP | 93.75 | Star burst | 30 | △ | ○ | ◎ | ○ | ○ | △ |
| 8-2 | 8 | 5 | PVP | 1 | 2-aminoethanol | 0.25 | NMP | 93.75 | Star burst | 30 | ○ | ○ | ◎ | ○ | ○ | ○ |
| 8-3 | 8 | 5 | ZETPOLE 2000 | 1 | - | | NMP | 94.00 | Star burst | 30 | ○ | ◎ | ◎ | ◎ | ○ | ◎ |
| 8-4 | 8 | 5 | ZETPOLE 2000 | 1 | NaOH | 0.04 | NMP | 93.96 | Star burst | 30 | ○ | ◎ | ◎ | ◎ | ◎ | ○ |
| 8-5 | 8 | 5 | ZETPOLE 2010 | 1 | - | | NMP | 94.00 | Star burst | 30 | △ | ◎ | ◎ | ◎ | ○ | ◎ |
| 8-6 | 8 | 5 | ZETPOLE 2010 | 1 | NaOH | 0.04 | NMP | 93.96 | Star burst | 30 | ○ | ◎ | ◎ | ◎ | ◎ | ○ |
| 8-7 | 8 | 5 | Therban 3404 | 1 | - | | NMP | 94.00 | Star burst | 30 | ○ | ◎ | ◎ | ◎ | ◎ | ◎ |
| 8-8 | 8 | 5 | Therban 3404 | 1 | NaOH | 0.04 | NMP | 93.96 | Star burst | 30 | ○ | ◎ | ◎ | ◎ | ◎ | ○ |
| 8-9 | 8 | 5 | Therban 3406 | 1 | - | | NMP | 94.00 | Star burst | 30 | ○ | ◎ | ◎ | ◎ | ○ | ◎ |
| 8-10 | 8 | 5 | Therban 3406 | 1 | NaOH | 0.04 | NMP | 93.96 | Star burst | 30 | ○ | ◎ | ◎ | ◎ | ◎ | ○ |

(continued)

| | Processed CNT | | Dispersant | | Additive | | Dispersion medium | | Dispersion condition | | | CNT dispersion liquid | | | | | |
|---|---|---|---|---|---|---|---|---|---|---|---|---|---|---|---|---|---|
| | Type | Added amount | Type | Added amount | Type | Added amount | Type | Added amount | Dispersion machine | Pass times | Preparation property | Complex elastic modulus | Gloss | D50 | Initial viscosity | Storage stability |
| | - | Part(s) | - | Part(s) | - | Part(s) | - | Part(s) | - | Times | - | Pa | - | μm | - | - |
| 8-11 | 8 | 5 | Therban 4307 | 1 | - | | NMP | 94.00 | Star burst | 30 | Δ | ◎ | ◎ | ◎ | ○ | ◎ |
| 8-12 | 8 | 5 | Therban 4307 | 1 | NaOH | 0.04 | NMP | 93.96 | Star burst | 30 | ○ | ○ | ◎ | ◎ | ○ | ○ |
| 8-13 | 8 | 5 | CMC | 1 | | | Water | 94.00 | Star burst | 30 | ○ | ○ | ○ | ◎ | ○ | Δ |
| 8-14 | 8 | 5 | PAN | 1 | Na$_2$CO$_3$ | 0.25 | Water | 93.75 | Star burst | 30 | ○ | ○ | ○ | ○ | ○ | ○ |
| 8-15 | 8 | 5 | PAA | 1 | NaOH | 0.25 | Water | 93.75 | Star burst | 30 | ○ | ○ | ◎ | ◎ | ○ | ○ |
| 8-16 | 8 | 5 | PVP | 1 | 2-aminoethanol | 0.25 | Water | 93.75 | Star burst | 30 | ○ | ○ | ○ | ○ | ○ | Δ |

[Table 2-4]

[Table 2-4]

Table 2-4

| | Processed CNT | | Dispersant | | Additive | | Dispersion medium | | Dispersion condition | | | CNT dispersion liquid | | | | |
|---|---|---|---|---|---|---|---|---|---|---|---|---|---|---|---|---|
| | Type | Added amount | Type | Added amount | Type | Added amount | Type | Added amount | Dispersion machine | Pass times | Preparation property | Complex elastic modulus | Gloss | D50 | Initial viscosity | Storage stability |
| | - | Part(s) | - | Part(s) | - | Part(s) | - | Part(s) | - | Times | - | Pa | - | μm | - | - |
| 9-1 | 9 | 5 | PVA | 1 | 2-aminoethanol | 0.25 | NMP | 93.75 | Star burst | 30 | ○ | ◎ | ○ | ◎ | ○ | ○ |
| 9-2 | 9 | 5 | PVP | 1 | 2-aminoethanol | 0.25 | NMP | 93.75 | Star burst | 30 | ○ | ◎ | ○ | ◎ | ○ | ○ |
| 9-3 | 9 | 5 | ZETPOLE 2000 | 1 | - | | NMP | 94.00 | Star burst | 30 | ○ | ◎ | ○ | ○ | ◎ | ◎ |
| 9-4 | 9 | 5 | ZETPOLE 2000 | 1 | NaOH | 0.04 | NMP | 93.96 | Star burst | 30 | ◎ | ◎ | ◎ | ◎ | ◎ | ◎ |
| 9-5 | 9 | 5 | ZETPOLE 2010 | 1 | - | | NMP | 94.00 | Star burst | 30 | ○ | ◎ | ○ | ○ | ◎ | ◎ |
| 9-6 | 9 | 5 | ZETPOLE 2010 | 1 | NaOH | 0.04 | NMP | 93.96 | Star burst | 30 | ◎ | ◎ | ◎ | ◎ | ◎ | ○ |
| 9-7 | 9 | 5 | Therban 3404 | 1 | - | | NMP | 94.00 | Star burst | 30 | ○ | ◎ | ○ | ○ | ◎ | ◎ |
| 9-8 | 9 | 5 | Therban 3404 | 1 | NaOH | 0.04 | NMP | 93.96 | Star burst | 30 | ◎ | ◎ | ◎ | ◎ | ◎ | ◎ |
| 9-9 | 9 | 5 | Therban 3406 | 1 | - | | NMP | 94.00 | Star burst | 30 | ○ | ◎ | ○ | ○ | ◎ | ◎ |
| 9-10 | 9 | 5 | Therban 3406 | 1 | NaOH | 0.04 | NMP | 93.96 | Star burst | 30 | ◎ | ◎ | ◎ | ◎ | ◎ | ◎ |
| 9-11 | 9 | 5 | Therban 4307 | 1 | - | | NMP | 94.00 | Star burst | 30 | ◎ | ◎ | ○ | ○ | ○ | ◎ |

EP 4 458 910 A1

(continued)

| | Processed CNT | | Dispersant | | Additive | | Dispersion medium | | Dispersion condition | | | CNT dispersion liquid | | | | | |
|---|---|---|---|---|---|---|---|---|---|---|---|---|---|---|---|---|---|
| | Type | Added amount | Type | Added amount | Type | Added amount | Type | Added amount | Dispersion machine | Pass times | Preparation property | Complex elastic modulus | Gloss | D50 | Initial viscosity | Storage stability |
| | - | Part(s) | - | Part(s) | - | Part(s) | - | Part(s) | - | Times | - | Pa | - | μm | - | - |
| 9-12 | 9 | 5 | Therban 4307 | 1 | NaOH | 0.04 | NMP | 93.96 | Star burst | 30 | ○ | ◎ | ○ | ◎ | ○ | ○ |
| 9-13 | 9 | 5 | CMC | 1 | | | Water | 94.00 | Star burst | 30 | ○ | ○ | ○ | ○ | Δ | ○ |
| 9-14 | 9 | 5 | PAN | 1 | Na$_2$CO$_3$ | 0.25 | Water | 93.75 | Star burst | 30 | ○ | ◎ | ○ | ◎ | ◎ | ◎ |
| 9-15 | 9 | 5 | PAA | 1 | NaOH | 0.25 | Water | 93.75 | Star burst | 30 | ◎ | ◎ | ◎ | ◎ | ◎ | ◎ |
| 9-16 | 9 | 5 | PVP | 1 | 2-aminoethanol | 0.25 | Water | 93.75 | Star burst | 30 | ○ | ○ | ○ | ○ | ○ | ○ |
| 10-1 | 10 | 5 | PVP | 1 | 2-aminoethanol | 0.25 | NMP | 93.75 | Star burst | 30 | Δ | ○ | ◎ | ○ | ○ | ◎ |
| 10-2 | 10 | 5 | PVP | 1 | 2-aminoethanol | 0.25 | Water | 93.75 | Star burst | 30 | Δ | ○ | ◎ | ○ | ○ | ○ |
| 11-1 | 11 | 5 | PVP | 1 | 2-aminoethanol | 0.25 | NMP | 93.75 | Star burst | 30 | ◎ | ◎ | ○ | ◎ | ◎ | ◎ |
| 11-2 | 11 | 5 | PVP | 1 | 2-aminoethanol | 0.25 | Water | 93.75 | Star burst | 30 | ○ | ○ | ○ | ◎ | ◎ | ◎ |
| Comparative Example 4-1 | Comparative Example 4 | 5 | PVP | 1 | 2-aminoethanol | 0.25 | NMP | 93.75 | Star burst | 30 | ◎ | ○ | Δ | ○ | ◎ | ◎ |

49

(continued)

| Processed CNT | | Dispersant | | Additive | | Dispersion medium | | Dispersion condition | | | CNT dispersion liquid | | | | |
|---|---|---|---|---|---|---|---|---|---|---|---|---|---|---|---|
| Type | Added amount | Type | Added amount | Type | Added amount | Type | Added amount | Dispersion machine | Pass times | Preparation property | Complex elastic modulus | Gloss | D50 | Initial viscosity | Storage stability |
| - | Part(s) | - | Part(s) | - | Part(s) | - | Part(s) | - | Times | - | Pa | - | μm | - | - |
| Comparative Example 5 | 5 | PVP | 1 | 2-aminoethanol | 0.25 | NMP | 93.75 | Star burst | 30 | ○ | × | ○ | ○ | ○ | ○ |
| Comparative Example6 | 5 | PVP | 1 | 2-aminoethanol | 0.25 | NMP | 93.75 | Star burst | 30 | △ | × | △ | ○ | △ | × |
| Comparative Example 7 | 5 | PVP | 1 | 2-aminoethanol | 0.25 | NMP | 93.75 | Star burst | 30 | ◎ | × | × | ○ | ◎ | ◎ |

Leftmost row labels: Comparative Example 5-1, Comparative Example6-1, Comparative Example 7-1

[Table 2-5]

Table 2-5

| | Processed CNT | | Dispersant | | Additive | | Dispersion medium | | Dispersion condition | | | CNT dispersion liquid | | | | |
|---|---|---|---|---|---|---|---|---|---|---|---|---|---|---|---|---|
| | Type | Added amount | Type | Added amount | Type | Added amount | Type | Added amount | Dispersion machine | Pass times | Preparation property | Complex elastic modulus | Gloss | D50 | Initial viscosity | Storage stability |
| | - | Part(s) | - | Part(s) | - | Part(s) | - | Part(s) | - | Times | - | Pa | - | μm | - | - |
| Comparative Example 3-1 | Comparative Example 3 | 1.5 | PVP | 0.9 | 2-aminoethanol | 0.23 | NMP | 97.38 | Star burst | 30 | × | Δ | ○ | ○ | Δ | × |
| Comparative Example 3-2 | Comparative Example 3 | 1.5 | PVP | 0.9 | 2-aminoethanol | 0.23 | Water | 97.38 | Star burst | 30 | × | Δ | Δ | ○ | Δ | × |
| 12-1 | 12 | 2.0 | PVA | 1.2 | 2-aminoethanol | 0.30 | NMP | 96.50 | Star burst | 30 | Δ | Δ | ○ | ○ | Δ | Δ |
| 12-2 | 12 | 2.0 | PVP | 1.2 | 2-aminoethanol | 0.30 | NMP | 96.50 | Star burst | 30 | Δ | Δ | ○ | ◎ | Δ | Δ |
| 13-1 | 13 | 2.5 | PVA | 1.5 | 2-aminoethanol | 0.38 | NMP | 95.63 | Star burst | 30 | Δ | ○ | ◎ | ○ | Δ | Δ |
| 13-2 | 13 | 2.5 | PVP | 1.5 | 2-aminoethanol | 0.38 | NMP | 95.63 | Star burst | 30 | Δ | ○ | ◎ | ◎ | Δ | Δ |
| 13-3 | 13 | 2.5 | ZETPOLE 2000L | 1.5 | - | | NMP | 96.00 | Star burst | 30 | ○ | ○ | ◎ | ○ | Δ | Δ |
| 13-4 | 13 | 2.5 | ZETPOLE 2000L | 1.5 | NaOH | 0.06 | NMP | 95.94 | Star burst | 30 | ○ | ◎ | ◎ | ◎ | ○ | ○ |
| 13-5 | 13 | 2.5 | ZETPOLE 2010L | 1.5 | - | | NMP | 96.00 | Star burst | 30 | Δ | ○ | ◎ | ○ | Δ | Δ |

| | Processed CNT | | Dispersant | | Additive | | Dispersion medium | | Dispersion condition | | | CNT dispersion liquid | | | | |
|---|---|---|---|---|---|---|---|---|---|---|---|---|---|---|---|---|---|
| | Type | Added amount | Type | Added amount | Type | Added amount | Type | Added amount | Dispersion machine | Pass times | Preparation property | Complex elastic modulus | Gloss | D50 | Initial viscosity | Storage stability |
| | - | Part(s) | - | Part(s) | - | Part(s) | - | Part(s) | - | Times | - | Pa | - | μm | - | - |
| 13-6 | 13 | 2.5 | ZETPOLE 2010L | 1.5 | NaOH | 0.06 | NMP | 95.94 | Star burst | 30 | ○ | ◎ | ◎ | ◎ | ○ | ○ |
| 13-7 | 13 | 2.5 | Therban 3404 | 1.5 | - | | NMP | 96.00 | Star burst | 30 | ○ | ◎ | ◎ | ◎ | Δ | ○ |
| 13-8 | 13 | 2.5 | Therban 3404 | 1.5 | NaOH | 0.06 | NMP | 95.94 | Star burst | 30 | ○ | ◎ | ◎ | ◎ | ○ | ○ |
| 13-9 | 13 | 2.5 | Therban 3406 | 1.5 | - | | NMP | 96.00 | Star burst | 30 | ○ | ◎ | ◎ | ◎ | ○ | ○ |
| 13-10 | 13 | 2.5 | Therban 3406 | 1.5 | NaOH | 0.06 | NMP | 95.94 | Star burst | 30 | ○ | ◎ | ◎ | ◎ | ○ | ○ |
| 13-11 | 13 | 2.5 | Therban 4307 | 1.5 | - | | NMP | 96.00 | Star burst | 30 | Δ | ◎ | ◎ | ○ | Δ | Δ |
| 13-12 | 13 | 2.5 | Therban 4307 | 1.5 | NaOH | 0.06 | NMP | 95.94 | Star burst | 30 | ○ | ○ | ◎ | ◎ | Δ | ○ |
| 13-13 | 13 | 2.5 | CMC | 1.5 | | | Water | 96.00 | Star burst | 30 | Δ | ○ | ○ | ◎ | Δ | Δ |
| 13-14 | 13 | 2.5 | PAN | 1.5 | Na$_2$CO$_3$ | 0.38 | Water | 95.63 | Star burst | 30 | ○ | ○ | ○ | ○ | ○ | Δ |
| 13-15 | 13 | 2.5 | PAA | 1.5 | NaOH | 0.38 | Water | 95.63 | Star burst | 30 | ○ | ○ | ◎ | ◎ | ○ | ○ |
| 13-16 | 13 | 2.5 | PVP | 1.5 | 2-aminoethanol | 0.38 | Water | 95.63 | Star burst | 30 | Δ | ○ | ○ | ○ | ○ | Δ |

[Table 2-6]

Table 2-6

| | Processed CNT | | Dispersant | | Additive | | Dispersion medium | | Dispersion condition | | | CNT dispersion liquid | | | | | |
|---|---|---|---|---|---|---|---|---|---|---|---|---|---|---|---|---|---|
| | Type | Added amount | Type | Added amount | Type | Added amount | Type | Added amount | Dispersion machine | Pass times | Preparation property | Complex elastic modulus | Gloss | D50 | Initial viscosity | Storage stability |
| | - | Part(s) | - | Part(s) | - | Part(s) | - | Part(s) | - | Times | - | Pa | - | μm | - | - |
| 14-1 | 14 | 2.5 | PVA | 1.5 | 2-aminoethanol | 0.38 | NMP | 95.63 | Star burst | 30 | ○ | ○ | ○ | ○ | ○ | ○ |
| 14-2 | 14 | 2.5 | PVP | 1.5 | 2-aminoethanol | 0.38 | NMP | 95.63 | Star burst | 30 | ○ | ○ | ○ | ○ | ○ | ○ |
| 14-3 | 14 | 2.5 | ZETPOLE 2000L | 1.5 | - | | NMP | 96.00 | Star burst | 30 | ○ | ◎ | ○ | ○ | ○ | ○ |
| 14-4 | 14 | 2.5 | ZETPOLE 2000L | 1.5 | NaOH | 0.06 | NMP | 95.94 | Star burst | 30 | ◎ | ◎ | ◎ | ◎ | ◎ | ◎ |
| 14-5 | 14 | 2.5 | ZETPOLE 2010L | 1.5 | - | | NMP | 96.00 | Star burst | 30 | ○ | ◎ | ○ | ○ | ○ | ○ |
| 14-6 | 14 | 2.5 | ZETPOLE 2010L | 1.5 | NaOH | 0.06 | NMP | 95.94 | Star burst | 30 | ◎ | ◎ | ◎ | ◎ | ◎ | ○ |
| 14-7 | 14 | 2.5 | Therban 3404 | 1.5 | - | | NMP | 96.00 | Star burst | 30 | ○ | ◎ | ○ | ○ | ○ | ◎ |
| 14-8 | 14 | 2.5 | Therban 3404 | 1.5 | NaOH | 0.06 | NMP | 95.94 | Star burst | 30 | ◎ | ◎ | ◎ | ◎ | ◎ | ◎ |
| 14-9 | 14 | 2.5 | Therban 3406 | 1.5 | - | | NMP | 96.00 | Star burst | 30 | ○ | ◎ | ○ | ○ | ◎ | ◎ |
| 14-10 | 14 | 2.5 | Therban 3406 | 1.5 | NaOH | 0.06 | NMP | 95.94 | Star burst | 30 | ◎ | ◎ | ◎ | ◎ | ◎ | ◎ |
| 14-11 | 14 | 2.5 | Therban 4307 | 1.5 | - | | NMP | 96.00 | Star burst | 30 | ◎ | ◎ | ○ | ○ | ○ | ○ |

| | Processed CNT | | Dispersant | | Additive | | Dispersion medium | | Dispersion condition | | | CNT dispersion liquid | | | | | |
|---|---|---|---|---|---|---|---|---|---|---|---|---|---|---|---|---|---|
| | Type | Added amount | Type | Added amount | Type | Added amount | Type | Added amount | Dispersion machine | Pass times | Preparation property | Complex elastic modulus | Gloss | D50 | Initial viscosity | Storage stability |
| | - | Part(s) | - | Part(s) | - | Part(s) | - | Part(s) | - | Times | - | Pa | - | μ.m | - | - |
| 14-12 | 14 | 2.5 | Therban 4307 | 1.5 | NaOH | 0.06 | NMP | 95.94 | Star burst | 30 | ◎ | ◎ | ○ | ◎ | ○ | ○ |
| 14-13 | 14 | 2.5 | CMC | 1.5 | | | Water | 96.00 | Star burst | 30 | ◎ | ○ | ○ | ○ | △ | ○ |
| 14-14 | 14 | 2.5 | PAN | 1.5 | $Na_2CO_3$ | 0.38 | Water | 95.63 | Star burst | 30 | ○ | ◎ | ○ | ◎ | ○ | ○ |
| 14-15 | 14 | 2.5 | PAA | 1.5 | NaOH | 0.38 | Water | 95.63 | Star burst | 30 | ◎ | ◎ | ◎ | ◎ | ◎ | ◎ |
| 14-16 | 14 | 2.5 | PVP | 1.5 | 2-aminoethanol | 0.38 | Water | 95.63 | Star burst | 30 | ○ | ○ | ○ | ○ | ○ | ○ |
| 15-1 | 15 | 2.5 | PVP | 1.5 | 2-aminoethanol | 0.38 | NMP | 95.63 | Star burst | 30 | △ | △ | ◎ | ◎ | △ | △ |
| 15-2 | 15 | 2.5 | PVP | 1.5 | 2-aminoethanol | 0.38 | Water | 95.63 | Star burst | 30 | △ | ○ | ◎ | ◎ | ○ | △ |
| 16-1 | 16 | 2.5 | PVP | 1.5 | 2-aminoethanol | 0.38 | NMP | 95.63 | Star burst | 30 | ○ | ○ | ○ | ○ | ○ | ○ |
| 16-2 | 16 | 2.5 | PVP | 1.5 | 2-aminoethanol | 0.38 | Water | 95.63 | Star burst | 30 | ○ | ○ | ○ | ○ | ○ | ○ |
| Comparative Example 8-1 | Comparative Example 8 | 2.5 | PVP | 1.5 | 2-aminoethanol | 0.38 | NMP | 95.63 | Star burst | 30 | ◎ | × | × | ○ | ◎ | ◎ |

EP 4 458 910 A1

56

[Table 3-1]

Table 3-1

| Positive electrode composite slurry | | | | | | Positive electrode | | | |
|---|---|---|---|---|---|---|---|---|---|
| CNT dispersion liquid | Active material | Processed CNT | Dispersant | Additive | Binder resin | Type | Conductivity | Rate properties | Cycle properties |
| Type | Type | Type | Type | Type | Type | | | | |
| Comparative Example 1-1 | NMC | Comparative Example 1 | PVP | - | PVDF | Positive electrode 1a | ◎ | ○ | ○ |
| Comparative Example 1-2 | LFP | Comparative Example 1 | PVP | 2-aminoethanol | PTFE | Positive electrode 2a | ◎ | ◎ | ○ |
| 1-1 | NMC | 1 | PVA | 2-aminoethanol | PVDF | Positive electrode 3a | ◎ | ◎ | ○ |
| 1-2 | NMC | 1 | PVP | 2-aminoethanol | PVDF | Positive electrode 4a | ◎ | ○ | ○ |
| 1-3 | NMC | 1 | ZETPOLE 2000L | - | PVDF | Positive electrode 5a | ◎ | ◎ | ◎ |
| 1-4 | NMC | 1 | ZETPOLE 2000L | NaOH | PVDF | Positive electrode 6a | ◎ | ◎ | ◎ |
| 1-5 | NMC | 1 | ZETPOLE 2010L | - | PVDF | Positive electrode 7a | ◎ | ◎ | ◎ |
| 1-6 | NMC | 1 | ZETPOLE 2010L | NaOH | PVDF | Positive electrode 8a | ◎ | ◎ | ◎ |
| 1-7 | NMC | 1 | Therban 3404 | - | PVDF | Positive electrode 9a | ◎ | ◎ | ◎ |
| 1-8 | NMC | 1 | Therban 3404 | NaOH | PVDF | Positive electrode 10a | ◎ | ◎ | ◎ |
| 1-9 | NMC | 1 | Therban 3406 | - | PVDF | Positive electrode 11a | ◎ | ◎ | ◎ |
| 1-10 | NMC | 1 | Therban 3406 | NaOH | PVDF | Positive electrode 12a | ◎ | ◎ | ◎ |

| Positive electrode composite slurry | | | | | | Positive electrode | | | |
|---|---|---|---|---|---|---|---|---|---|
| CNT dispersion liquid | Active material | Processed CNT | Dispersant | Additive | Binder resin | Type | Conductivity | Rate properties | Cycle properties |
| Type | Type | Type | Type | Type | Type | | | | |
| 1-11 | NMC | 1 | Therban 4307 | - | PVDF | Positive electrode 13a | ◎ | ○ | ○ |
| 1-12 | NMC | 1 | Therban 4307 | NaOH | PVDF | Positive electrode 14a | ◎ | ○ | ○ |
| 1-13 | LFP | 1 | CMC | - | PTFE | Positive electrode 15a | ◎ | ◎ | ◎ |
| 1-14 | LFP | 1 | PAN | $Na_2CO_3$ | PTFE | Positive electrode 16a | ◎ | ◎ | ◎ |
| 1-15 | LFP | 1 | PAA | NaOH | PTFE | Positive electrode 17a | ◎ | ◎ | ◎ |
| 1-16 | LFP | 1 | PVP | 2-aminoethanol | PTFE | Positive electrode 18a | ◎ | ◎ | ○ |
| 1-17 | NMC | 1 | Therban 4307 | NaOH | PVDF | Positive electrode 19a | ◎ | ○ | ○ |
| 2-1 | NMC | 2 | PVP | 2-aminoethanol | PVDF | Positive electrode 20a | ◎ | ○ | ○ |
| 3-2 | LFP | 3 | PVP | 2-aminoethanol | PTFE | Positive electrode 21a | ◎ | ◎ | ○ |
| 3-1 | NMC | 3 | PVA | 2-aminoethanol | PVDF | Positive electrode 22a | ◎ | ◎ | ○ |
| 3-2 | NMC | 3 | PVP | 2-aminoethanol | PVDF | Positive electrode 23a | ◎ | ○ | ○ |
| 3-3 | NMC | 3 | ZETPOLE 2000L | - | PVDF | Positive electrode 24a | ◎ | ◎ | ◎ |
| 3-4 | NMC | 3 | ZETPOLE 2000L | NaOH | PVDF | Positive electrode 25a | ○ | ◎ | ◎ |

EP 4 458 910 A1

| Positive electrode composite slurry | | | | | | Positive electrode | | | | |
|---|---|---|---|---|---|---|---|---|---|---|
| CNT dispersion liquid | Active material | Processed CNT | Dispersant | Additive | Binder resin | Type | Conductivity | Rate properties | Cycle properties | |
| Type | Type | Type | Type | Type | Type | | | | | |
| 3-5 | NMC | 3 | ZETPOLE 2010L | - | PVDF | Positive electrode 26a | ◎ | ◎ | ◎ | |
| 3-6 | NMC | 3 | ZETPOLE 2010L | NaOH | PVDF | Positive electrode 27a | ○ | ◎ | ◎ | |
| 3-7 | NMC | 3 | Therban 3404 | - | PVDF | Positive electrode 28a | ◎ | ◎ | ◎ | |
| 3-8 | NMC | 3 | Therban 3404 | NaOH | PVDF | Positive electrode 29a | ◎ | ◎ | ◎ | |
| 3-9 | NMC | 3 | Therban 3406 | - | PVDF | Positive electrode 30a | ◎ | ◎ | ◎ | |
| 3-10 | NMC | 3 | Therban 3406 | NaOH | PVDF | Positive electrode 31a | ◎ | ◎ | ◎ | |
| 3-11 | NMC | 3 | Therban 4307 | - | PVDF | Positive electrode 32a | ◎ | ○ | ○ | |
| 3-12 | NMC | 3 | Therban 4307 | NaOH | PVDF | Positive electrode 33a | ◎ | ○ | ○ | |
| 3-13 | LFP | 3 | CMC | - | PTFE | Positive electrode 34a | ◎ | ◎ | ◎ | |
| 3-14 | LFP | 3 | PAN | $Na_2CO_3$ | PTFE | Positive electrode 35a | ◎ | ◎ | ◎ | |
| 3-15 | LFP | 3 | PAA | NaOH | PTFE | Positive electrode 36a | ◎ | ◎ | ◎ | |
| 3-16 | LFP | 3 | PVP | 2-aminoethanol | PTFE | Positive electrode 37a | ◎ | ◎ | ○ | |
| 4-1 | NMC | 4 | PVP | 2-aminoethanol | PVDF | Positive electrode 38a | ○ | ○ | ○ | |

(continued)

| Positive electrode composite slurry | | | | | | Positive electrode | | | |
|---|---|---|---|---|---|---|---|---|---|
| CNT dispersion liquid | Active material | Processed CNT | Dispersant | Additive | Binder resin | Type | Conductivity | Rate properties | Cycle properties |
| Type | Type | Type | Type | Type | Type | | | | |
| 4-2 | LFP | 4 | PVP | 2-aminoethanol | PTFE | Positive electrode 39a | ○ | ○ | ○ |
| 5-1 | NMC | 5 | PVP | 2-aminoethanol | PVDF | Positive electrode 40a | ◎ | ○ | ○ |
| 5-2 | LFP | 5 | PVP | 2-aminoethanol | PTFE | Positive electrode 41a | ◎ | ◎ | ○ |
| 6-1 | NMC | 6 | PVP | 2-aminoethanol | PVDF | Positive electrode 42a | ◎ | ○ | ○ |
| 6-2 | LFP | 6 | PVP | 2-aminoethanol | PTFE | Positive electrode 43a | ◎ | ◎ | ○ |
| Comparative Example 2-1 | NMC | Comparative Example 2 | PVP | 2-aminoethanol | PVDF | Positive electrode 44a | ◎ | ◎ | ◎ |
| Comparative Example 2-2 | LFP | Comparative Example 2 | PVP | 2-aminoethanol | PTFE | Positive electrode 45a | ◎ | ◎ | ◎ |

[Table 3-2]

Table 3-2

| Positive electrode composite slurry | | | | | | Positive electrode | | | |
|---|---|---|---|---|---|---|---|---|---|
| CNT dispersion liquid | Active material | Processed CNT | Dispersant | Additive | Binder resin | Type | Conductivity | Rate properties | Cycle properties |
| Type | Type | Type | Type | Type | Type | | | | |
| 7-1 | NMC | 7 | PVP | | PVDF | Positive electrode 46a | ◎ | ○ | ○ |
| 7-2 | LFP | 7 | PVP | | PTFE | Positive electrode 47a | ◎ | ○ | ○ |
| 8-1 | NMC | 8 | PVA | 2-aminoethanol | PVDF | Positive electrode 48a | ◎ | ◎ | ○ |
| 8-2 | NMC | 8 | PVP | 2-aminoethanol | PVDF | Positive electrode 49a | ◎ | ○ | ○ |
| 8-3 | NMC | 8 | ZETPOLE 2000L | - | PVDF | Positive electrode 50a | ◎ | ◎ | ◎ |
| 8-4 | NMC | 8 | ZETPOLE 2000L | NaOH | PVDF | Positive electrode 51a | ◎ | ◎ | ◎ |
| 8-5 | NMC | 8 | ZETPOLE 2010L | - | PVDF | Positive electrode 52a | ◎ | ◎ | ◎ |
| 8-6 | NMC | 8 | ZETPOLE 2010L | NaOH | PVDF | Positive electrode 53a | ◎ | ◎ | ◎ |
| 8-7 | NMC | 8 | Therban 3404 | - | PVDF | Positive electrode 54a | ◎ | ◎ | ◎ |
| 8-8 | NMC | 8 | Therban 3404 | NaOH | PVDF | Positive electrode 55a | ◎ | ◎ | ◎ |
| 8-9 | NMC | 8 | Therban 3406 | - | PVDF | Positive electrode 56a | ◎ | ◎ | ◎ |
| 8-10 | NMC | 8 | Therban 3406 | NaOH | PVDF | Positive electrode 57a | ◎ | ◎ | ◎ |
| 8-11 | NMC | 8 | Therban 4307 | - | PVDF | Positive electrode 58a | ◎ | ○ | ○ |

(continued)

| Positive electrode composite slurry | | | | | | Positive electrode | | | |
|---|---|---|---|---|---|---|---|---|---|
| CNT dispersion liquid | Active material | Processed CNT | Dispersant | Additive | Binder resin | Type | Conductivity | Rate properties | Cycle properties |
| Type | Type | Type | Type | Type | Type | | | | |
| 8-12 | NMC | 8 | Therban 4307 | NaOH | PVDF | Positive electrode 59a | ◎ | ○ | ○ |
| 8-13 | LFP | 8 | CMC | - | PTFE | Positive electrode 60a | ◎ | ◎ | ◎ |
| 8-14 | LFP | 8 | PAN | $Na_2CO_3$ | PTFE | Positive electrode 61a | ◎ | ◎ | ◎ |
| 8-15 | LFP | 8 | PAA | NaOH | PTFE | Positive electrode 62a | ◎ | ◎ | ◎ |
| 8-16 | LFP | 8 | PVP | 2-aminoethanol | PTFE | Positive electrode 63a | ◎ | ◎ | ○ |
| 9-1 | NMC | 9 | PVA | 2-aminoethanol | PVDF | Positive electrode 64a | ◎ | ◎ | ○ |
| 9-2 | NMC | 9 | PVP | 2-aminoethanol | PVDF | Positive electrode 65a | ◎ | ○ | ○ |
| 9-3 | NMC | 9 | ZETPOLE 2000L | - | PVDF | Positive electrode 66a | ◎ | ◎ | ◎ |
| 9-4 | NMC | 9 | ZETPOLE 2000L | NaOH | PVDF | Positive electrode 67a | ◎ | ◎ | ◎ |
| 9-5 | NMC | 9 | ZETPOLE 2010L | - | PVDF | Positive electrode 68a | ◎ | ◎ | ◎ |
| 9-6 | NMC | 9 | ZETPOLE 2010L | NaOH | PVDF | Positive electrode 69a | ◎ | ◎ | ◎ |
| 9-7 | NMC | 9 | Therban 3404 | - | PVDF | Positive electrode 70a | ◎ | ◎ | ◎ |
| 9-8 | NMC | 9 | Therban 3404 | NaOH | PVDF | Positive electrode 71a | ◎ | ◎ | ◎ |
| 9-9 | NMC | 9 | Therban 3406 | - | PVDF | Positive electrode 72a | ◎ | ◎ | ◎ |

(continued)

| Positive electrode composite slurry | | | | | | Positive electrode | | | |
|---|---|---|---|---|---|---|---|---|---|
| CNT dispersion liquid | Active material | Processed CNT | Dispersant | Additive | Binder resin | Type | Conductivity | Rate properties | Cycle properties |
| Type | Type | Type | Type | Type | Type | | | | |
| 9-10 | NMC | 9 | Therban 3406 | NaOH | PVDF | Positive electrode 73a | ◎ | ◎ | ◎ |
| 9-11 | NMC | 9 | Therban 4307 | - | PVDF | Positive electrode 74a | ◎ | ○ | ○ |
| 9-12 | NMC | 9 | Therban 4307 | NaOH | PVDF | Positive electrode 75a | ◎ | ○ | ○ |
| 9-13 | LFP | 9 | CMC | - | PTFE | Positive electrode 76a | ◎ | ◎ | ◎ |
| 9-14 | LFP | 9 | PAN | $Na_2CO_3$ | PTFE | Positive electrode 77a | ◎ | ◎ | ◎ |
| 9-15 | LFP | 9 | PAA | NaOH | PTFE | Positive electrode 78a | ◎ | ◎ | ◎ |
| 9-16 | LFP | 9 | PVP | 2-aminoethanol | PTFE | Positive electrode 79a | ◎ | ◎ | ○ |
| 10-1 | NMC | 10 | PVP | 2-aminoethanol | PVDF | Positive electrode 80a | ◎ | ○ | ○ |
| 10-2 | LFP | 10 | PVP | 2-aminoethanol | PTFE | Positive electrode 81a | ◎ | ◎ | ○ |
| 11-1 | NMC | 11 | PVP | 2-aminoethanol | PVDF | Positive electrode 82a | ◎ | ○ | ○ |
| 11-2 | LFP | 11 | PVP | 2-aminoethanol | PTFE | Positive electrode 83a | ◎ | ◎ | ○ |

[Table 3-3]

Table 3-3

| CNT dispersion liquid | Positive electrode composite slurry | | | | | Positive electrode | | | |
|---|---|---|---|---|---|---|---|---|---|
| | Active material | Processed CNT | Dispersant | Additive | Binder resin | | | | |
| Type | Type | Type | Type | Type | Type | Type | Conductivity | Rate properties | Cycle properties |
| Comparative Example 3-1 | NMC | Comparative Example 3 | PVP | - | PVDF | Positive electrode 84a | ◎ | ◎ | ◎ |
| Comparative Example 3-2 | LFP | Comparative Example 3 | PVP | 2-aminoethanol | PTFE | Positive electrode 85a | ◎ | ◎ | ◎ |
| 12-1 | NMC | 12 | PVA | - | PVDF | Positive electrode 86a | ◎ | ◎ | ○ |
| 12-2 | LFP | 12 | PVP | 2-aminoethanol | PTFE | Positive electrode 87a | ◎ | ◎ | ○ |
| 13-1 | NMC | 13 | PVA | 2-aminoethanol | PVDF | Positive electrode 88a | ◎ | ◎ | ○ |
| 13-2 | NMC | 13 | PVP | 2-aminoethanol | PVDF | Positive electrode 89a | ◎ | ○ | ○ |
| 13-3 | NMC | 13 | ZETPOLE 2000L | - | PVDF | Positive electrode 90a | ◎ | ◎ | ◎ |
| 13-4 | NMC | 13 | ZETPOLE 2000L | NaOH | PVDF | Positive electrode 91a | ◎ | ◎ | ◎ |
| 13-5 | NMC | 13 | ZETPOLE 2010L | - | PVDF | Positive electrode 92a | ◎ | ◎ | ○ |
| 13-6 | NMC | 13 | ZETPOLE 2010L | NaOH | PVDF | Positive electrode 93a | ◎ | ◎ | ◎ |
| 13-7 | NMC | 13 | Therban 3404 | - | PVDF | Positive electrode 94a | ◎ | ◎ | ◎ |
| 13-8 | NMC | 13 | Therban 3404 | NaOH | PVDF | Positive electrode 95a | ◎ | ◎ | ◎ |

| Positive electrode composite slurry | | | | | | Positive electrode | | | | |
|---|---|---|---|---|---|---|---|---|---|---|
| CNT dispersion liquid | Active material | Processed CNT | Dispersant | Additive | Binder resin | Type | Conductivity | Rate properties | Cycle properties | |
| Type | Type | Type | Type | Type | Type | | | | | |
| 13-9 | NMC | 13 | Therban 3406 | - | PVDF | Positive electrode 96a | ◎ | ◎ | ◎ | |
| 13-10 | NMC | 13 | Therban 3406 | NaOH | PVDF | Positive electrode 97a | ◎ | ◎ | ◎ | |
| 13-11 | NMC | 13 | Therban 4307 | - | PVDF | Positive electrode 98a | ○ | ○ | ○ | |
| 13-12 | NMC | 13 | Therban 4307 | NaOH | PVDF | Positive electrode 99a | ◎ | ◎ | ○ | |
| 13-13 | LFP | 13 | CMC | - | PTFE | Positive electrode 100a | ◎ | ◎ | ◎ | |
| 13-14 | LFP | 13 | PAN | $Na_2CO_3$ | PTFE | Positive electrode 101a | ◎ | ◎ | ◎ | |
| 13-15 | LFP | 13 | PAA | NaOH | PTFE | Positive electrode 102a | ◎ | ◎ | ◎ | |
| 13-16 | LFP | 13 | PVP | 2-aminoethanol | PTFE | Positive electrode 103a | ◎ | ◎ | ○ | |
| 14-1 | NMC | 14 | PVA | 2-aminoethanol | PVDF | Positive electrode 104a | ○ | ○ | ○ | |
| 14-2 | NMC | 14 | PVP | 2-aminoethanol | PVDF | Positive electrode 105a | ○ | ○ | ○ | |
| 14-3 | NMC | 14 | ZETPOLE 2000L | - | PVDF | Positive electrode 106a | ○ | ◎ | ○ | |
| 14-4 | NMC | 14 | ZETPOLE 2000L | NaOH | PVDF | Positive electrode 107a | ◎ | ◎ | ◎ | |
| 14-5 | NMC | 14 | ZETPOLE 2010L | - | PVDF | Positive electrode 108a | ○ | ◎ | ○ | |

EP 4 458 910 A1

66

| Positive electrode composite slurry | | | | | | Positive electrode | | | |
|---|---|---|---|---|---|---|---|---|---|
| CNT dispersion liquid | Active material | Processed CNT | Dispersant | Additive | Binder resin | Type | Conductivity | Rate properties | Cycle properties |
| Type | Type | Type | Type | Type | Type | | | | |
| 14-6 | NMC | 14 | ZETPOLE 2010L | NaOH | PVDF | Positive electrode 109a | ○ | ◎ | ◎ |
| 14-7 | NMC | 14 | Therban 3404 | - | PVDF | Positive electrode 110a | ○ | ◎ | ○ |
| 14-8 | NMC | 14 | Therban 3404 | NaOH | PVDF | Positive electrode 111a | ◎ | ◎ | ◎ |
| 14-9 | NMC | 14 | Therban 3406 | - | PVDF | Positive electrode 112a | ○ | ◎ | ○ |
| 14-10 | NMC | 14 | Therban 3406 | NaOH | PVDF | Positive electrode 113a | ◎ | ◎ | ◎ |
| 14-11 | NMC | 14 | Therban 4307 | - | PVDF | Positive electrode 114a | ○ | ○ | ○ |
| 14-12 | NMC | 14 | Therban 4307 | NaOH | PVDF | Positive electrode 115a | ○ | ○ | ○ |
| 14-13 | LFP | 14 | CMC | - | PTFE | Positive electrode 116a | ○ | ◎ | ◎ |
| 14-14 | LFP | 14 | PAN | $Na_2CO_3$ | PTFE | Positive electrode 117a | ○ | ○ | ○ |
| 14-15 | LFP | 14 | PAA | NaOH | PTFE | Positive electrode 118a | ◎ | ◎ | ◎ |
| 14-16 | LFP | 14 | PVP | 2-aminoethanol | PTFE | Positive electrode 119a | ○ | ○ | ○ |
| 15-1 | NMC | 15 | PVP | 2-aminoethanol | PVDF | Positive electrode 120a | ◎ | ◎ | ○ |
| 15-2 | LFP | 15 | PVP | 2-aminoethanol | PTFE | Positive electrode 121a | ◎ | ○ | ○ |

EP 4 458 910 A1

67

| Positive electrode composite slurry | | | | | | Positive electrode | | | | |
|---|---|---|---|---|---|---|---|---|---|---|
| CNT dispersion liquid | Active material | Processed CNT | Dispersant | Additive | Binder resin | Type | Conductivity | Rate properties | Cycle properties |
| Type | Type | Type | Type | Type | Type | | | | |
| 16-1 | NMC | 16 | PVP | 2-aminoethanol | PVDF | Positive electrode 122a | ◎ | ○ | ○ |
| 16-2 | LFP | 16 | PVP | 2-aminoethanol | PTFE | Positive electrode 123a | ○ | ○ | ○ |
| Comparative Example 4-1 | NMC | Comparative Example 4 | PVP | 2-aminoethanol | PVDF | Positive electrode 124a | × | × | × |
| Comparative Example 5-1 | NMC | Comparative Example 5 | PVP | 2-aminoethanol | PVDF | Positive electrode 125a | × | × | ○ |
| Comparative Example6-1 | NMC | Comparative Example6 | PVP | 2-aminoethanol | PVDF | Positive electrode 126a | ○ | ◎ | ◎ |
| Comparative Example 7-1 | NMC | Comparative Example 7 | PVP | 2-aminoethanol | PVDF | Positive electrode 127a | × | × | × |
| Comparative Example 8-1 | NMC | Comparative Example 8 | PVP | 2-aminoethanol | PVDF | Positive electrode 128a | × | ○ | × |

68

[Table 4]

[Table 4]

Table 4

| Negative electrode composite slurry | | | | | | Negative electrode | | | |
| --- | --- | --- | --- | --- | --- | --- | --- | --- | --- |
| CNT dispersion liquid | Active material | Processed CNT | Dispersant | Additive | Binder resin | Type | Conductivity | Rate properties | Cycle properties |
| Type | Type | Type | Type | Type | Type | | | | |
| Comparative Example 1-2 | Artificial graphite/silicon | Comparative Example 1 | PVP | 2-aminoethanol | CMC/SBR | Negative electrode 2a | ◎ | ◎ | ○ |
| 1-13 | Artificial graphite/silicon | 1 | CMC | - | CMC/SBR | Negative electrode 15a | ◎ | ◎ | ◎ |
| 1-14 | Artificial graphite/silicon | 1 | PAN | $Na_2CO_3$ | CMC/SBR | Negative electrode 16a | ◎ | ◎ | ◎ |
| 1-15 | Artificial graphite/silicon | 1 | PAA | NaOH | CMC/SBR | Negative electrode 17a | ◎ | ◎ | ◎ |
| 1-16 | Artificial graphite/silicon | 1 | PVP | 2-aminoethanol | CMC/SBR | Negative electrode 18a | ◎ | ◎ | ○ |
| 2-2 | Artificial graphite/silicon | 2 | PVP | 2-aminoethanol | CMC/SBR | Negative electrode 20a | ◎ | ◎ | ○ |
| 3-13 | Artificial graphite/silicon | 3 | CMC | - | CMC/SBR | Negative electrode 33a | ◎ | ◎ | ◎ |
| 3-14 | Artificial graphite/silicon | 3 | PAN | $Na_2CO_3$ | CMC/SBR | Negative electrode 34a | ◎ | ◎ | ◎ |
| 3-15 | Artificial graphite/silicon | 3 | PAA | NaOH | CMC/SBR | Negative electrode 35a | ◎ | ◎ | ◎ |
| 3-16 | Artificial graphite/silicon | 3 | PVP | 2-aminoethanol | CMC/SBR | Negative electrode 36a | ○ | ◎ | ○ |
| 4-2 | Artificial graphite/silicon | 4 | PVP | 2-aminoethanol | CMC/SBR | Negative electrode 38a | ○ | ○ | ○ |
| 5-2 | Artificial graphite/silicon | 5 | PVP | 2-aminoethanol | CMC/SBR | Negative electrode 40a | ◎ | ◎ | ○ |

| Negative electrode composite slurry | | | | | | Negative electrode | | | | |
|---|---|---|---|---|---|---|---|---|---|---|
| CNT dispersion liquid | Active material | Processed CNT | Dispersant | Additive | Binder resin | Type | Conductivity | Rate properties | Cycle properties | |
| Type | Type | Type | Type | Type | Type | | | | | |
| 6-2 | Artificial graphite/silicon | 6 | PVP | 2-aminoethanol | CMC/SBR | Negative electrode 42a | ◎ | ◎ | ○ | |
| Comparative Example 2-2 | Artificial graphite/silicon | Comparative Example 2 | PVP | 2-aminoethanol | CMC/SBR | Negative electrode 44a | ◎ | ◎ | ◎ | |
| 7-2 | Artificial graphite/silicon | 7 | PVP | 2-aminoethanol | CMC/SBR | Negative electrode 46a | ◎ | ◎ | ◎ | |
| 8-13 | Artificial graphite/silicon | 8 | CMC | - | CMC/SBR | Negative electrode 59a | ◎ | ◎ | ◎ | |
| 8-14 | Artificial graphite/silicon | 8 | PAN | $Na_2CO_3$ | CMC/SBR | Negative electrode 60a | ◎ | ◎ | ◎ | |
| 8-15 | Artificial graphite/silicon | 8 | PAA | NaOH | CMC/SBR | Negative electrode 61a | ◎ | ◎ | ◎ | |
| 8-16 | Artificial graphite/silicon | 8 | PVP | 2-aminoethanol | CMC/SBR | Negative electrode 62a | ◎ | ◎ | ○ | |
| 9-13 | Artificial graphite/silicon | 9 | CMC | - | CMC/SBR | Negative electrode 75a | ◎ | ◎ | ◎ | |
| 9-14 | Artificial graphite/silicon | 9 | PAN | $Na_2CO_3$ | CMC/SBR | Negative electrode 76a | ◎ | ◎ | ◎ | |
| 9-15 | Artificial graphite/silicon | 9 | PAA | NaOH | CMC/SBR | Negative electrode 77a | ◎ | ◎ | ◎ | |
| 9-16 | Artificial graphite/silicon | 9 | PVP | 2-aminoethanol | CMC/SBR | Negative electrode 78a | ○ | ○ | ○ | |
| 10-2 | Artificial graphite/silicon | 10 | PVP | 2-aminoethanol | CMC/SBR | Negative electrode 80a | ◎ | ◎ | ○ | |
| 11-2 | Artificial graphite/silicon | 11 | PVP | 2-aminoethanol | CMC/SBR | Negative electrode 82a | ◎ | ◎ | ○ | |

EP 4 458 910 A1

(continued)

| CNT dispersion liquid | Negative electrode composite slurry | | | | | Negative electrode | | | |
| Type | Active material Type | Processed CNT Type | Dispersant Type | Additive Type | Binder resin Type | Type | Conductivity | Rate properties | Cycle properties |
|---|---|---|---|---|---|---|---|---|---|
| Comparative Example 3-2 | Artificial graphite/silicon | Comparative Example 3 | PVP | 2-aminoethanol | CMC/SBR | Negative electrode 84a | ◎ | ◎ | ◎ |
| 12-2 | Artificial graphite/silicon | 12 | PVP | 2-aminoethanol | CMC/SBR | Negative electrode 86a | ◎ | ◎ | ○ |
| 13-13 | Artificial graphite/silicon | 13 | CMC | - | CMC/SBR | Negative electrode 99a | ◎ | ◎ | ◎ |
| 13-14 | Artificial graphite/silicon | 13 | PAN | $Na_2CO_3$ | CMC/SBR | Negative electrode 100a | ◎ | ◎ | ○ |
| 13-15 | Artificial graphite/silicon | 13 | PAA | NaOH | CMC/SBR | Negative electrode 101a | ◎ | ◎ | ◎ |
| 13-16 | Artificial graphite/silicon | 13 | PVP | 2-aminoethanol | CMC/SBR | Negative electrode 102a | ◎ | ◎ | ○ |
| 14-13 | Artificial graphite/silicon | 14 | CMC | - | CMC/SBR | Negative electrode 115a | ○ | ○ | ○ |
| 14-14 | Artificial graphite/silicon | 14 | PAN | $Na_2CO_3$ | CMC/SBR | Negative electrode 116a | ○ | ○ | ○ |
| 14-15 | Artificial graphite/silicon | 14 | PAA | NaOH | CMC/SBR | Negative electrode 117a | ◎ | ◎ | ○ |
| 14-16 | Artificial graphite/silicon | 14 | PVP | 2-aminoethanol | CMC/SBR | Negative electrode 118a | ○ | ○ | ○ |
| 15-2 | Artificial graphite/silicon | 15 | PVP | 2-aminoethanol | CMC/SBR | Negative electrode 120a | ◎ | ◎ | ○ |
| 16-2 | Artificial graphite/silicon | 16 | PVP | 2-aminoethanol | CMC/SBR | Negative electrode 122a | ◎ | ○ | ○ |

As shown in the respective tables, by using nonaqueous electrolyte secondary batteries obtained by using the CNT dispersion liquids of the examples, nonaqueous electrolyte secondary batteries with excellent rate and cycle properties can be obtained.

Although the invention has been described with reference to the above embodiments, the invention is not limited to the embodiments. Various changes can be made to the structure and details of the invention that can be understood by those skilled in the art without departing from the scope of the invention.

**Claims**

1. Carbon nanotubes, satisfying $3 \leq Z \leq 80$, where Z (nm) is a pore size at a peak top in a pore size distribution of the carbon nanotubes having a diameter of 2 or more nm and 200 nm or less as determined by a BJH method and satisfying (A) or (B) as follows:

   (A) in the pore size distribution, an integral value of a pore volume of carbon nanotubes having a diameter of 10 nm or more and 80 nm or less is 50% or more relative to an integral value of a pore volume of carbon nanotubes having a diameter of 2 nm or more and 200 nm or less, and the pore volume is 1.10 to 2.20 $cm^3$/g; and
   (B) in the pore size distribution, an integral value of a pore volume of carbon nanotubes having a diameter of 3 nm or more and 20 nm or less is 50% or more relative to the integral value of the pore volume of carbon nanotubes having a diameter of 2 nm or more and 200 nm or less, and the pore volume is 0.80 to 1.90 $cm^3$/g.

2. The carbon nanotubes as claimed in claim 1, wherein an averaged outer diameter of the carbon nanotubes is 5 to 20 nm.

3. The carbon nanotubes as claimed in claim 1 or 2, wherein a volume resistivity of the carbon nanotubes is $1.0 \times 10^{-2}$ to $3.0 \times 10^{-2}$ Ω•cm.

4. The carbon nanotubes as claimed in any one of claims 1 to 3, wherein, when a maximum solvent absorption capability defined in accordance with Formula 5 below is set as Y and a bulk density is set as X ($g/cm^3$), Formulae 1 to 4 below are satisfied, wherein

$$(\text{Formula 1}) \ Y \leq -110X + 32.35$$

$$(\text{Formula 2}) \ Y \geq 180X - 19.95$$

$$(\text{Formula 3}) \ Y \geq -200X + 27$$

$$(\text{Formula 4}) \ Y \leq 200X + 7$$

Maximum solvent absorption capability (Y) = (mass (W) of absorbed N-methyl-2-pyrrolidone) / (mass V) of carbon nanotube),     (Formula 5)

(wherein in Formula 5, V refers to a mass (g) of the carbon nanotubes, and W refers to a maximum mass (g) of the absorbed N-methyl-2-pyrrolidone into the carbon nanotubes when N-methyl-2-pyrrolidone is dropped into the carbon nanotubes of Vg under an environment of 25°C).

5. The carbon nanotubes as claimed in any one of claims 1 to 3, wherein (A) is satisfied and $40 \leq Z \leq 80$ is satisfied.

6. The carbon nanotubes as claimed in claim 5, wherein, when a maximum solvent absorption capability defined in accordance with Formula 5 below is set as Y and a bulk density is set as X ($g/cm^3$), Formulae 1-1 to 4-1 below are satisfied, wherein

$$(\text{Formula 1-1}) \quad Y \leq -200X+37$$

$$(\text{Formula 2-1}) \quad Y \geq 200X-17$$

$$(\text{Formula 3-1}) \quad Y \geq -200X+27$$

$$(\text{Formula 4-1}) \quad Y \leq 200X+7$$

Maximum solvent absorption capability (Y) = (mass (W) of absorbed N-methyl-2-pyrrolidone) / (mass V) of carbon nanotube), (Formula 5)

(wherein in Formula 5, V refers to a mass (g) of the carbon nanotubes, and W refers to a maximum mass (g) of the absorbed N-methyl-2-pyrrolidone into the carbon nanotubes when N-methyl-2-pyrrolidone is dropped into the carbon nanotubes of Vg under an environment of 25°C).

7. The carbon nanotubes as claimed in any one of claims 1 to 3, wherein (B) is satisfied and $3 \leq Z \leq 20$ is satisfied.

8. The carbon nanotubes as claimed in claim 7, wherein, when a maximum solvent absorption capability defined in accordance with Formula 5 below is set as Y and a bulk density is set as X $(g/cm^3)$, Formulae 1-2 to 4-2 below are satisfied, wherein

$$(\text{Formula 1-2}) \quad Y \leq -110X+32.35$$

$$(\text{Formula 2-2}) \quad Y \geq 180X-19.95$$

$$(\text{Formula 3-2}) \quad Y \geq -110X+23.55$$

$$(\text{Formula 4-2}) \quad Y \leq 180X+7.6$$

Maximum solvent absorption capability (Y) = (mass (W) of absorbed N-methyl-2-pyrrolidone) / (mass V) of carbon nanotube), (Formula 5)

(wherein in Formula 5, V refers to a mass (g) of the carbon nanotubes, and W refers to a maximum mass (g) of the absorbed N-methyl-2-pyrrolidone into the carbon nanotubes when N-methyl-2-pyrrolidone is dropped into the carbon nanotubes of Vg under an environment of 25°C).

9. A carbon nanotube dispersion liquid, comprising the carbon nanotubes as claimed in any one of claims 1 to 8 and an aqueous liquid medium.

10. The carbon nanotube dispersion liquid as claimed in claim 9, further comprising a dispersant, wherein a content of the dispersant is 10 to 150 parts by mass based on 100 parts by mass of the carbon nanotubes.

11. A carbon nanotube resin composition, comprising the carbon nanotube dispersion liquid as claimed in claim 9 or 10 and a binder resin.

12. A composite slurry, comprising the carbon nanotube dispersion liquid as claimed in claim 9 or 10, a binder resin, and an active material.

**13.** An electrode film, comprising a coating film of the composite slurry as claimed in claim 12.

**14.** A nonaqueous electrolyte secondary battery, comprising a positive electrode, a negative electrode, and an electrolyte, wherein at least one of the positive electrode and the negative electrode comprises the electrode film as claimed in claim 13.

**15.** A nonaqueous electrolyte secondary battery, comprising the carbon nanotubes as claimed in any one of claims 1 to 8.

**16.** A vehicle, comprising the nonaqueous electrolyte secondary battery as claimed in claim 14 or 15.

<div align="center">

**INTERNATIONAL SEARCH REPORT**

</div>

| International application No. |
|---|
| **PCT/JP2022/048423** |

| A. | CLASSIFICATION OF SUBJECT MATTER |
|---|---|

***C08L 101/00***(2006.01)i; ***H01B 1/22***(2006.01)i; ***C01B 32/158***(2017.01)i; ***C01B 32/174***(2017.01)i; ***C08K 3/04***(2006.01)i; ***H01M 4/13***(2010.01)i; ***H01M 4/139***(2010.01)i; ***H01M 4/62***(2006.01)i; ***H01M 4/96***(2006.01)i
FI: C01B32/158; C01B32/174; C08K3/04; C08L101/00; H01B1/22 A; H01M4/13; H01M4/139; H01M4/62 Z ZNM; H01M4/96 B

According to International Patent Classification (IPC) or to both national classification and IPC

| B. | FIELDS SEARCHED |
|---|---|

Minimum documentation searched (classification system followed by classification symbols)
C01B32/158; C01B32/174; C08K3/04; C08L101/00; H01B1/22; H01M4/13; H01M4/139; H01M4/62; H01M4/96

Documentation searched other than minimum documentation to the extent that such documents are included in the fields searched
Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)
JSTPlus/JST7580/JSTChina (JDreamIII)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | US 2019/0263663 A1 (LG CHEM, LTD.) 29 August 2019 (2019-08-29) | 1, 3-6, 9, 15 |
| | paragraphs [0003], [0035], [0055], [0063]-[0066], examples 3-14, fig. 1-2, tables 3-5, etc. | |
| Y | | 2, 10-14, 16 |
| A | | 7-8 |
| Y | JP 2018-533175 A (LG CHEM, LTD.) 08 November 2018 (2018-11-08) | 2, 10-14, 16 |
| | claims, paragraphs [0035], [0091], [0111]-[0135] | |
| X | WO 2021/172141 A1 (ZEON CORPORATION) 02 September 2021 (2021-09-02) | 1-3, 5 |
| | claims, paragraph [0037], example 2, fig. 1, table 1 | |
| A | | 4, 6-16 |
| P, X | WO 2022/114235 A1 (ZEON CORPORATION) 02 June 2022 (2022-06-02) | 1, 7 |
| | claims, comparative example 1, fig. 3, table 1 | |
| P, A | | 2-6, 8-16 |

| ✓ | Further documents are listed in the continuation of Box C. | ✓ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **02 March 2023** | **20 March 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**

| International application No. |
| --- |
| **PCT/JP2022/048423** |

| C. | DOCUMENTS CONSIDERED TO BE RELEVANT | |
| --- | --- | --- |
| Category* | Citation of document, with indication, where appropriate, of the relevant passages | Relevant to claim No. |
| A | WO 2012/060454 A1 (NATIONAL INSTITUTE OF ADVANCED INDUSTRIAL SCIENCE AND TECHNOLOGY) 10 May 2012 (2012-05-10)<br>entire text | 1-16 |

Form PCT/ISA/210 (second sheet) (January 2015)

INTERNATIONAL SEARCH REPORT
Information on patent family members

International application No.

**PCT/JP2022/048423**

| Patent document cited in search report | | | Publication date (day/month/year) | Patent family member(s) | | | Publication date (day/month/year) |
|---|---|---|---|---|---|---|---|
| US | 2019/0263663 | A1 | 29 August 2019 | WO | 2018/128461 | A1 | |
| | | | | EP | 3466875 | A1 | |
| | | | | KR | 10-2018-0081006 | A | |
| | | | | CN | 109311672 | A | |
| JP | 2018-533175 | A | 08 November 2018 | US | 2019/0044150 | A1 | |
| | | | | claims, paragraphs [0040], [0092], [0112]-[0137] | | | |
| | | | | WO | 2017/164703 | A1 | |
| | | | | EP | 3333946 | A1 | |
| | | | | KR | 10-2017-0113250 | A | |
| | | | | CN | 108140841 | A | |
| WO | 2021/172141 | A1 | 02 September 2021 | CN | 115052833 | A | |
| | | | | KR | 10-2022-0148812 | A | |
| WO | 2022/114235 | A1 | 02 June 2022 | (Family: none) | | | |
| WO | 2012/060454 | A1 | 10 May 2012 | US | 2013/0316160 | A1 | |
| | | | | entire text | | | |
| | | | | EP | 2636642 | A1 | |
| | | | | CN | 103201214 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H04155776 B
- JP H04237971 B
- JP 2004178922 A
- JP 2011070908 A
- JP 2012221672 A
- JP 2020011872 A
- KR 102125933
- JP 2019151525 A
- JP 2020029372 A
- JP 2021214069 A